# EUROPEAN PATENT SPECIFICATION

(11) **EP 4 153 700 B1**
(45) Date of publication and mention of the grant of the patent: **26.02.2025**
(21) Application number: 21725526.4
(22) Date of filing: 17.05.2021
(51) Int. Cl.: C09K 19/60, C09K 19/58, C09K 19/30, C09K 19/12, C09K 19/18

(54) **LIQUID-CRYSTALLINE MEDIUM**
FLÜSSIGKRISTALLINES MEDIUM
MILIEU CRISTALLIN LIQUIDE

(30) Priority: 18.05.2020 EP 20175162
(43) Date of publication of application: 29.03.2023
(73) Proprietor: Merck Patent GmbH, 64293 Darmstadt (DE)
(72) Inventor: LEE, Hoo-Yong, PYEONGTAEK 459-822 (KR); YOON, Hyun-Jin, PYEONGTAEK 459-822 (KR); JUNGE, Michael, 64293 DARMSTADT (DE)
(74) Representative: Merck Patent Association
(86) International application number: PCT/EP2021/062911
(87) International publication number: WO 2021/233797

(56) References cited:
- WO-A1-2020/152206
- WO-A2-2005/080369
- US-A1- 2014 226 096

## Description

The invention relates to a liquid-crystalline medium having a negative dielectric anisotropy and comprising an ionic dopant as specified herein, to a guest-host liquid-crystalline medium derived therefrom and to the use of said media in devices such as light shutters, switchable windows and switchable mirrors.

Devices for controlling or modulating the transmission of light are commonly used in display applications and they may also be used in various mobile devices such as eyewear, spectacles, goggles and visors and may be applied in the context of augmented and virtual reality environments. Optical intensity modulators such as light valves or light shutters can be based on liquid crystals (LCs). In principle, such light valves or light shutters may rely on the absorption of light or the scattering of light.

In some devices the transmission of light can be reversibly changed, typically through electrical switching, wherein the intensity of incident light can be attenuated, dimmed or tinted, while however exhibiting little or no scattering or haze in the different states of operation. Such devices may thus be operated in and switched between a bright state and a dark state, i.e. a state of relatively higher light transmission and a state of relatively lower light transmission, wherein both states are substantially non-hazy.

Several modes or configurations may be employed to provide such reversible transmission change. For twisted nematic (TN), super-twisted nematic (STN) and vertical alignment (VA) liquid crystal cells polarizers are used to control the light transmission. It is also possible to use guest-host liquid crystal cells which are based on a liquid crystal host which is doped with dichroic dye molecules. These guest-host systems can be used without any polarizers to alter the light transmission. However, in some embodiments and applications guest-host liquid crystal cells are used in combination with at least one polarizer.

Devices based on the guest-host effect were first described by G. H. Heilmeier and L. A. Zanoni in Appl. Phys. Lett., 1968, 13, pages 91-92 and have since then found widespread use, primarily in LC display elements. In a guest-host system, the liquid-crystalline medium comprises one or more dichroic dyes in addition to the liquid crystal host material. Dichroic dyes typically have the ability to align themselves with nematic liquid crystal molecules when mixed together. Owing to the directional dependence of the absorption of the dye molecules, the transparency of the liquid crystal (LC) to light can be modulated when the dyes change their alignment together with the liquid crystal host molecules. This means that the maximum contrast between the bright state and the dark state of a guest-host LC cell depends on the alignment of the dichroic dyes. When an electric field is applied to such a guest-host LC mixture, the nematic liquid crystal host molecules reorient and align either with or perpendicular to the electric field in order to minimize the torque they experience from the electric field. The dichroic dye (guest) molecules may not be directly affected by the external electric field but can still be aligned with the liquid crystal host molecules. It is their interaction with the liquid crystal molecules that forces them to reorient.

Initial bright state liquid crystal cells which switch from a bright state to a dark state and which use liquid-crystalline media having a negative dielectric anisotropy may be desirable because of their transparent bright state when no voltage is applied. This mode is particularly useful for devices such as light shutters and windows which are usually transparent and which are only dimmed on demand for a comparatively short period of time. This configuration is therefore more energy-efficient compared to a mode that consumes energy when a transparent state has to be actively switched on. It also provides by default a transparent fail-safe state in case of a power outage.

Using liquid-crystalline media with negative dielectric anisotropy enables the provision of a liquid crystal cell where
(i) in the absence of an electric field across the cell substrates, the long axes of the liquid crystal and dye molecules line up relative to the substrates in a way which causes the dye molecules to not absorb or to only minimally absorb the light which is directed through the guest-host liquid crystal mixture normal to the substrates, whether the light passing therethrough is polarized or not, whereby the liquid crystal cell remains in a relatively bright state in the absence of the electric field, and
(ii) in the presence of the electric field across the cell substrates, the long axes of the liquid crystal molecules and of the dye molecules line up relative to the substrates in a way which causes the dye molecules to absorb at least some light that is directed through the guest-host liquid crystal mixture normal to the substrates, in particular light which is polarized along the long axes of the dye molecules, whereby the liquid crystal cell darkens in the presence of the electric field.

A guest-host vertical alignment LC display is described, for example, in JP 2001100253.

Besides the use in LC displays, devices of this type may be provided as light shutters or switching elements for regulating the passage of light or energy, as described for example in WO 2009/141295 and WO 2010/118422. Such switching elements may be applied as or respectively in switchable windows which can be darkened on demand by means of an electric field. Switchable mirrors, e.g. rear view mirrors for automotive applications, using guest-host liquid crystals are described in DE 3340670.

LC-based light modulators using light scattering include so-called polymer dispersed liquid crystal (PDLC) or encapsulated or nematic curvilinear aligned phase liquid crystal (NCAP), polymer network liquid crystal (PNLC), cholesteric liquid crystal (CLC), polymer stabilized cholesteric texture liquid crystal (PSCT) and dynamic scattering liquid crystal devices. These scattering-type devices can be switched between a transparent state, i.e. an optically clear or non-hazy state, and a light scattering state, i.e. a translucent or hazy state.

When such a scattering-type device is switched from a non-scattering state, i.e. an optically clear state, to a scattering state, the transmission of light is changed such that a translucent appearance is produced, which may also be perceived as cloudy, turbid, diffuse or hazy. A device based on the scattering mode can in particular be used to temporarily provide privacy or the cloaking of features or information when desired by switching, typically electrically switching, the device from the optically clear state into the scattering state.

G. H. Heilmeier et al. in Appl. Phys. Lett., 1968, 13, pages 46-47 describe the dynamic scattering mode, where based on the disruptive effects of ion transport in the presence of an electric field the initially transparent nematic liquid crystal scatters light.

It is also possible to combine in a device light modulation by absorption and by scattering. This way an opaque state may be obtained which in addition to giving haze also exhibits a reduced overall light intensity. In a particular implementation dichroic dyes may be used for the attenuation of light, and in some instances these dyes can furthermore provide colouring. In another implementation in the opaque state such a device may block a background image and provide black colour. Such light shutters may therefore have potential applications in see-through displays and smart windows.

For example, US 2014/0226096 describes the combination of changing the transmission as achieved by a guest-host cell with the ability to switch to an opaque state, in particular as obtained in the dynamic scattering mode. In particular, a device is described in which a dichroic dye-doped liquid-crystalline mixture which further contains small amounts of salt such as cetyl trimethyl ammonium bromide, Conducting Salt 235 or dodecylethyldimethyl-ammonium-4-hexyloxybenzoate is used.

There is a need in the art for further light modulators, in particular light valves such as light shutters, with improved optical and electro-optical performance. There is also a need in the art for suitable liquid-crystalline media which can be used in such switchable devices.

An object of the present invention is therefore to provide switchable devices, in particular light valves and window elements, having favourable reliability and stability, in particular with respect to electrochemical degradation and to degradation by light such as UV light, and an improved and long-term optical and electro-optical performance, including a switching state with efficient and sufficiently uniform haze and optionally additional dimming together with a favourably low energy consumption. It is a particular object of the present invention to provide light valves which have a favourable performance and which are particularly suitable for use in mobile and portable devices as well as in the context of augmented reality or respectively virtual reality. It is another object to provide an efficient and facile process for preparing such devices.

It is a further object of the present invention to provide improved liquid-crystalline media with advantageous chemical, physical and electro-optical properties and which in particular exhibit good reliability and stability, in particular light stability and especially UV light stability as well as electrochemical stability, and a broad liquid-crystalline phase with a suitably high clearing point and which are particularly useful in switching elements and window elements, especially switchable elements having a scattering mode which may optionally provide additional dimming. It is furthermore desired that the liquid-crystalline media have sufficiently high optical anisotropies together with a favourably high voltage holding ratio (VHR), good low-temperature stability and suitable stability for storage. Further objects of the present invention are immediately evident to the person skilled in the art from the following detailed description.

The objects are solved by the subject-matter defined in the independent claims, while preferred embodiments are set forth in the respective dependent claims and are further described below.

The present invention in particular provides the following items including main aspects, preferred embodiments and particular features, which respectively alone and in combination contribute to solving the above object and eventually provide additional advantages.

A first aspect of the present invention provides a liquid-crystalline medium having a negative dielectric anisotropy and a clearing point of 90°C or more, comprising one or more ionic dopants of formula I

A⁺B⁻

wherein
A⁺ denotes quaternary ammonium, and
B⁻ denotes an anion selected from tetrafluoroborate and hexafluorophosphate,
   and U
wherein the medium further comprises one or more dichroic dyes and one or more compounds selected from the group of the compounds of formulae IIA, IIB and IIC, as in claim 1 and defined below.

According to the present invention it is preferred that the liquid-crystalline medium comprises two or more dichroic dyes, preferably three or more dichroic dyes In the present invention it was recognized that it is desirable to provide a liquid-crystalline medium which can be particularly useful in electro-optical devices based on the dynamic scattering mode and which in this respect can provide particular benefits in terms of an improved optical and electro-optical performance.

It has surprisingly been found that by providing the liquid-crystalline media according to the invention significant improvements can be obtained regarding favourable reliability and stability, in particular with respect to electrochemical degradation and to degradation by light such as UV light, and an improved and long-term optical and electro-optical performance. In particular, the provision of the specific ionic dopant(s) as presently specified in combination with the liquid-crystalline host medium having a negative dielectric anisotropy and a high clearing point as defined can give a favourable and effective switching medium, even at comparatively low concentrations of the ionic dopant and a comparatively low magnitude of the dielectric anisotropy.

It is preferable that the liquid-crystalline media have a comparatively large optical anisotropy. Even under these conditions the medium can exhibit a reproducible and advantageous long-term performance.

It is furthermore preferred that the medium comprises one or more dichroic dyes. In addition to scattering, the additional provision of overall intensity reduction or dimming is thus possible based on the guest-host effect. In this respect, the liquid-crystalline medium can favourably give sufficient solubility of the one or more dichroic dyes as well as the one or more ionic dopants. In addition, the liquid-crystalline medium including the ionic dopant and optionally the one or more dichroic dyes can favourably exhibit electrochemical stability inside the device under applied voltage, especially under additional heat or light stress, in particular under UV load.

In this respect, it was recognized that in particular the ionic dopant should have sufficient solubility in the liquid crystal host in combination with a high electrochemical stability. The ionic dopant should be soluble in amount which is sufficient to show the desired effect. In principle, this may however cause problems because salts due to their highly polar nature usually have a low solubility in highly lipophilic liquid-crystal materials and because the addition of salt can cause reliability problems in the liquid crystal, especially in a dye-doped liquid crystal, as it might trigger decomposition processes especially under heat or light stress. Furthermore, upon cooling crystallisation of the salt might occur.

It has surprisingly been found that the ionic dopant as specified can show the desired solubility, stability and performance in the liquid-crystalline host medium. In particular, the ionic dopant as specified can unexpectedly and favourably contribute to producing a sufficiently strong and uniform haze in the scattering state even at low concentrations and at low operating voltages.

Therefore, a further aspect of the invention relates to the use of the one or more ionic dopants of formula I as described herein in a liquid-crystalline medium.

Another aspect of the invention relates to a switching element which is operable in and electrically switchable between an optically clear state and a scattering state, comprising a switching layer which contains the liquid-crystalline medium according to the invention, wherein the switching layer is interposed between two opposing transparent substrates which are each provided with an electrode.

A switching element and in particular a light valve herein preferably means an element for the modulation of light which is configured as a cell formed of two walls, in particular two transparent substrates, which are spaced apart and which are provided with electrodes, and wherein the cell contains a light modulation material.

Preferably, the liquid-crystalline medium as described herein is arranged and used in a switching layer. The switching layer thus comprises, preferably consists of, the medium. The switching layer is arranged between two substrates such as to give a switching element which is electrically switchable and operable in an optically transparent state and a scattering state. Preferably, electrodes are arranged as conductive layers on or respectively above the inner surface of each substrate.

According to the invention advantageous switching elements are provided which can be used in switchable windows for automotive applications, e.g. cars and commercial vehicles, and other transport applications, such as in trains, airplanes, ships and boats, and for architectural applications, for example in a window of an external facade, but also in the inside of rooms, for example in dividing walls between rooms and in elements for separating individual compartments of rooms or spaces. The switching elements are particularly suitable for use in mobile and portable devices as well as in the context of augmented reality or respectively virtual reality, e.g. as light shutters in see-through displays.

Based on the dynamic scattering mode, the switching elements according to the invention can be switched from a clear state to a scattering state which can produce a visual barrier between different spaces or different parts of a room. The switching elements are thus particularly useful and efficient in providing a privacy mode when desired, i.e. they offer switchability between a state with viewing contact and a private state giving a visual barrier. The devices can be conveniently switched between the states by applying an electrical voltage. Furthermore, the switching can be fast, in particular in the order of a few seconds and even down to a second or even less.

It has been found that based on the liquid-crystalline medium as provided according to the invention switchable devices, in particular light valves and window elements, can be provided which exhibit favourable reliability and stability, in particular with respect to electrochemical degradation, to degradation by light such as UV light and to stability against high or low temperatures, and an improved and long-term optical and electro-optical performance, including a switching state with efficient and sufficiently uniform haze together with a favourably low energy consumption. In a preferred embodiment one or more dichroic dyes are included in the medium, in which case additional dimming based on the guest-host effect may be achieved.

The switching elements according to the invention favourably exhibit an advantageous low haze clear state and an advantageous hazy state with sufficiently strong and uniform scattering. In particular, the switching elements exhibit advantageously reduced residual haze or even no discernible residual haze in the optically clear state, which is particularly desirable when the elements form a part of windows.

The switching element and in particular the window element according to the invention is useful for regulating or modulating the passage of light, in particular the passage of sunlight but also of light from artificial light sources like lamps and light fixtures.

It has surprisingly been found that the ionic dopant as provided according to the invention can be useful and effective even in comparatively small concentrations. Moreover, even for a liquid-crystalline medium having a comparatively low magnitude of the dielectric anisotropy, including the ionic dopant, in particular in a low amount, can surprisingly give strong scattering already at low operating voltages. These beneficial characteristics can in turn lead to reproducible and stable operation with little or even no hysteresis, increased reliability with reduced heating and increased lifetime as well as energy savings.

The favourable chemical, physical and electro-optical properties of the liquid-crystalline medium as provided according to the invention can thus lead to significant benefits in the device performance and characteristics.

Another aspect of the present invention therefore relates to the use of the liquid-crystalline medium according to the invention or the switching element according to the invention in an electro-optical device, preferably in a light valve, a light shutter, a window, an automotive mirror, a sun roof, an augmented or virtual reality device, a mobile device or a portable device.

Without limiting the present invention thereby, in the following the invention is illustrated by the detailed description of the aspects, embodiments and particular features, and particular embodiments are described in more detail.

Herein, halogen denotes F, Cl, Br or I, preferably F or Cl, and more preferably F.

Herein, an alkyl radical and/or an alkoxy radical is taken to mean straight-chain or branched alkyl. It is preferably straight-chain, has 2, 3, 4, 5, 6 or 7 C atoms and accordingly preferably denotes ethyl, propyl, butyl, pentyl, hexyl, heptyl, ethoxy, propoxy, butoxy, pentoxy, hexyloxy or heptyloxy, furthermore methyl, octyl, nonyl, decyl, undecyl, dodecyl, tridecyl, tetradecyl, pentadecyl, methoxy, octyloxy, nonyloxy, decyloxy, undecyloxy, dodecyloxy, tridecyloxy or tetradecyloxy.

Herein, oxaalkyl preferably denotes straight-chain 2-oxapropyl (= methoxymethyl), 2- (= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, 2-, 3-, 4-, 5-, 6-, 7-, 8- or 9-oxadecyl.

Herein, alkenyl, i.e. an alkyl radical in which one CH₂ group has been replaced by -CH=CH- , may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4- or -5-enyl, hept-1-, -2-, -3-, -4-, -5- or -6-enyl, oct-1-, -2-, -3-, -4-, -5-, -6- or -7-enyl, non-1-, -2-, -3-, -4-, -5-, -6-, -7- or -8-enyl, dec-1-, -2-, -3-, -4-, -5-, -6-, -7-, -8- or -9-enyl.

Herein, an alkyl or alkenyl radical which is at least monosubstituted by halogen, is preferably straight-chain, and halogen is preferably F or Cl. In the case of polysubstitution, halogen is preferably F. The resultant radicals also include perfluorinated radicals. In the case of monosubstitution, the fluorine or chlorine substituent may be in any desired position, but is preferably in the ω-position.

Herein, a mono- or polyfluorinated alkyl or alkoxy radical having 1, 2 or 3 C atoms or a mono- or polyfluorinated alkenyl radical having 2 or 3 C atoms is particularly preferably F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃, OCH=CF₂ or CH=CF₂, very particularly preferably F or OCF₃, furthermore CF₃, OCF=CF₂, OCHF₂ or OCH=CF₂.

Herein, 1,4-cyclohexylene rings and 1,4-phenylene rings are depicted as follows:

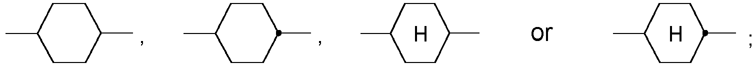

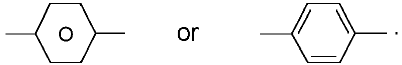

The cyclohexylene rings are trans-1,4-cyclohexylene rings.

Liquid-crystal media, and in particular so-called liquid-crystal hosts, with negative dielectric anisotropy are widely used in displays for example of the vertical alignment (VA) mode (Song, J. (2014). Vertical alignment Liquid Crystal mode. In Handbook of Liquid Crystals (eds J. W. Goodby, C. Tschierske, P. Raynes, H. Gleeson, T. Kato and P. J. Collings). doi:10.1002/9783527671403.hlc126). Suitable media are well described in the literature such as for example in US 20030071244 A1 or US 20100134751 A1.

According to a preferred embodiment the liquid-crystalline medium comprises two or more dichroic dyes, and more preferably three or more dichroic dyes.

Herein, a dichroic dye is taken to mean a compound having an elongated molecular structure which is dissolved in a host liquid crystal with the purpose of absorbing light, where the dye molecule is aligned with the liquid crystal and can be oriented with the liquid crystal molecules upon application of an electric field. Preferably, the dichroic dyes used herein have an absorption maximum in the visible wavelength range. Dichroic dyes are known to the skilled person and are well described in the literature, e.g. in Liquid Crystals: Applications and Uses, Volumes 1-3, edited by Birenda Bahadur, World Scientific, 1992. Chapter 11: Dichroic Liquid Crystal Displays.

The absorption maximum of the dichroic dye or dyes optionally used in the liquid crystalline media is not specifically limited, but it is preferred to have an absorption maximum in the yellow region (Y), magenta region (M), or cyan region (C). The dichroic dye preferably used in the liquid crystal medium of the present invention may be a single compound or a combination of a plurality of dyes. When several dyes are mixed it is preferred to use a mixture of the dichroic dyes having absorption maxima in the Y, M, and C regions, respectively. Dichroic dyes are known to the person skilled in the art and are reviewed in for example Cowling, Stephen J., Liquid Crystal Dyes, in: Handbook of Liquid Crystals, Wiley-VCH Verlag GmbH & Co. KGaA (2014). Methods of displaying a full colour by mixing a yellow dye, a magenta dye and a cyan dye is specifically described in "Colour Chemistry" (by Sumio Tokita, Maruzen Company, Limited, 1982). The yellow region is the range of 430 to 490 nm, the magenta region is the range of 500 to 580 nm, and the cyan region is the range of 600 to 700 nm.

The chromophore used in the dichroic dye is not particularly limited, but it is preferred to use azo dyes, azulene dyes, anthraquinone dyes, benzoquinone dyes, napthoquinone dyes, benzothiazole dyes, benzothiadiazole dyes, thiadiazoloquinoxaline dyes, dithiobenzoquinone, perylene dyes, merocyanine dyes, azomethine dyes, phthaloperylene dyes, indigo dyes, azulene dyes, dioxazine dyes, tetrazine dyes, polythiophene dyes, naphthimidazo-4,9-dione dyes and phenoxazine dyes.

The liquid-crystalline medium preferably comprises one, two, three, four, five, six, seven, eight, nine or ten different dichroic dyes, particularly preferably two or three dichroic dyes.

Preferred dyes according to the present invention are azo dyes, perylene dyes, anthraquinone dyes, benzothiazole dyes and benzothiadiazole dyes, particularly preferred azo dyes.

The azo dyes may contain any number of azo groups such as monoazo dyes, bisazo dyes, trisazo dyes, tetrakisazo dyes, and pentakisazo dyes, and preferably monoazo dyes, bisazo dyes, and trisazo dyes.

Cyclic structures contained in the azo dyes preferably are aryl groups and/or heteroaryl groups.

Preferred aryl groups are derived, for example, from the parent structures benzene, biphenyl, terphenyl, naphthalene, anthracene, phenanthrene, pyrene, dihydropyrene, chrysene, perylene, fluorene, indene, etc.

Preferred heteroaryl groups are, for example, 5-membered rings, such as pyrrole, pyrazole, imidazole, 1,2,3-triazole, 1,2,4-triazole, furan, thiophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole,benzimidazole, benzotriazole, purine, naphthimidazole, phenanthrimidazole, pyridimidazole, pyrazinimidazole, quinoxalinimidazole, benzoxazole, naphthoxazole, anthroxazole, phenanthroxazole, isoxazole, benzothiazole, benzofuran, isobenzofuran, dibenzofuran, quinoline, isoquinoline, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]thiophene, dithienothiophene, dihydrothieno [3,4-b]-1,4-dioxin, isobenzothiophene, dibenzothiophene, benzothiadiazothiophene, or combinations of these groups.

The aryl and heteroaryl groups may also be substituted by alkyl, cycloalkyl, alkoxy, thioalkyl, alkylamino, dialkylamino, fluorine, fluoroalkyl or further aryl or heteroaryl groups.

In a particularly preferred embodiment the liquid-crystalline medium comprises one or more dichroic dyes selected from the group of compounds of the formulae Dye-1, Dye-2 and Dye-3:

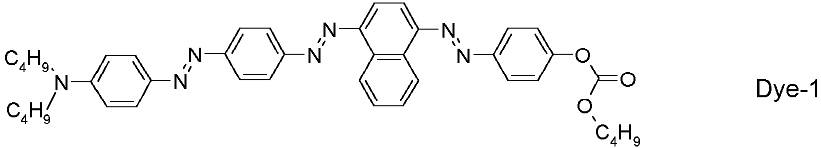

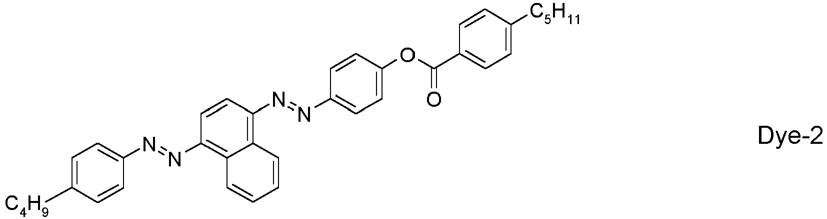

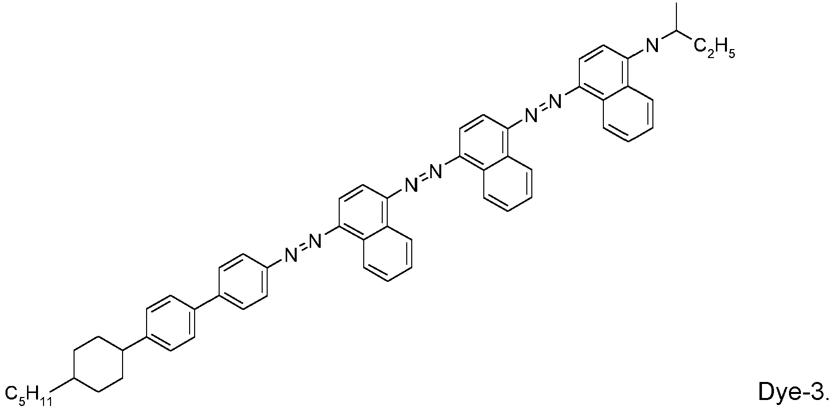

In addition or alternatively, other types of dyes known to have an equivalent effect to the above-described dyes may also preferably be used.

Each of the one or more dichroic dyes is preferably present in the liquid-crystalline medium in a proportion of 0.005% by weight to 12.5% by weight, more preferably 0.01% by weight to 10% by weight, even more preferably 0.025% by weight to 7.5% by weight, yet even more preferably 0.05% by weight to 5% by weight, still even more preferably 0.1% by weight to 2.5% by weight and particularly preferably 0.25% by weight to 1% by weight, based on the overall weight of the entire medium.

Preferably, the one or more dichroic dyes are present in the liquid-crystalline medium overall in a total concentration which is in the range of 0.01% by weight to 30% by weight, more preferably 0.025% by weight to 25% by weight, even more preferably 0.05% by weight to 15% by weight, still even more preferably 0.1% by weight to 10% by weight and particularly preferably 0.5% by weight to 5% by weight.

The concentration of the dye(s) is preferably chosen such that the proper performance of the obtained modulation material is ensured, in particular in terms of the desired colour and/or dimming effects.

In an embodiment the absorption spectra of the dichroic dyes optionally contained in the medium or respectively the switchable layer preferably complement one another in such a way that the impression of a black colour arises for the eye. Preferably two or more, more preferably three or more dichroic dyes are used in the liquid-crystalline medium to preferably cover a large part of the visible spectrum. The precise way in which a mixture of dyes which appears black or grey to the eye can be prepared is known in the art and is described, for example, in M. Richter, Einführung in die Farbmetrik [Introduction to Colorimetry], 2nd Edition, 1981, ISBN 3 11-008209-8, Walter de Gruyter & Co.

In another embodiment the setting of a different colour is performed, e.g. red, green or blue.

The setting of the colour location of a mixture of dyes is described in the area of colorimetry. To this end, the spectra of the individual dyes are calculated taking into account the Lambert-Beer law to give an overall spectrum and converted into the corresponding colour locations and luminance values under the associated illumination, for example illuminant D65 for daylight, in accordance with the rules of colorimetry. The position of the white point is fixed by the respective illuminant, for example D65, and is quoted in tables, for example in the reference above. Different colour locations can be set by changing the proportions of the various dyes.

According to the invention the liquid-crystalline medium comprises one or more ionic dopants of formula I as defined herein. The ionic dopant is provided as the additive to induce or generate the desired dynamic scattering effect. In particular, the ionic dopant is an ionic compound or conducting salt which in the medium is sufficiently soluble and dissolves and dissociates into cationic and anionic components and has sufficient ion mobility or ion conductivity.

It has surprisingly been found that the ionic dopant as used according to the invention in addition to a favourable solubility also exhibits high electrochemical stability. Moreover, the ionic dopant can be effective, in particular to effect dynamic scattering in the presence of an applied electric field, even in relatively small concentrations and at comparatively low operating voltages. The ionic dopant can give sufficient ion mobility and fast response times for the switching, wherein the medium may favourably have minimal or no electrochemical degradation and/or unwanted heating.

In a preferred embodiment the liquid-crystalline medium contains no further salts other than the ionic dopant(s) of present formula I. This means that preferably, apart from potential trace amounts of inadvertent ionic impurities, only the ionic compounds of formula I are present in the medium and no other ionic compounds are added.

In a preferred embodiment the one or more ionic dopants of formula I respectively have a melting point above 100°C, preferably above 125°C and in particular above 150°C.

The ionic dopant of formula I advantageously is effective already in low concentrations. The ionic dopant is favourably used in amount in the medium to induce dynamic scattering, preferably significant dynamic scattering, while also still allowing the liquid crystal to maintain the desired orientation in the absence of an electric field. This can lead to the desired haze in the presence of an electric field and to only minimal or even no discernible haze in the absence of an electric field.

In the optically clear state according to the invention the switching element preferably has a haze, determined according to ASTM D 1003, of less than 15%, more preferably less than 10%, even more preferably less than 5%, still more preferably less than 3.5% and in particular less than 2.5%.

In the scattering state according to the invention the switching element preferably has a haze, determined according to ASTM D 1003, of more than 50%, more preferably more than 75%, even more preferably more than 85%. It is particularly preferred that in the scattering state the switching element according to the invention has a haze, determined according to ASTM D 1003, of 95% or more.

For the measurement of haze hazemeters made by BYK-Gardner may be used. It is also possible to use spectrophotometers, in particular a spectrophotometer and an Ulbricht's sphere.

Preferably, the total concentration of the one or more ionic dopants of formula I, in particular of the preferred ionic dopants as specified herein, in the liquid-crystalline medium is 0.10% by weight or less, more preferably 0.05% by weight or less, even more preferably 0.02% by weight or less and in particular 0.01% by weight or less. In a preferred embodiment the total concentration of the one or more ionic dopants of formula I in the liquid-crystalline medium is in the range of from 0.001% by weight to 0.10% by weight, preferably from 0.005% by weight to 0.05% by weight and particularly preferably from 0.007% by weight to 0.025% by weight.

Preferably, precisely one ionic dopant of formula I is comprised in the liquid-crystalline medium. In this case the same preferred concentrations for ionic dopant applies.

The ionic dopant as used in the invention is a salt which comprises an organic cation A⁺ and an anion B⁻ which is selected from tetrafluoroborate and hexafluorophosphate.

Preferably, in formula I the anion B⁻ is tetrafluoroborate.

Organic cation described herein preferably denotes a molecular cation that contain at least one carbon to hydrogen bond.

The one or more ionic dopants of formula I comprise a cation A⁺.

According to the invention, the cation A⁺ is quaternary ammonium.

Herein quaternary ammonium in particular denotes ammonium cations having four organic groups attached to the nitrogen atom and lacking a hydrogen atom bonded to the nitrogen atom.

Preferably A⁺ is NR₄⁺, wherein R identically or differently denotes optionally substituted aryl or heteroaryl or optionally substitutes alkyl or alkenyl, in particular optionally substituted aryl having 6 to 20 carbon atoms, or straight-chain or branched alkyl having 1 to 20 carbon atoms or alkenyl having 2 to 20 carbon atoms, in which one or more hydrogen atoms may also be replaced by halogen.

It is even more preferred that the cation A⁺ is tetraalkylammonium.

In an embodiment in the tetraalkylammonium cation the alkyl groups may be the same or different and straight-chain or branched, preferably having from 1 to 15 C atoms, more preferably from 2 to 10 C atoms, wherein preferably the alkyl groups are unsubstituted but optionally and alternatively may also be mono- or polysubstituted, in particular by halogen, where halogen preferably denotes F or Cl, more preferably F. More preferably, the alkyl groups are straight-chain and have 1, 2, 3, 4, 5, 6 or 7 C atoms

Particularly preferably the cation A⁺ is tetramethylammonium, tetraethylammonium, tetrapropylammonium, tetrabutylammonium, tetrapentylammonium, tetrahexylammonium or tetraheptylammonium, even more preferably tetrapropylammonium, tetrabutylammonium or tetrapentylammonium, and in particular tetrabutylammonium. It is preferred that the one or more ionic dopants of formula I are ammonium tetrafluoroborate salts, preferably tetraalkylammonium tetrafluoroborates.

It is particularly preferred that the liquid-crystalline medium according to the invention comprises tetrabutylammonium tetrafluoroborate, Bu₄NBF₄, represented by the following structure

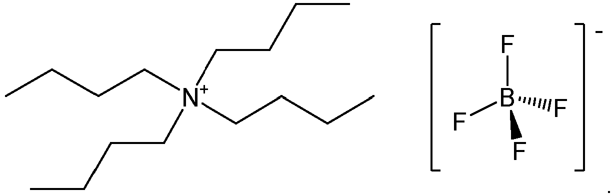

Preferably, tetrabutylammonium tetrafluoroborate is contained in the liquid-crystalline medium in an amount in the range of from 0.001% by weight to 0.100% by weight, preferably from 0.005% by weight to 0.050% by weight.

It is especially preferred that the liquid-crystalline medium comprises tetrabutylammonium tetrafluoroborate as the only ionic dopant.

In an alternative embodiment, it is however also possible to comprise tetrabutylammonium tetrafluoroborate in combination with other salt(s).

According to the invention the liquid-crystalline medium, in particular the nematic host, comprises one or more compounds selected from the group of the compounds of formulae IIA, IIB and IIC 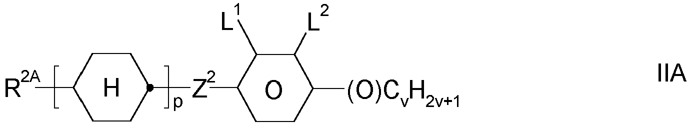 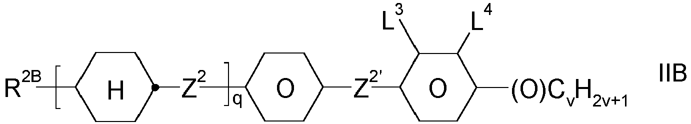 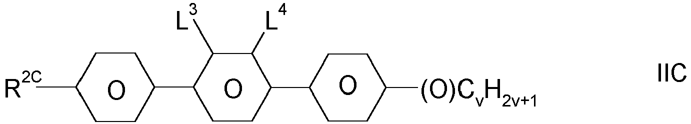 in which
- R^{2A} R^{2B} and R^{2C}: each, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by 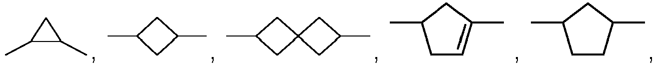 -O-, -S-, -C≡C-, -CF₂O-, -OCF₂-, -OC-O- or -O-CO- in such a way that O atoms are not linked directly to one another, or a cycloalkyl ring having 3 to 6 C atoms,
- L¹⁻⁴: each, independently of one another, denote F, Cl, CF₃ or CHF₂,
- Z² and Z^{2'}: each, independently of one another, denote a single bond, -CH₂CH₂-, -CH=CH-, -C≡C-, -CF₂O-, -OCF₂-, -CH₂O-, -OCH₂-, -C(O)O-, -OC(O)-, -C₂F ₄-, -CF=CF- or -CH=CHCH₂O-,
- p: denotes 1 or 2,
- q: denotes 0 or 1, and
- v: denotes 1 to 6.

In the compounds of the formulae IIA and IIB, Z² may have identical or different meanings. In the compounds of the formula IIB, Z² and Z^{2'} may have identical or different meanings.

In the compounds of the formulae IIA, IIB and IIC, R^{2A}, R^{2B} and R^{2C} each preferably denote alkyl having 1-6 C atoms, in particular CH₃, C₂H₅, n-C₃H₇, n-C₄H₉, n-C₅H₁₁.

In the compounds of the formulae IIA and IIB, L¹, L², L³ and L⁴ preferably denote L¹ = L² = F and L³ = L⁴ = F, furthermore L¹ = F and L² = Cl, L¹ = Cl and L² = F, L³ = F and L⁴ = Cl, L³ = Cl and L⁴ = F. Z² and Z^{2'} in the formulae IIA and IIB preferably each, independently of one another, denote a single bond, furthermore a -C₂H₄- or -CH₂O- bridge.

If in the formula IIB Z² denotes -C₂H₄- or -CH₂O-, Z^{2'} is preferably a single bond or, if Z^{2'} denotes -C₂H₄- or -CH₂O-, Z² is preferably a single bond. In the compounds of the formulae IIA and IIB, (O)CᵥH₂ᵥ₊₁ preferably denotes OCᵥH₂ᵥ₊₁, furthermore CᵥH₂ᵥ₊₁. In the compounds of the formula IIC, (O)CᵥH₂ᵥ₊₁ preferably denotes CᵥH₂ᵥ₊₁. In the compounds of the formula IIC, L³ and L⁴ preferably each denote F.

Preferred compounds of the formulae IIA, IIB and IIC are indicated below: 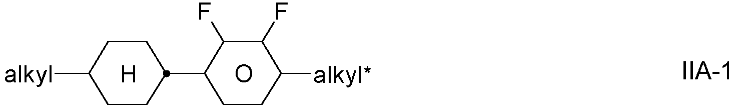 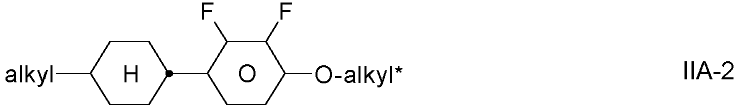 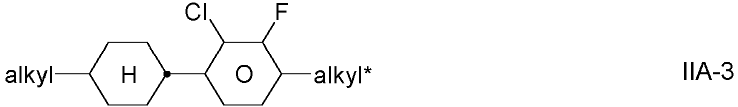 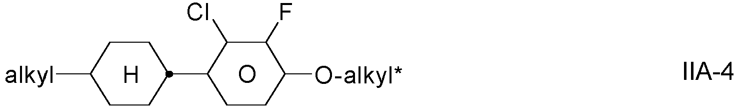 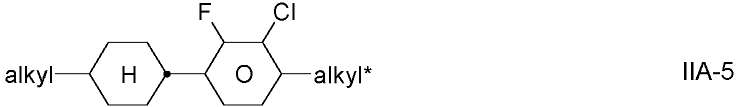 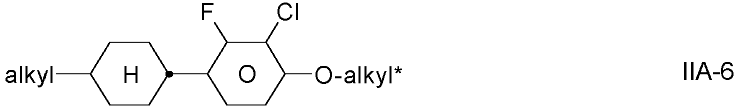 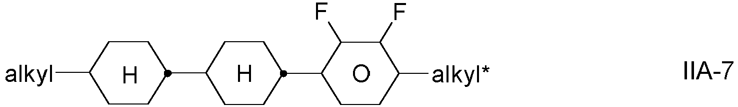 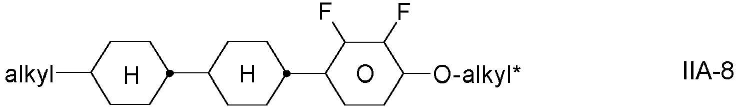 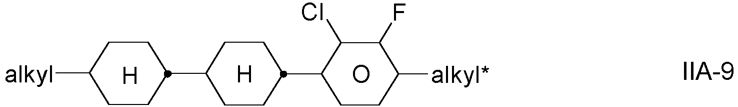 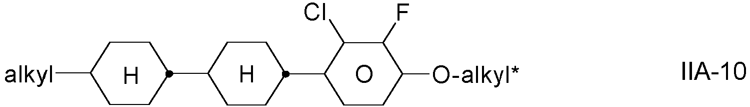 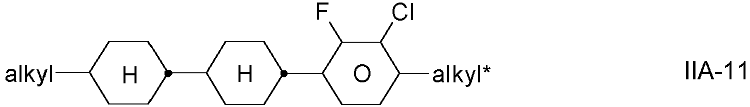 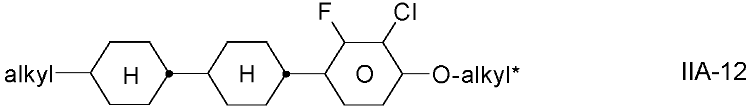 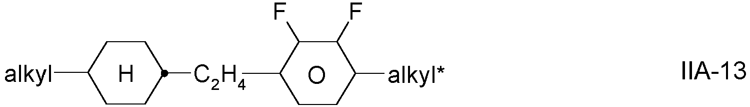 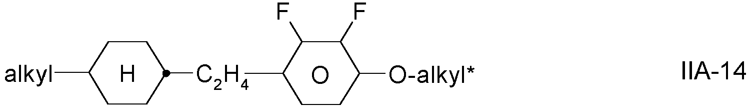 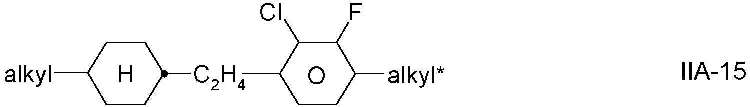 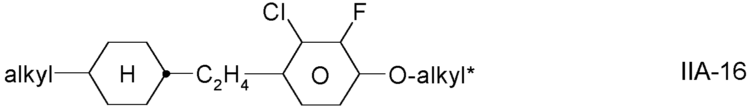 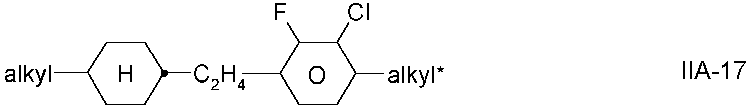 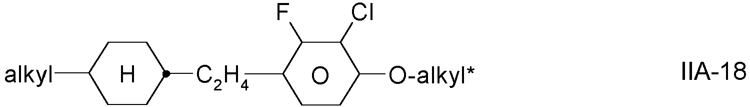 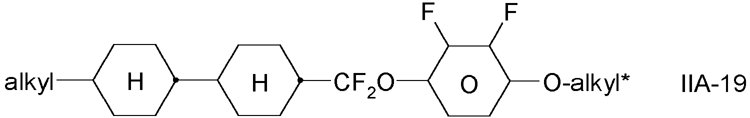 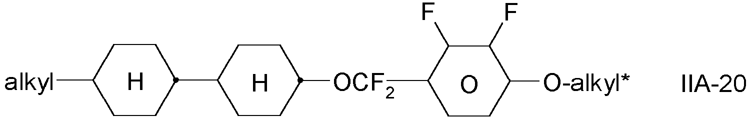 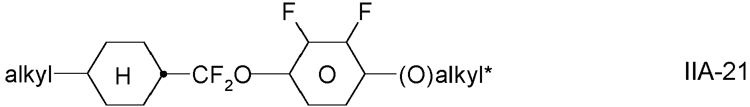 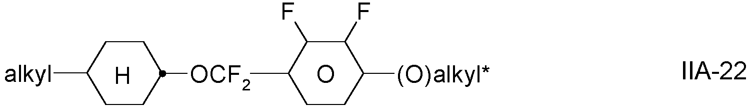 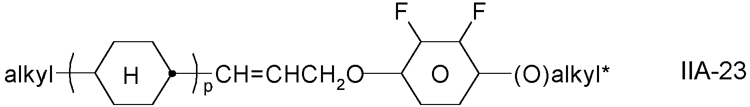 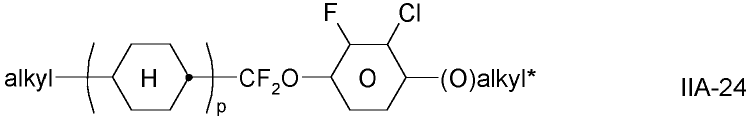 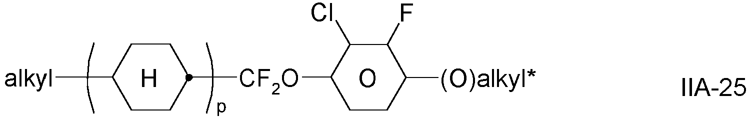 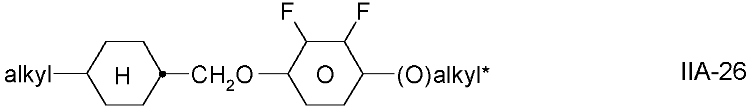 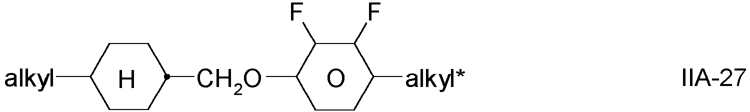 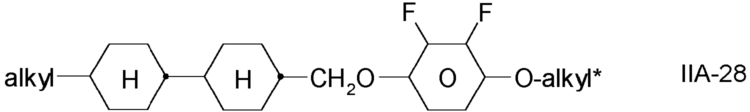 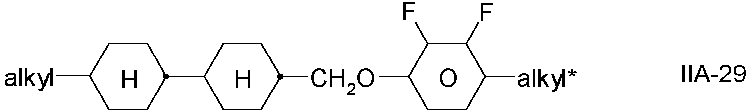 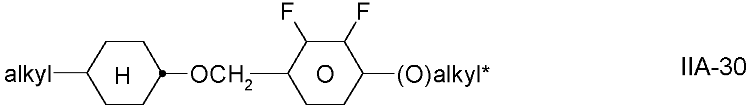 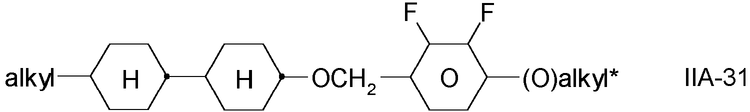 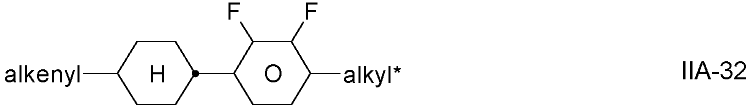 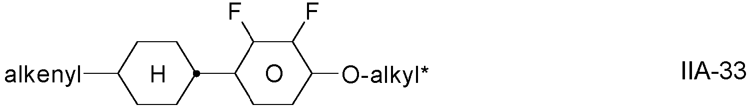 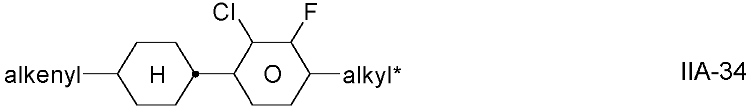 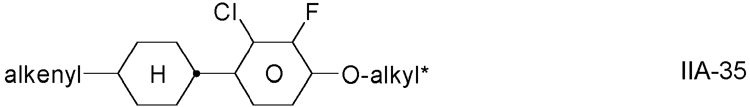 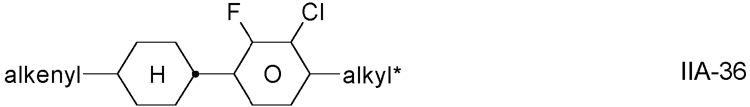 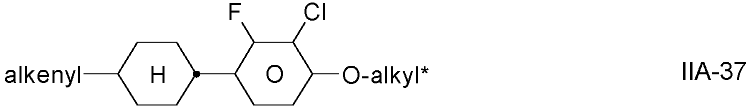 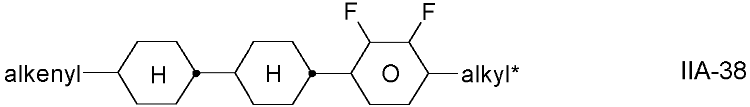 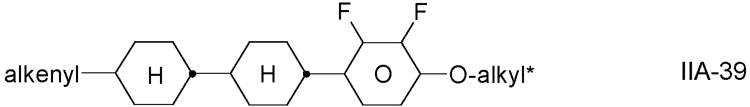 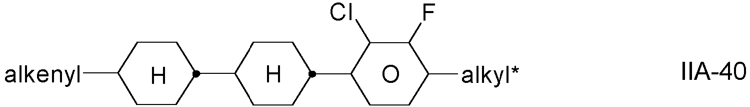 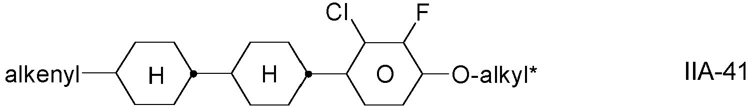 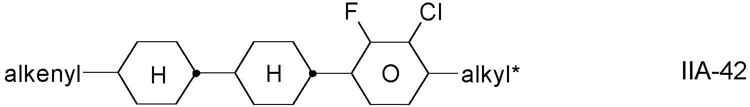 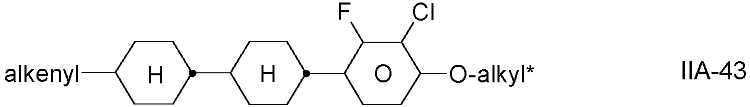 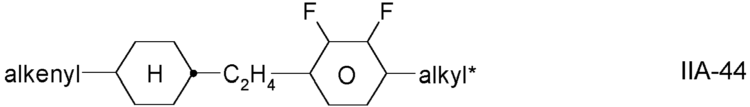 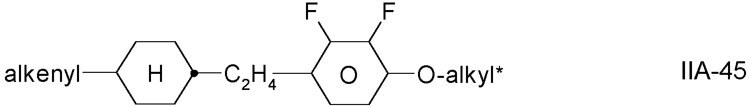 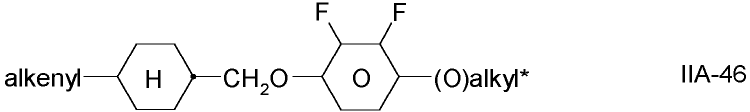 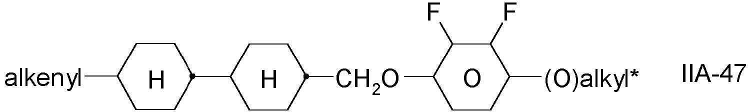 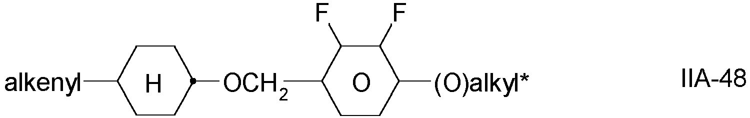 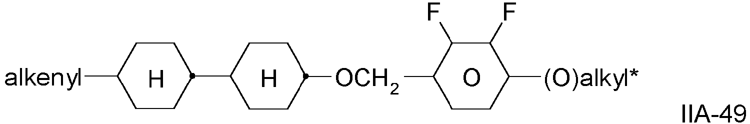 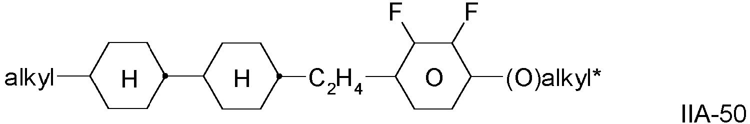 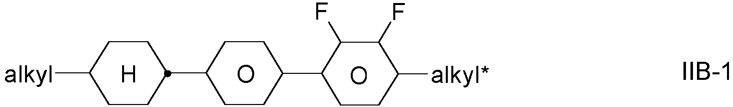 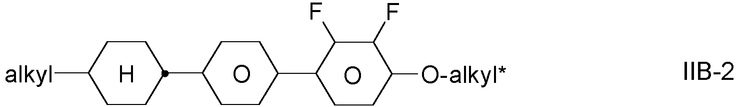 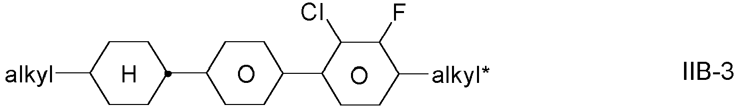 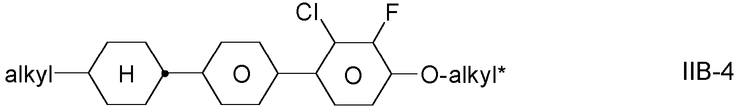 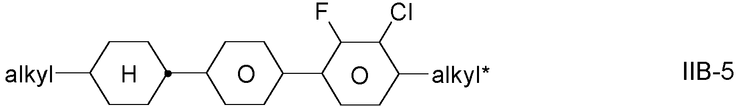 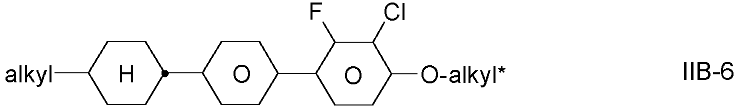 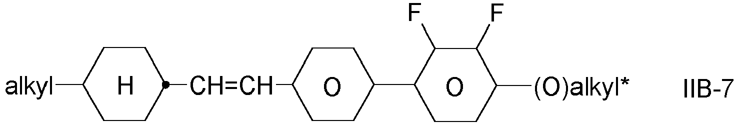 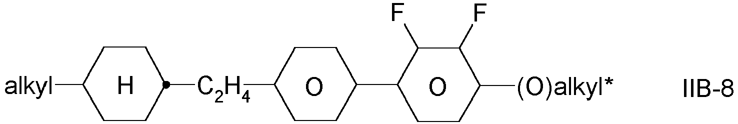 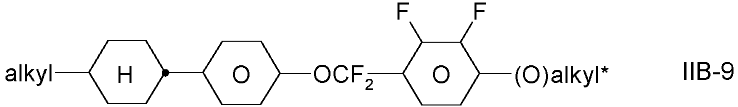 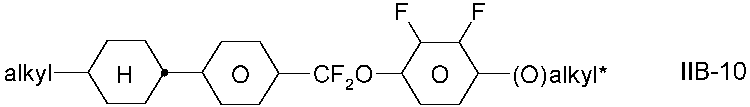 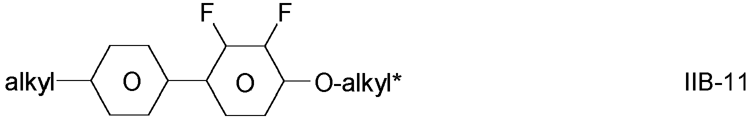 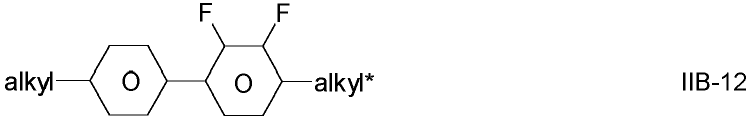 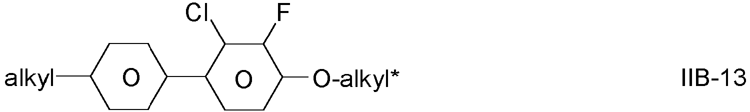 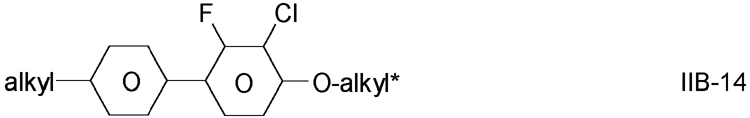 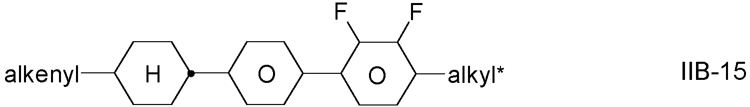 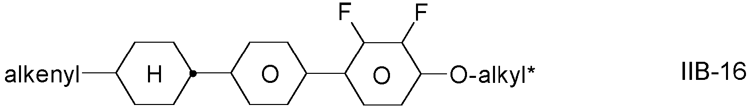 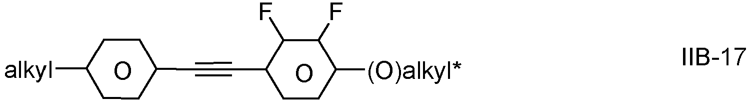 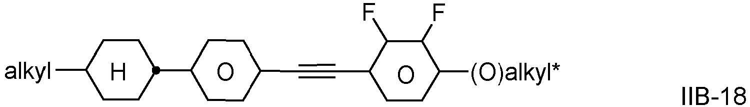 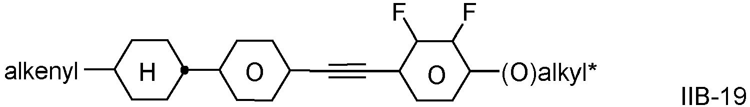 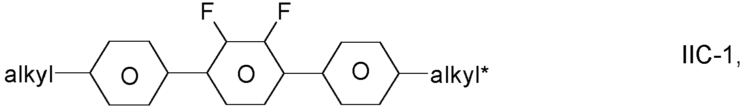
wherein alkyl and alkyl* each, independently of one another, denote a straight-chain alkyl radical having 1-7 C atoms,
alkenyl denotes a straight chain alkenyl radical having 2 to 7 C atoms, and (O) denotes -O- or a single bond.

Particularly preferred mixtures according to the invention comprise one or more compounds of the formulae IIA-2, IIA-8, IIA-14, IIA-26, IIA-28, IIA-33, IIA-39, IIA-45, IIA-46, IIA-47, IIB-2, IIB-11, IIB-16, IIB-17, IIB-18 and IIC-1.

The proportion of compounds of the formulae IIA and/or IIB in the mixture as a whole is preferably at least 20% by weight.

Particularly preferred media according to the invention comprise at least one compound of the formula IIC-1, 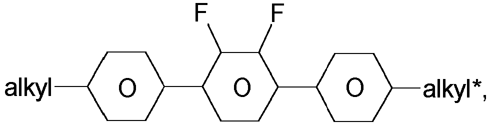 in which alkyl and alkyl* have the meanings indicated above, preferably in amounts of > 3% by weight, in particular > 5% by weight, preferably in the range of from 10 to 40%, particularly preferably from 20 to 30% by weight.

Preferably, the liquid-crystalline medium according to the invention comprises one or more compounds of formula N, 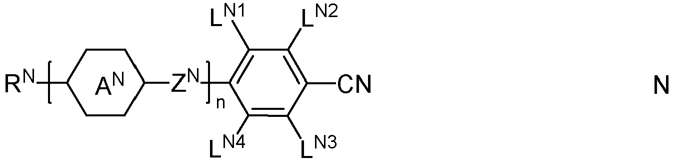 wherein
- R^{N}: denotes alkyl or alkenyl having up to 12 C atoms, wherein one or more non adjacent CH₂ groups may be replaced by -O- and/or a cycloalkyl ring having 3 to 5 C atoms, and wherein one or more H atoms may be replaced by F,
- A^{N}: on each occurrence, identically or differently, denotes
(a) a trans-1,4-cyclohexylene radical, in which one or more non-adjacent CH₂ groups may be replaced by -O- and/or -S-,
(b) a 1,4-phenylene radical, in which one or two CH groups may be replaced by N,
(c) trans-1,4-cyclohexenylene,
(d) a radical from the group consisting of 1,4-bicyclo[2.2.2]octylene, naphthalene-2,6-diyl, decahydronaphthalene-2,6-diyl and 1,2,3,4-tetrahydronaphthalene-2,6-diyl, where the radicals (a) to (d) may be substituted by one or two fluorine atoms,
- Z^{N}: on each occurrence, independently of one another, -CO-O-, -O-CO-, -CH₂O-, -OCH₂-, -CH₂CH₂-, -CH =CH-, -C≡C-, -(CH₂)₄-, -OCF₂-, -CF₂O-, -CF₂CF₂-, or a single bond,
- L^{N1} , L^{N2}, L^{N3} and L^{N4}: each, independently of one another, denote H, Cl, or F,
- n: is 1, 2 or 3.

Preferred compounds of formula N are selected from the group of compounds of the formulae N-1 and N-2: 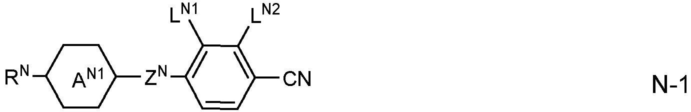 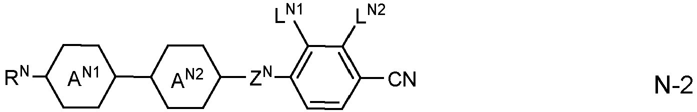 in which
- R^{N}: denotes alkyl or alkenyl having up to 7 C atoms,
- A^{N1} and A^{N2}: identically or differently, denote 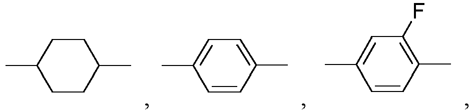 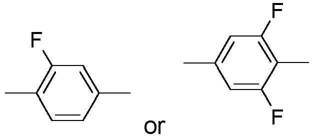
- preferably: 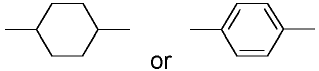
- L^{N1} and L^{N2}: independently of one another, denote H or F, and
- Z^{N}: denotes -CO-O-, -O-CO-, -CH₂O- -OCH₂-, -CH₂CH₂-, - OCF₂-, -CF₂O-, or a single bond, preferably a single bond.

Particularly preferred compounds of formula N are selected from the group of compounds of formulae N-1 to N-8, very particularly preferred of formula N-1:

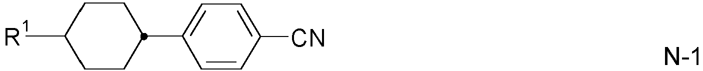

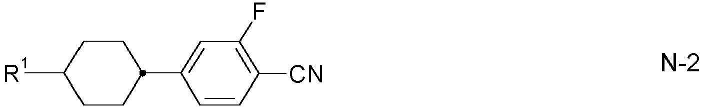

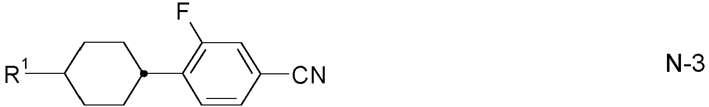

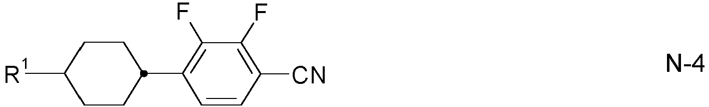

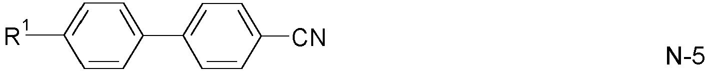

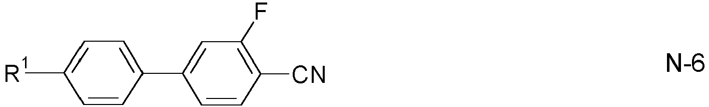

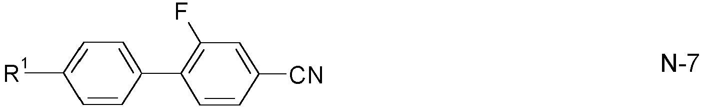

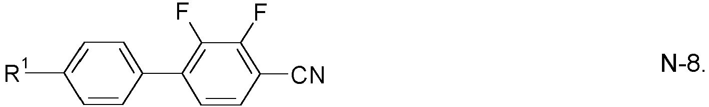

In a preferred embodiment the liquid-crystalline medium comprises one or more further additives, preferably a stabilizer and/or a chiral dopant.

In a particularly preferred embodiment of the present invention the liquid-crystalline medium comprises one or more stabilizers, preferably selected from the group consisting of compounds of the formulae ST-1 to ST-18 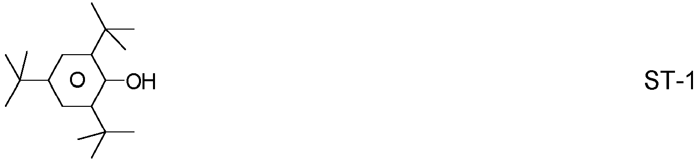 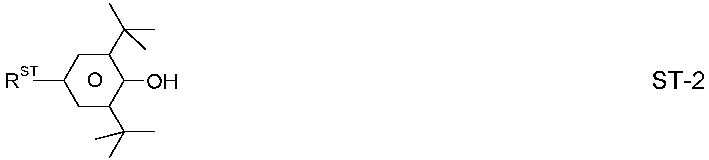 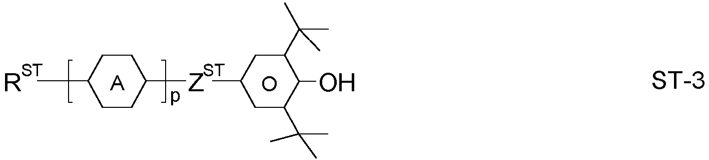 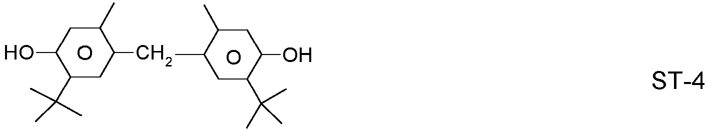 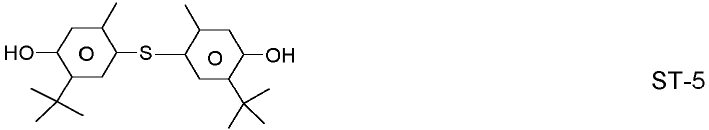 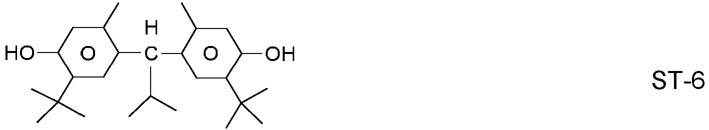 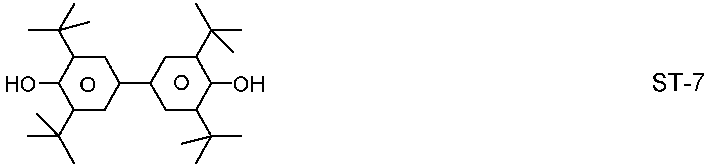 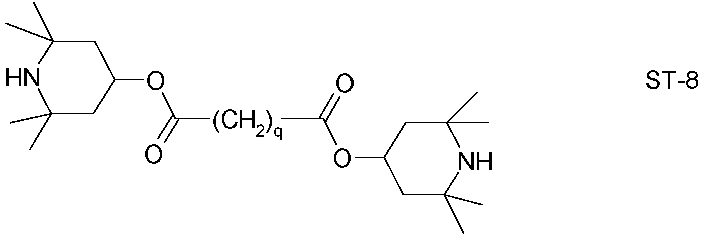 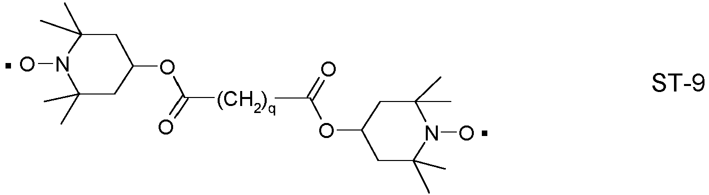 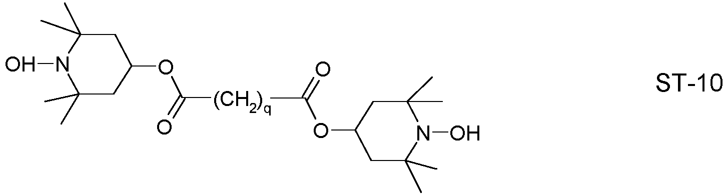 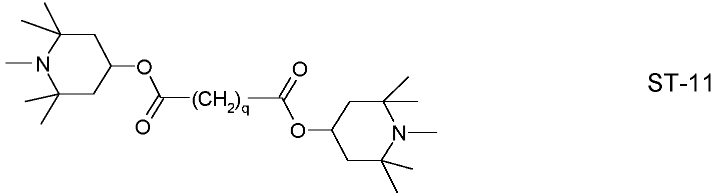 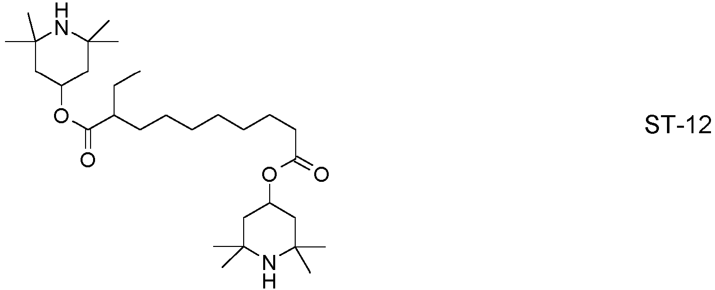 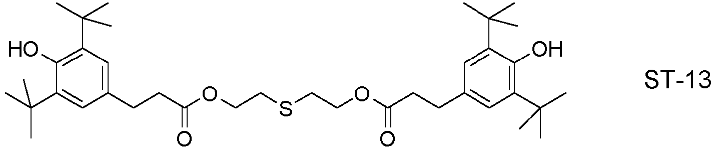 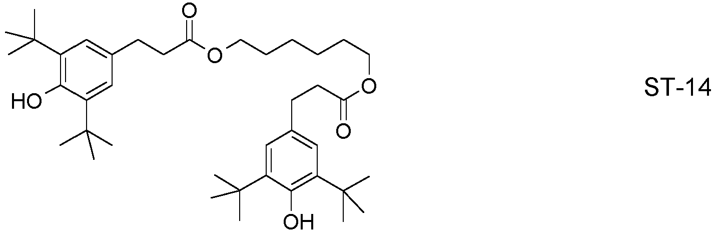 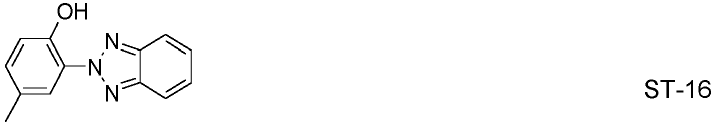 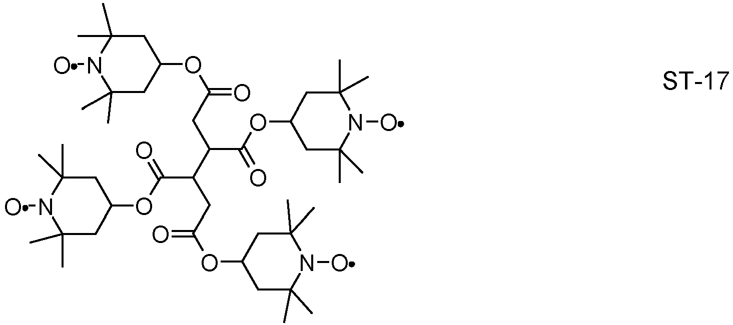 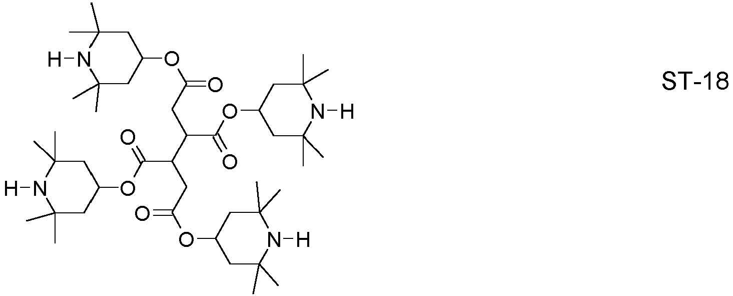 in which
- R^{ST}: denotes H, an alkyl or alkoxy radical having 1 to 15 C atoms, where, in addition, one or more CH₂ groups in these radicals may each be replaced, independently of one another, by -C≡C-, -CF₂O-, -OCF₂-, -CH=CH-, -O- 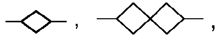 , -CO-O-, or -O-CO- in such a way that O atoms are not linked directly to one another, and in which, in addition, one or more H atoms may each be replaced by halogen, denotes 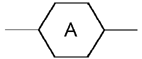 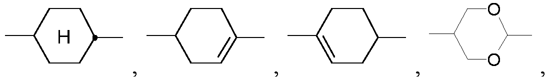 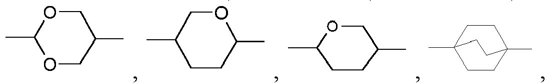 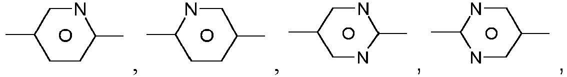 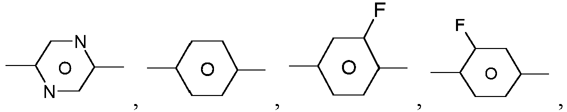 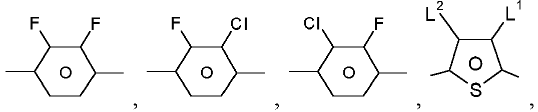 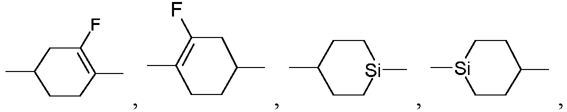 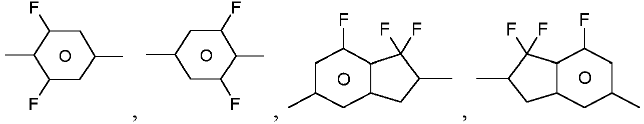 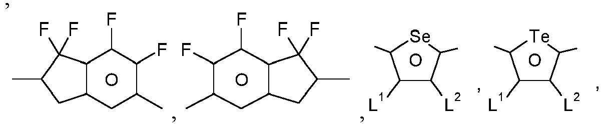 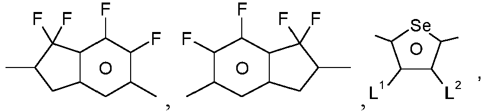 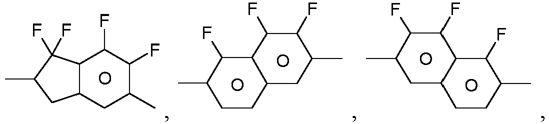 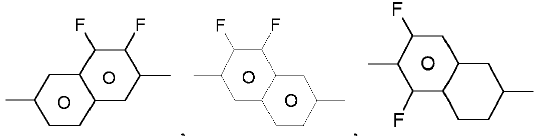 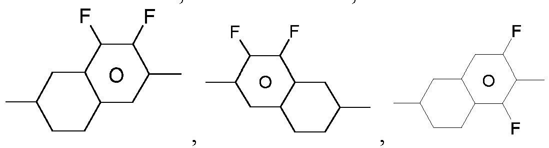 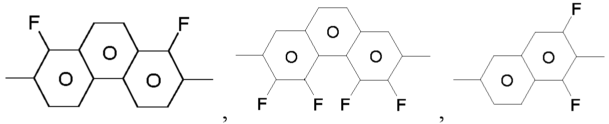 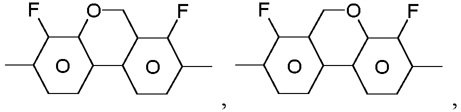 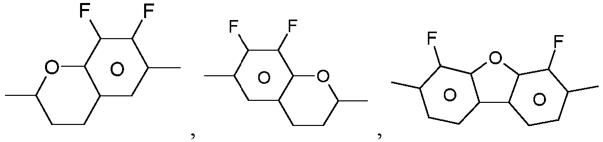
- Z^{ST}: each, independently of one another, denote -CO-O-, -O-CO-, -CF₂O-, -OCF₂-, -CH₂O-, -OCH₂-, -CH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, - CH=CH-, -C≡C- or a single bond,
- L¹ and L²: each, independently of one another, denote F, Cl, CF₃ or CHF₂,
- p: denotes 1 or 2,
- q denotes: 1, 2, 3, 4, 5, 6, 7, 8, 9 or 10.

Of the compounds of the formulae ST-1 to ST-18, special preference is given to the compounds of the formulae 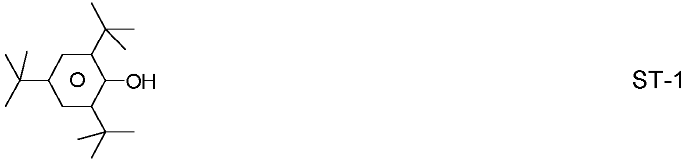 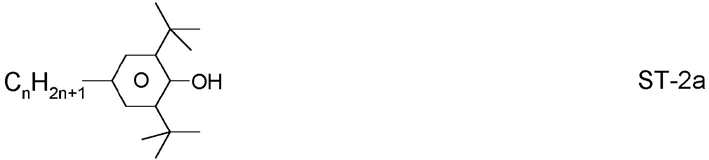 where n = 1, 2, 3, 4, 5, 6 or 7, preferably n = 1 or 7 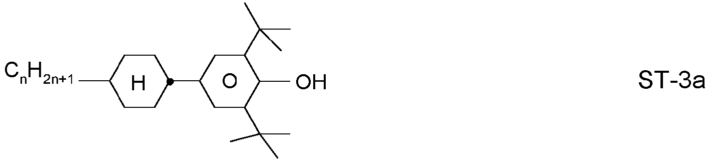 where n = 1, 2, 3, 4, 5, 6 or 7, preferably n = 3 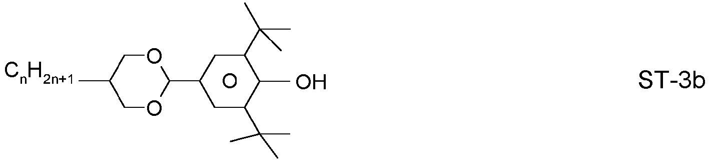 where n = 1, 2, 3, 4, 5, 6 or 7, preferably n = 3

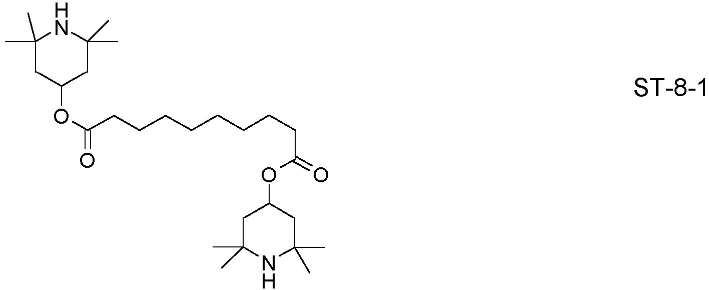

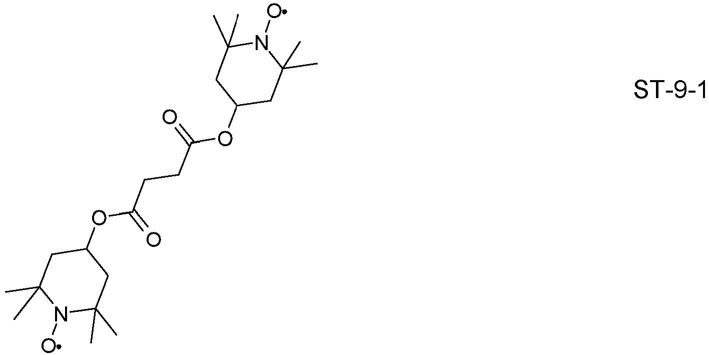

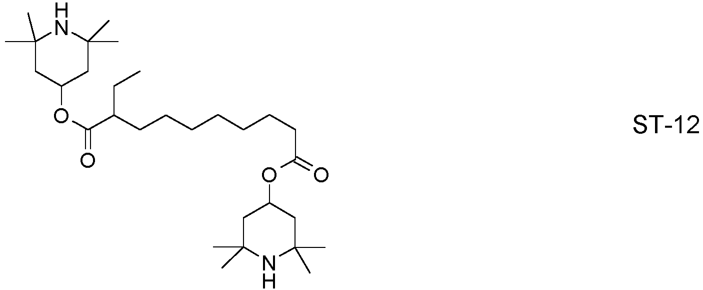

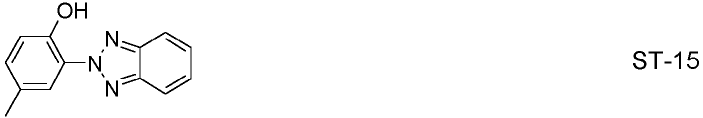

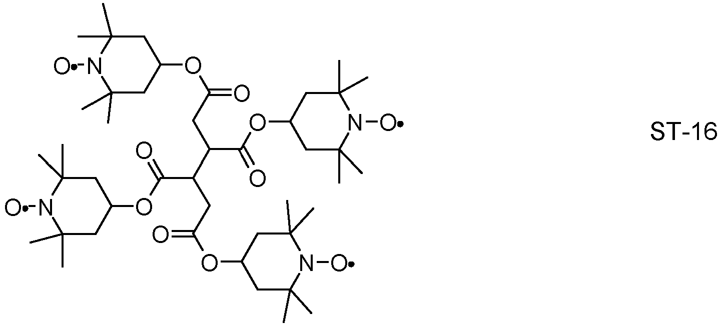

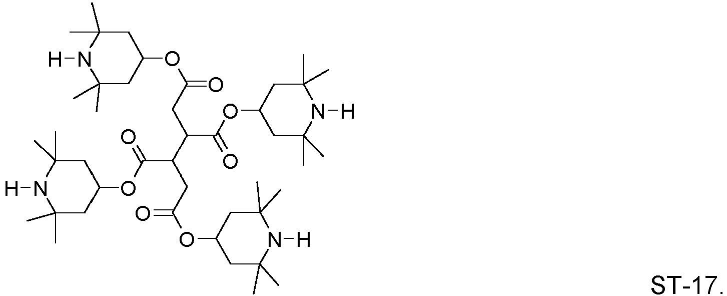

In the compounds of the formulae ST-3a and ST-3b, n preferably denotes 3. In the compounds of the formula ST-2a, n preferably denotes 7.

Very particularly preferred liquid-crystalline mixtures according to the invention comprise one or more stabilizers from the group of the compounds of the formulae ST-2a-1, ST-3a-1, ST-3b-1, ST-8-1, ST-9-1 and ST-12:

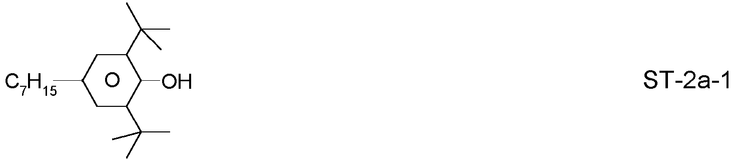

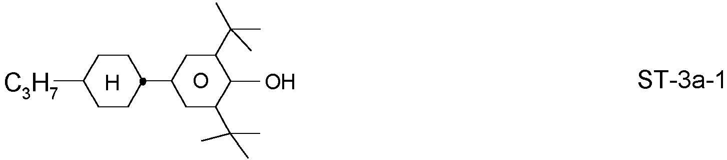

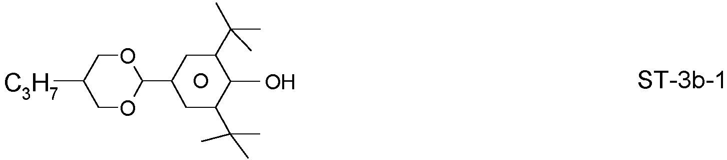

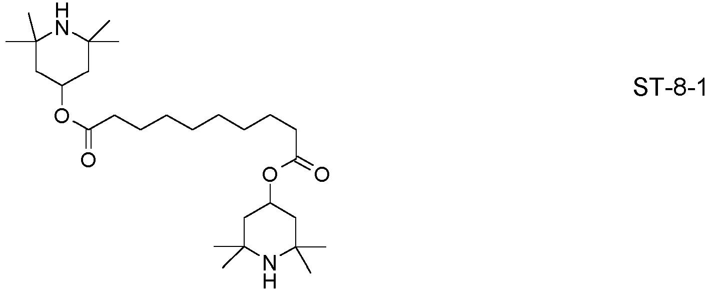

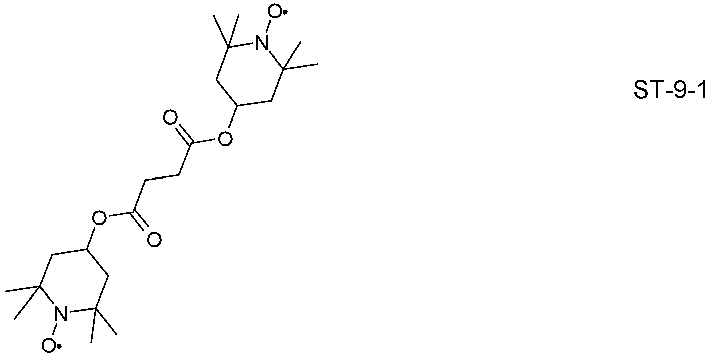

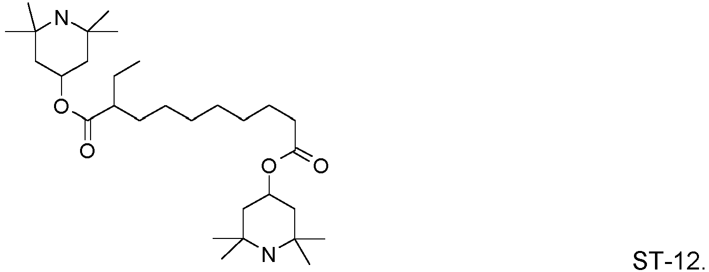

The one or more compounds selected from the compounds of the formulae ST-1 to ST-18 are preferably each present in the liquid-crystal mixtures according to the invention in an amount of from 0.005% by weight to 0.5% by weight, based on the mixture.

If the mixtures according to the invention comprise two or more compounds from the group of the compounds of the formulae ST-1 to ST-18, the overall concentration of these compounds is preferably in the range of from 0.01% by weight to 2.5% by weight, more preferably in the range of from 0.05% by weight to 1.0% by weight, based on the mixtures.

However, the total proportion of the compounds of the formulae ST-1 to ST-18, based on the mixture according to the invention, should preferably not exceed 3% by weight.

In a preferred embodiment the medium according to the invention comprises one or more chiral dopants and thus shows a cholesteric phase.

Preferably these chiral dopants have an absolute value of the helical twisting power (HTP) in the range of from 1 µm⁻¹ to 150 µm⁻¹, preferably in the range of from 10 µm⁻¹ to 100 µm⁻¹. In case the media comprise two or more chiral dopants, these may have opposite signs of their HTP values. This condition is preferred for some specific embodiments, as it allows to compensate the chirality of the respective compounds to some degree and, thus, may be used to compensate various temperature dependent properties of the resulting media in the devices. Generally, however, it is preferred that most, preferably all of the chiral compounds optionally present in the media according to the present invention have the same sign of their HTP values.

Preferably the chiral dopants present in the media according to the invention are mesogenic compounds and most preferably they exhibit a mesophase on their own.

The temperature dependence of the HTP of the individual compounds may be high or low. The temperature dependence of the pitch of the medium can be compensated by mixing compounds having different temperature dependence of the HTP in corresponding ratios.

For the optically active component, a large variety of chiral dopants known in the art may be used, such as, for example, cholesteryl nonanoate, R- and S-811, R- and S-1011, R- and S-2011, R- and S-3011, R- and S-4011, Rand S-5011, B(OC)2C*H-C-3 or CB15 (all Merck KGaA, Darmstadt).

Particularly suitable dopants are compounds which contain one or more chiral groups and one or more mesogenic groups, or one or more aromatic or alicyclic groups which form a mesogenic group with the chiral group.

Suitable chiral groups are, for example, chiral branched hydrocarbon radicals, chiral ethanediols, binaphthols or dioxolanes, furthermore mono- or polyvalent chiral groups selected from the group consisting of sugar derivatives, sugar alcohols, sugar acids, lactic acids, chiral substituted glycols, steroid derivatives, terpene derivatives, amino acids or sequences of a few, preferably 1-5, amino acids.

Preferred chiral groups are sugar derivatives, such as glucose, mannose, galactose, fructose, arabinose and dextrose; sugar alcohols, such as, for example, sorbitol, mannitol, iditol, galactitol or anhydro derivatives thereof, in particular dianhydrohexitols, such as dianhydrosorbide (1,4:3,6-dianhydro-D-sorbide, isosorbide), dianhydromannitol (isosorbitol) or dianhydroiditol (isoiditol); sugar acids, such as, for example, gluconic acid, gulonic acid and ketogulonic acid; chiral substituted glycol radicals, such as, for example, mono- or oligoethylene or propylene glycols, in which one or more CH₂ groups are substituted by alkyl or alkoxy; amino acids, such as, for example, alanine, valine, phenylglycine or phenylalanine, or sequences of from 1 to 5 of these amino acids; steroid derivatives, such as, for example, cholesteryl or cholic acid radicals; terpene derivatives, such as, for example, menthyl, neomenthyl, campheyl, pineyl, terpineyl, isolongifolyl, fenchyl, carreyl, myrthenyl, nopyl, geraniyl, linaloyl, neryl, citronellyl or dihydrocitronellyl.

Suitable chiral groups and mesogenic chiral compounds are described, for example, in DE 34 25 503, DE 35 34 777, DE 35 34 778, DE 35 34 779 and DE 35 34 780, DE 43 42 280, EP 01 038 941 and DE 195 41 820. Examples are also compounds listed in Table B below.

Particular preference is given to chiral dopants selected from the group consisting of compounds of the following formulae A-I to A-III and A-Ch: 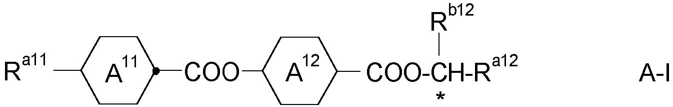 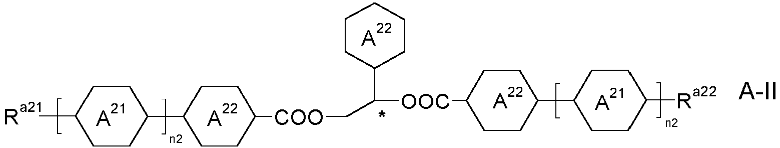 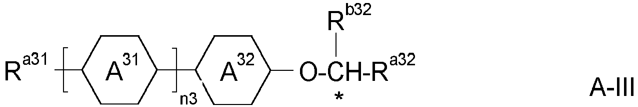 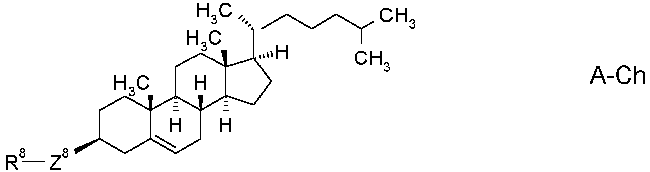 in which
- R^{a11} ,R^{a12} and R^{b12},: independently of one another, denote alkyl having 1 to 15 C atoms, in which, in addition, one or more non-adjacent CH₂ groups may each be replaced, independently of one another, by -C(R^{z})=C(R^{z})-, -C≡C-, -O-, -S-, -CO-, -CO-O-, -O-CO- or -O-CO-O- in such a way that O and/or S atoms are not linked directly to one another, and in which, in addition, one or more H atoms may each be replaced by F, C!, Br, I or CN, preferably alkyl, more preferably n-alkyl, with the proviso that R^{a12} is different from R^{b12},
- R^{a21} and R^{a22},: independently of one another, denote alkyl having 1 to 15 C atoms, in which, in addition, one or more non-adjacent CH₂ groups may each be replaced, independently of one another, by -C(R^{z})=C(R^{z})-, -C≡C-, -O-, -S-, -CO-, -CO-O-, -O-CO- or - O-CO-O- in such a way that O and/or S atoms are not linked directly to one another, and in which, in addition, one or more H atoms may each be replaced by F, C!, Br, I or CN, preferably both are alkyl, more preferably n-alkyl,
- R^{a31}, R^{a32} and R^{b32},: independently of one another, denote straight-chain or branched alkyl having 1 to 15 C atoms, in which, in addition, one or more non-adjacent CH₂ groups may each be replaced, independently of one another, by -C(R^{z})=C(R^{z})-, -C≡C-, -O-, -S-, -CO-, -CO-O-, -O-CO- or -O-CO-O- in such a way that O and/or S atoms are not linked directly to one another, and in which, in addition, one or more H atoms may each be replaced by F, C!, Br, I or CN, preferably alkyl, more preferably n-alkyl, with the proviso that R^{a32} is different from R^{b32};
- R^{z}: denotes H, CH₃, F, C!, or CN, preferably H or F,
- R⁸: has one of the meanings of R^{a11} given above, preferably alkyl, more preferably n-alkyl having 1 to 15 C atoms,
- Z⁸: denotes- C(O)O-, CH₂O, CF₂O or a single bond, preferably -C(O)O-,
- A¹¹: is defined as A¹² below, or alternatively denotes 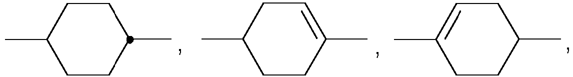 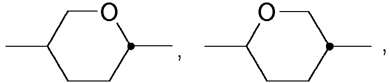 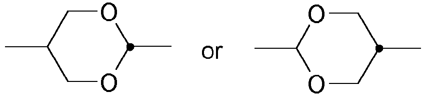
- A¹²: denotes 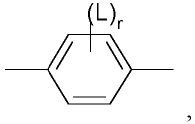 preferably 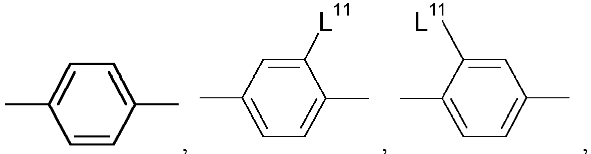 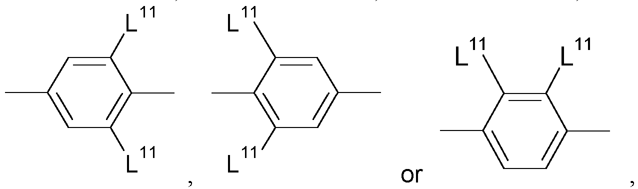 in which r is 0, 1, 2, 3 or 4, L and L¹¹, on each occurrence, independently of one another, denote alkyl, alkenyl or alkoxy having up to 12 C atoms, in which one or more H atoms are optionally replaced with halogen, halogen, SF₅ or CN, preferably Me (methyl), Et (ethyl), Cl or F, particularly preferably F.
- A²¹: denotes 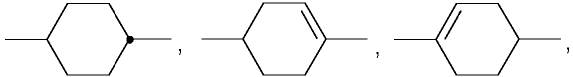 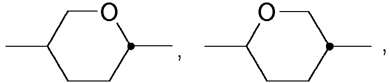 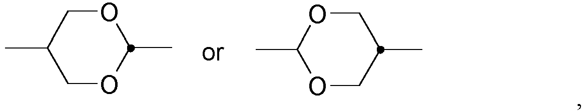
- A²²: has the meanings given for A¹²
- A³¹: has the meanings given for A¹¹, or alternatively denotes 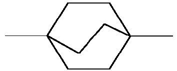
- A³²: has the meanings given for A¹²,
- n2: on each occurrence, identically or differently, is 0, 1 or 2, and
- n3: is 1, 2 or 3.

Particular preference is given to chiral dopants selected from the group consisting of the compounds of the following formulae: 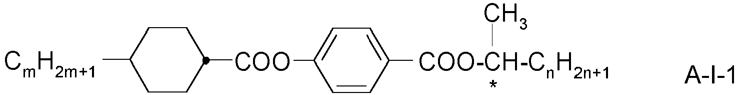 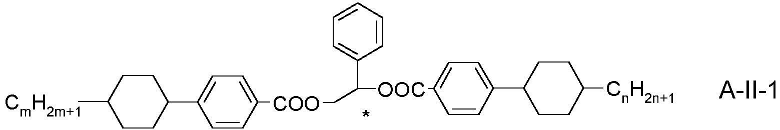 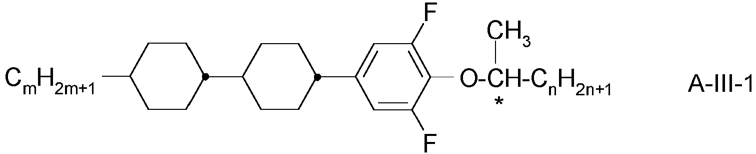 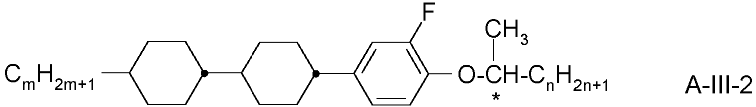 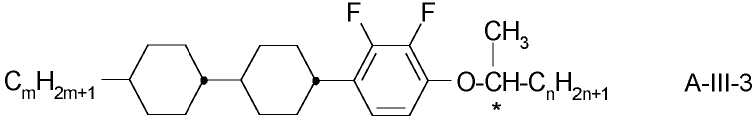 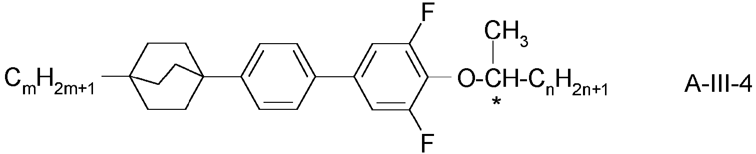 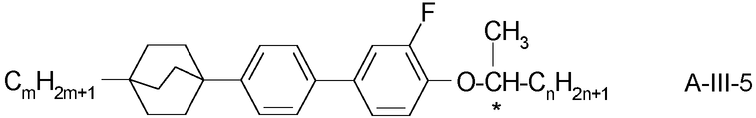 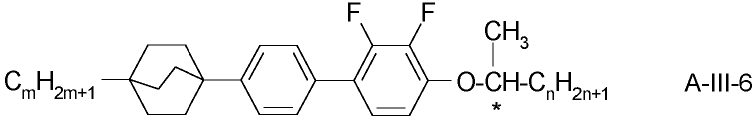 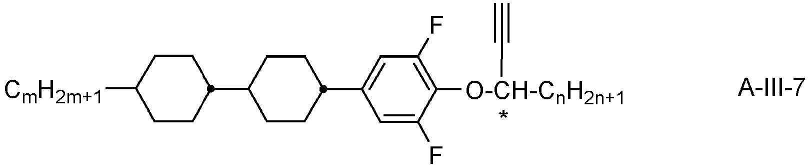 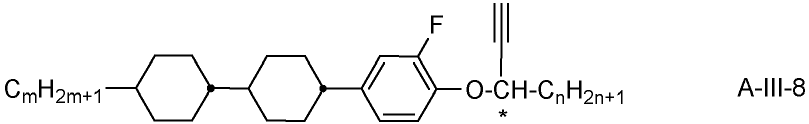 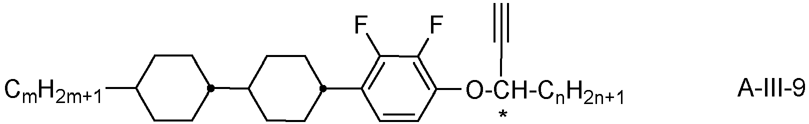 in which
- m: is, on each occurrence, identically or differently, an integer from 1 to 9 and
- n: is, on each occurrence, identically or differently, an integer from 2 to 9.

Particularly preferred compounds of formula A are compounds of formula A-III.

Further preferred dopants are derivatives of the isosorbide, isomannitol or isoiditol of the following formula A-IV: 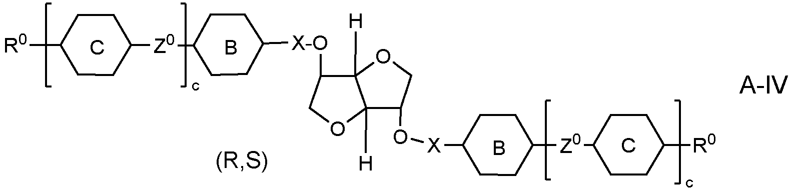 in which the group 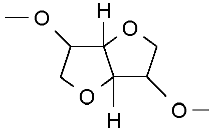 is 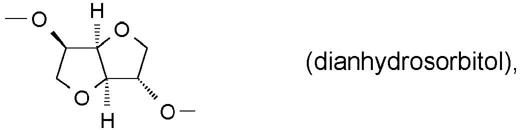 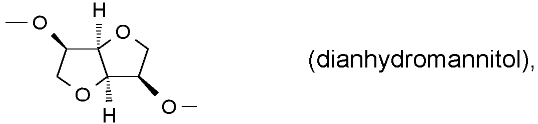 or 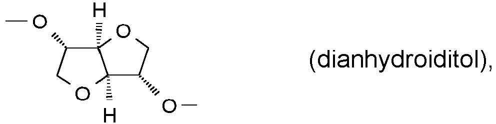 preferably dianhydrosorbitol.

Further preferred dopants are chiral ethanediols, such as, for example, diphenylethanediol (hydrobenzoin), in particular mesogenic hydrobenzoin derivatives of the following formula A-V: 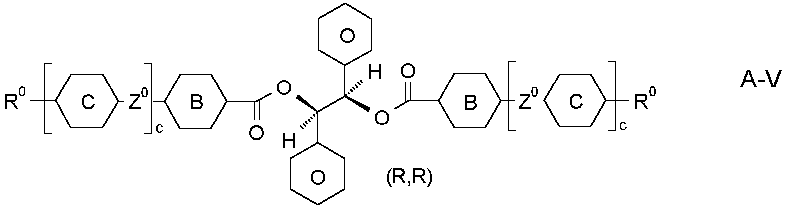 including the (R,S), (S,R), (R,R) and (S,S) enantiomers, which are not shown,
in which 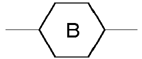 and 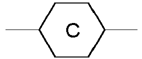 are each, independently of one another, 1,4-phenylene, which may also be mono-, di- or trisubstituted by L, or 1,4-cyclohexylene,
- L: is H, F, Cl, CN or optionally halogenated alkyl, alkoxy, alkylcarbonyl, alkoxycarbonyl or alkoxycarbonyloxy having 1-7 carbon atoms,
- c: is 0 or 1,
- X: is CH₂ or -C(O)-,
- Z⁰: is -COO-, -OCO-, -CH₂CH₂- or a single bond, and
- R°: is alkyl, alkoxy, alkylcarbonyl, alkoxycarbonyl or alkylcarbonyloxy having 1-12 carbon atoms.

Chiral compounds preferably used according to the present invention are selected from the group consisting of the formulae shown below.

Examples of compounds of formula A-IV are:

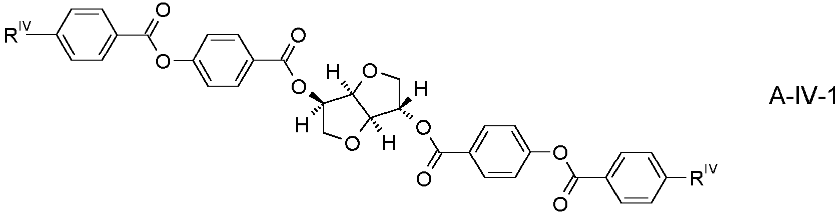

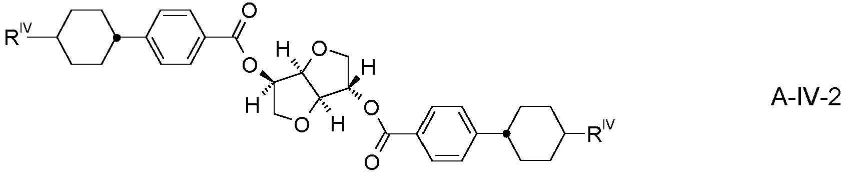

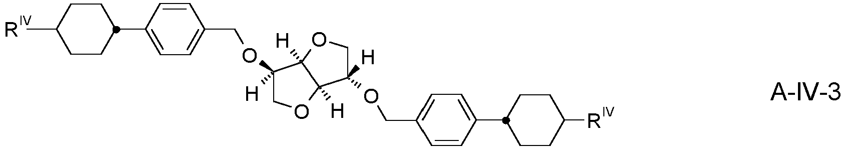

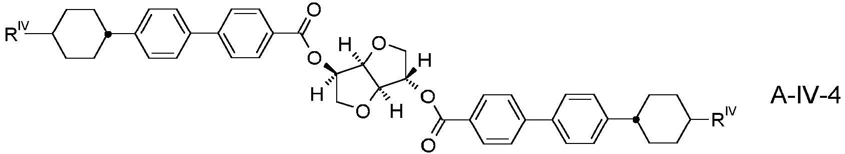

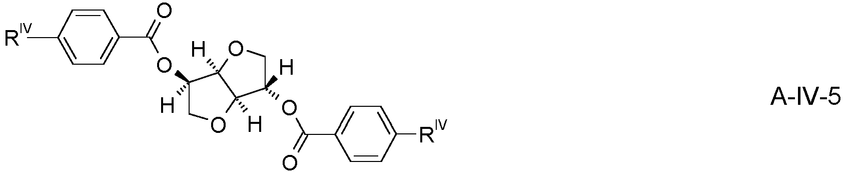

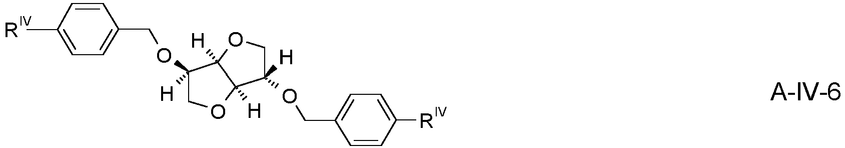

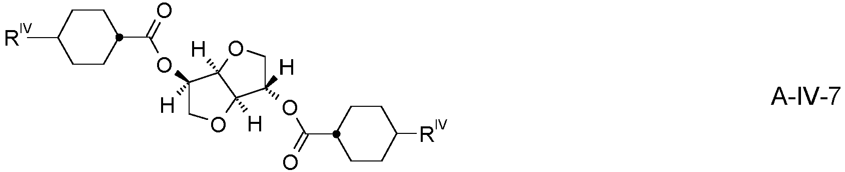

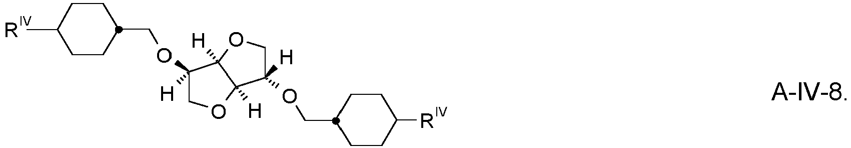

The compounds of the formula A-V are described in GB-A-2,328,207.

Very particularly preferred chiral dopants are chiral binaphthyl derivatives, as described in WO 02/94805, chiral binaphthol acetal derivatives, as described in WO 02/34739, chiral TADDOL derivatives, as described in WO 02/06265, and chiral dopants having at least one fluorinated bridging group and a terminal or central chiral group, as described in WO 02/06196 and WO 02/06195.

Particular preference is given to chiral compounds of the formula A-VI 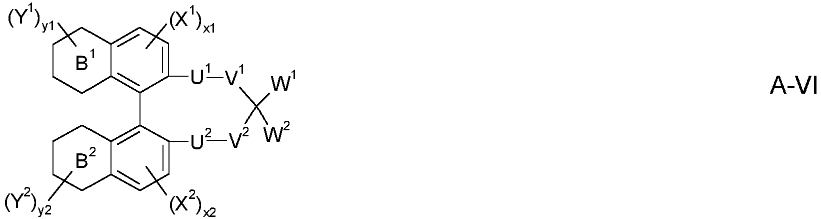 in which
- X¹, X², Y¹ and Y²: are each, independently of one another, F, Cl, Br, I, CN, SCN, SFs, straight-chain or branched alkyl having from 1 to 25 carbon atoms, which is unsubstituted or monosubstituted or polysubstituted by F, C!, Br, I or CN and in which, in addition, one or more non-adjacent CH₂ groups may each, independently of one another, be replaced by -O-, -S-, -NH-, NR⁰-, -CO-, -COO-, -OCO-, -OCOO-, -S-CO-, -CO-S-, -CH=CH- or -C≡C- in such a way that O and/or S atoms are not bonded directly to one another, a polymerizable group or cycloalkyl or aryl having up to 20 carbon atoms, which may optionally be monosubstituted or polysubstituted by halogen, preferably F, or by a polymerizable group,
- R°: is H or alkyl having 1 to 12 C atoms,
- x¹ and x²: are each, independently of one another, 0, 1 or 2,
- y¹ and y²: are each, independently of one another, 0, 1, 2, 3 or 4,
- B¹ and B²: are each, independently of one another, an aromatic or partially or fully saturated aliphatic six-membered ring in which one or more CH groups may each be replaced by N and one or more non-adjacent CH₂ groups may each be replaced by O or S,
- W¹ and W²: are each, independently of one another, -Z¹-A¹-(Z²-A²)ₘ-R, and one of the two is alternatively R¹ or A³, but both are not simultaneously H, or 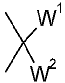 is or 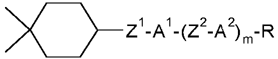 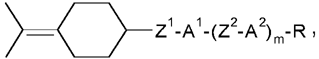
- U¹ and U²: are each, independently of one another, CH₂, O, S, CO or CS,
- V¹ and V²: are each, independently of one another, (CH₂)ₙ, in which from one to four non-adjacent CH₂ groups may each be replaced by O or S, and one of V¹ and V² and, in the case where 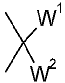 is both are a single bond, 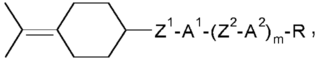
- n: is 1, 2 or 3,
- Z¹ and Z²: are each, independently of one another, -O-, -S-, -CO-, -COO-, -OCO-, -O-COO-, -CO-NR⁰-, -NR⁰-CO-, -O-CH₂-, -CH₂-O-, -S-CH₂-, -CH₂-S-, -CF₂-O-, -O-CF₂-, -CF₂-S-, -S-CF₂-, -CH₂-CH₂-, -CF₂-CH₂-, -CH₂-CF₂-, -CF₂-CF₂-, -CH=N-, -N=CH-, -N=N-, -CH=CH-, -CF=CH-, -CH=CF-, -CF=CF-, -C≡C-, a combination of two of these groups, where no two O and/or S and/or N atoms are bonded directly to one another (preferably -CH=CH-COO-, or -COO-CH=CH-), or a single bond,
- A¹, A² and A³: are each, independently of one another, 1,4-phenylene, in which one or two non-adjacent CH groups may each be replaced by N, 1,4-cyclohexylene, in which one or two non-adjacent CH₂ groups may each be replaced by O or S, 1,3-dioxolane-4,5-diyl, 1,4-cyclohexenylene, 1,4-bicyclo[2.2.2]octylene, piperidine-1,4-diyl, naphthalene-2,6-diyl, decahydronaphthalene-2,6-diyl or 1,2,3,4-tetrahydronaphthalene-2,6-diyl, where each of these groups is unsubstituted or monosubstituted or polysubstituted by L, and in addition A¹ can be a single bond,
- L: is a halogen atom, preferably F, CN, NO₂, alkyl, alkoxy, alkylcarbonyl, alkoxycarbonyl or alkoxycarbonyloxy having 1-7 carbon atoms, in which one or more H atoms may each be replaced by F or Cl,
- m: is in each case, independently, 0, 1, 2 or 3, and
- R and R¹: are each, independently of one another, H, F, Cl, Br, I, CN, SCN, SF₅, straight-chain or branched alkyl having from 1 or 3 to 25 carbon atoms respectively, which may optionally be monosubstituted or polysubstituted by F, C!, Br, I or CN, and in which one or more non-adjacent CH₂ groups may each be replaced by -O-, -S-, -NH-, -NR⁰-, -CO-, -COO-, -OCO-, -O-COO-, -S-CO-, -CO-S-, -CH=CH- or -C≡C-, where no two O and/or S atoms are bonded directly to one another, or a polymerizable group.

Particular preference is given to chiral binaphthyl derivatives of the formula A-VI-1 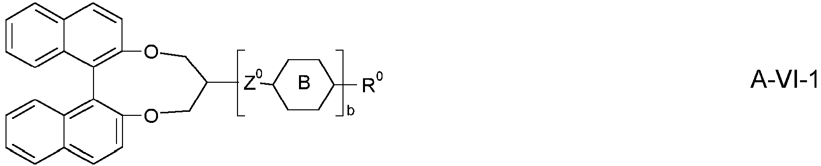 in which ring B, R⁰ and Z⁰ are as defined for the formulae A-IV and A-V, and b is 0, 1, or 2,

in particular those selected from the following formulae A-VI-1a to A-VI-1c:

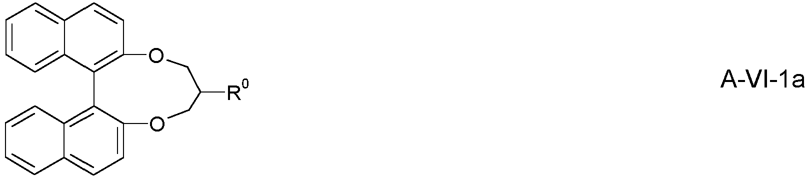

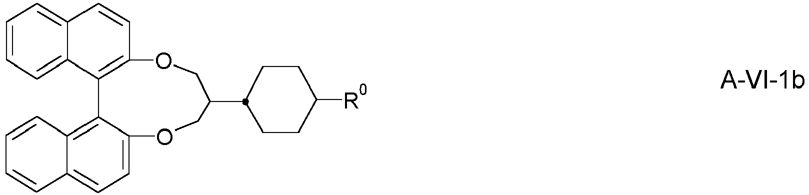

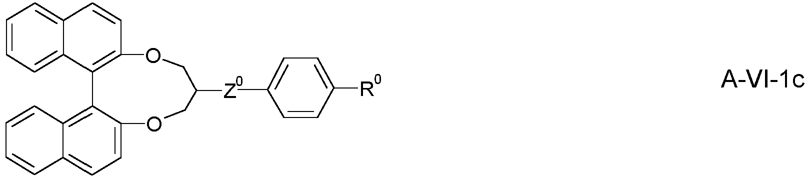

in which ring B, R⁰ and Z⁰ are as defined for the formula A-VI-1, and
- R°: as defined for formula A-IV or H or alkyl having from 1 to 4 carbon atoms, and
- b: is 0, 1 or 2,
and Z⁰ is, in particular, -OCO- or a single bond.

Particular p reference is furthermore given to chiral binaphthyl derivatives of the formula A-VI-2 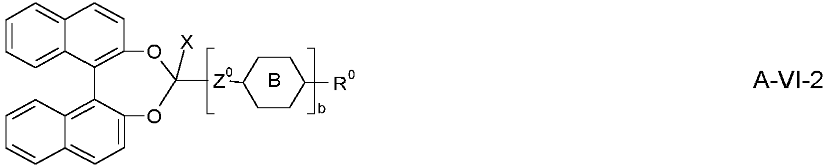 in particular those selected from the following formulae A-VI-2a to A-VI-2f: 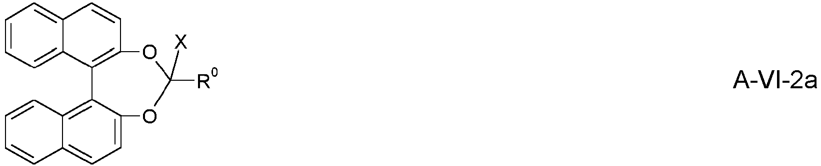 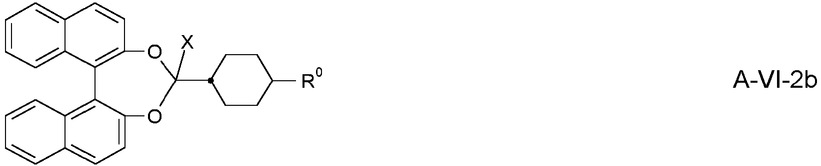 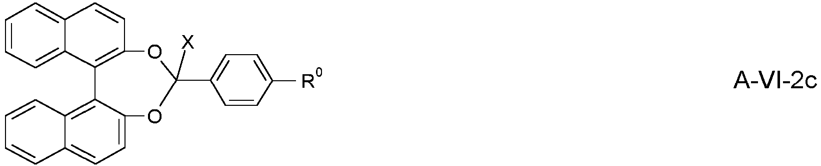 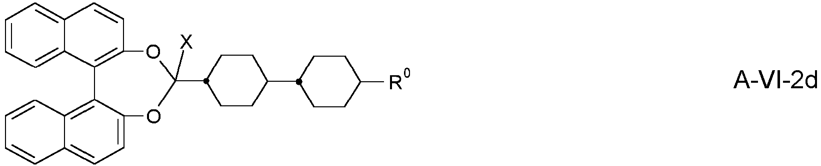 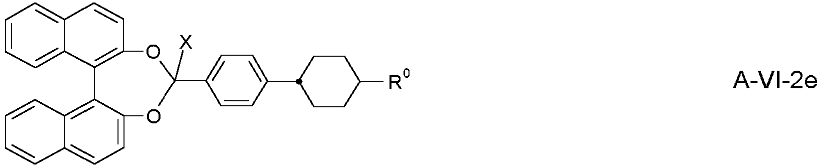 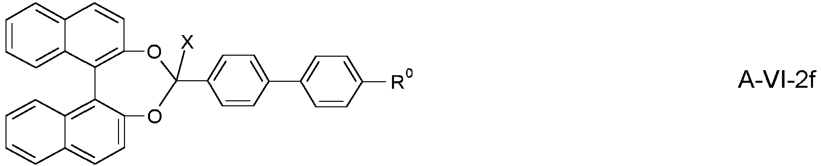 in which R° is as defined for the formula A-VI, and X is H, F, Cl, CN or R°, preferably F.

The concentration of the optionally comprised one or more chiral dopants in the liquid-crystalline medium is preferably in the range from 0.001% by weight to 20% by weight, more preferably from 0.05% by weight to 5% by weight, even more preferably from 0.1% by weight to 2% by weight, and in particular from 0.5% by weight to 1.5% by weight. These preferred concentration ranges apply in particular to the chiral dopant S-4011 or R-4011 and S-5011 or R-5011 (all from Merck KGaA) and for chiral dopants having the same or a similar HTP.

Preferably, the liquid-crystalline medium additionally comprises one or more compounds of the formula III, 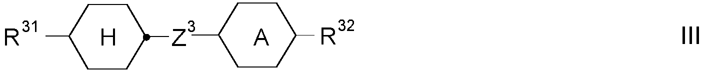 in which
- R³¹ and R³²: each, independently of one another, denote a straight-chain alkyl, alkenyl, alkoxyalkyl or alkoxy radical having up to 12 C atoms, and denotes 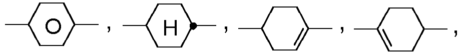 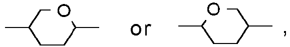
- Z³: denotes a single bond, -CH₂CH₂-, -CH=CH-, -CF₂O-, -OCF₂-, -CH₂O-, -OCH₂-, -COO-, -OCO-, -C₂F₄-, -C₄H₈- or -CF=CF-.

Preferred compounds of formula III are selected from the group of compounds of the following sub-formulae: 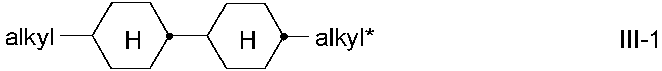 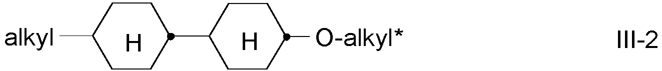 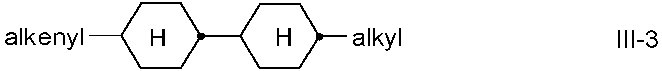 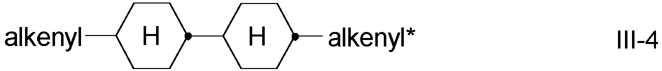 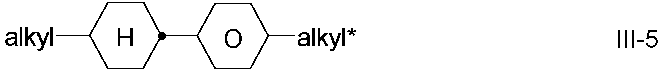 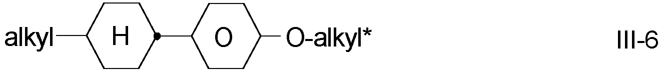 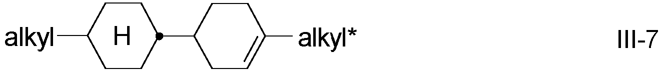 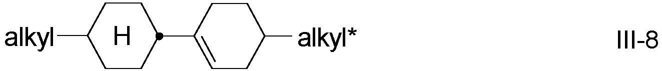 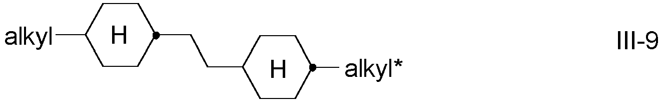 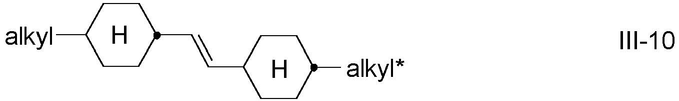 in which alkyl and alkyl* each, independently of one another, denote a straight-chain alkyl radical having 1-6 C atoms, and alkenyl denotes a straight-chain alkenyl radical having 2-6 C atoms. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Especially preferred are compounds of formula III-1 and III-3.

The proportion of compounds of the formula III in the mixture as a whole is preferably at least 5% by weight.

Particularly preferred compounds of the formula III-1 are the following:

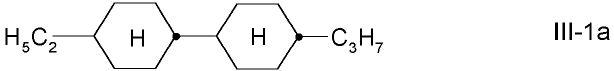

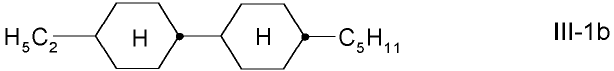

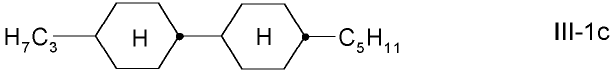

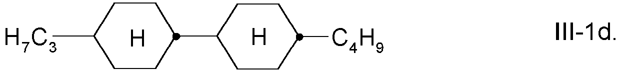

Particularly preferred compounds of the formula III-3 are the following:

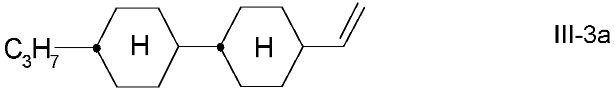

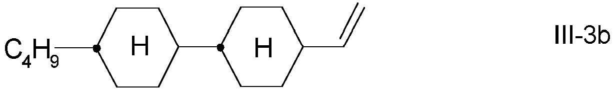

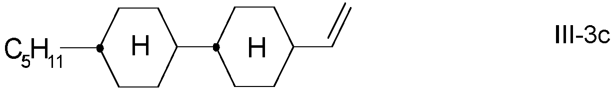

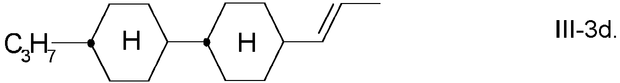

Preferably, the liquid-crystalline medium comprises one or more tetracyclic compounds of the formulae 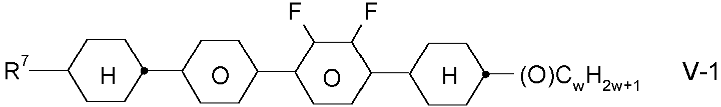 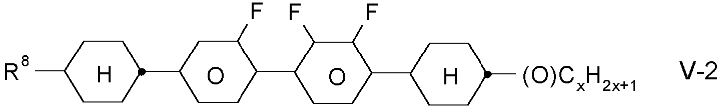 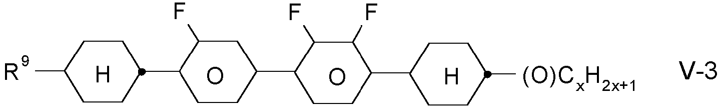 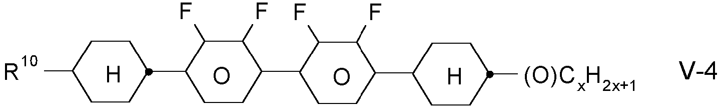 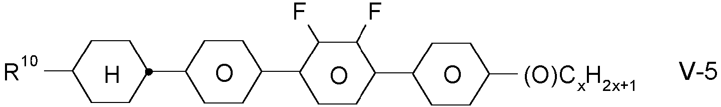 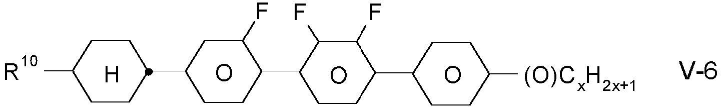 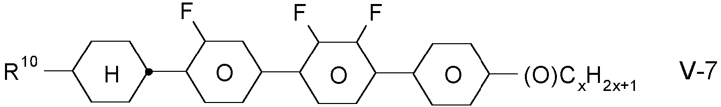 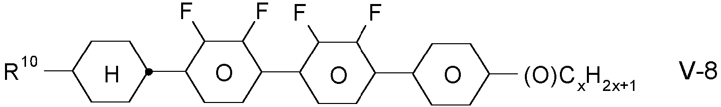 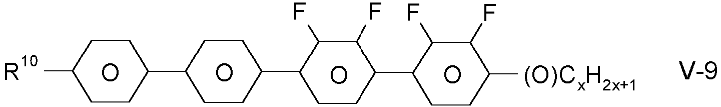 in which
- R⁷⁻¹⁰: each, independently of one another, have one of the meanings indicated for R^{2A} of formula IIA, and
- w and x: each, independently of one another, denote 1 to 6.

Particular preference is given to mixtures comprising at least one compound of the formula V-9.

Preferably, the liquid-crystalline medium comprises one or more compounds of the formulae Y-1 to Y-6 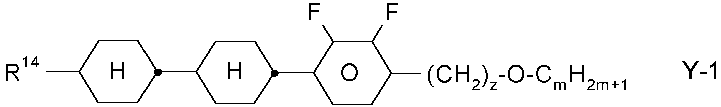 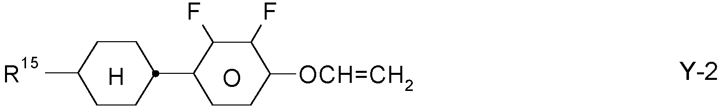 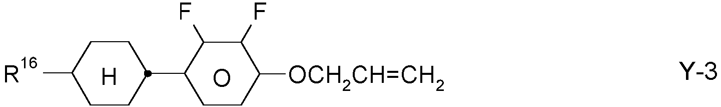 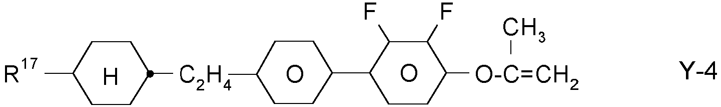 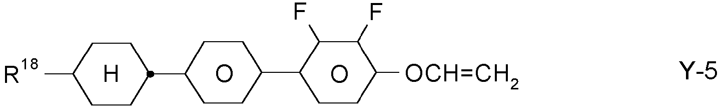 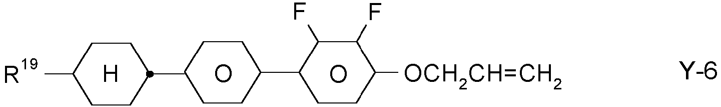 in which R¹⁴-R¹⁹ each, independently of one another, denote an alkyl or alkoxy radical having 1-6 C atoms; z and m each, independently of one another, denote 1-6; x denotes 0, 1, 2 or 3.

The medium according to the invention particularly preferably comprises one or more compounds of the formulae Y-1 to Y-6 in amounts of 5% by weight or more.

Preferably, the liquid-crystalline medium comprises one or more fluorinated terphenyls of the formulae T-1 to T-21 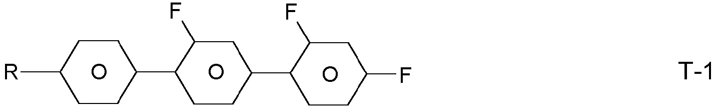 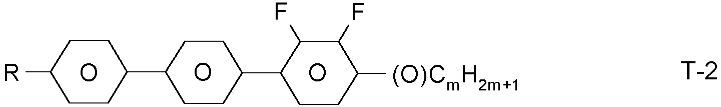 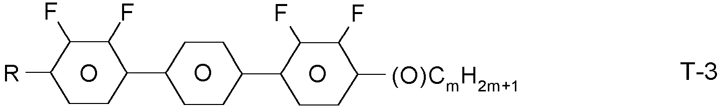 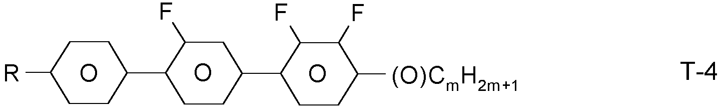 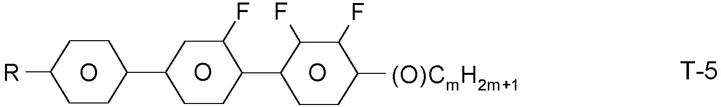 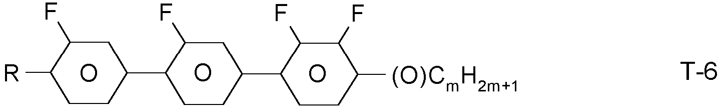 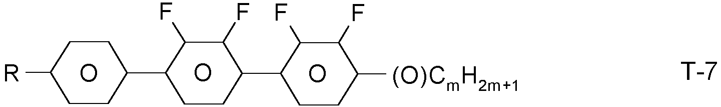 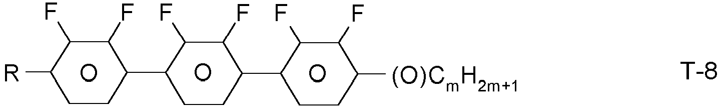 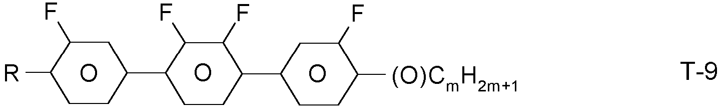 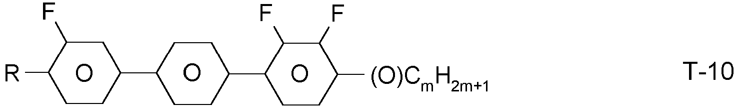 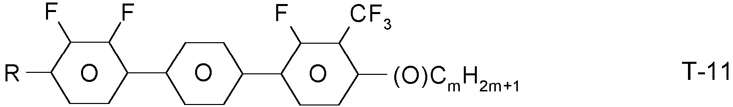 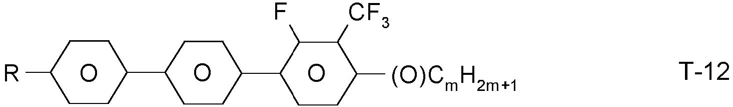 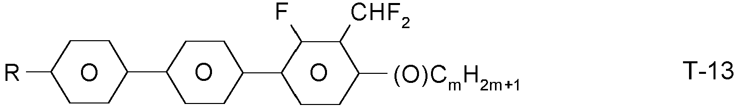 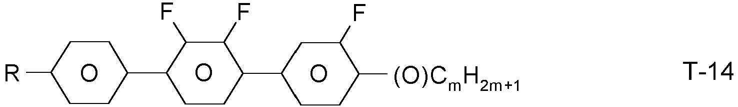 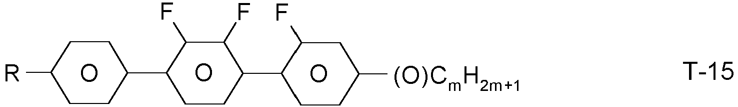 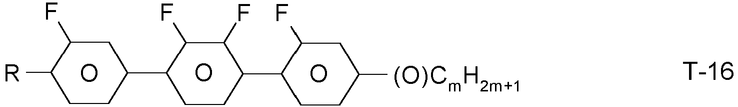 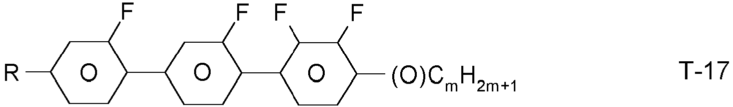 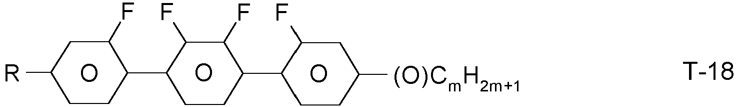 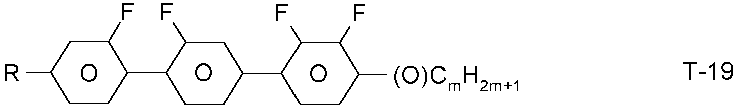 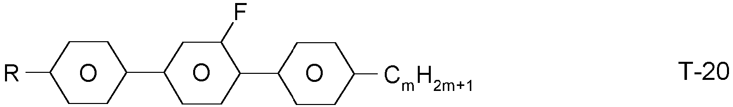 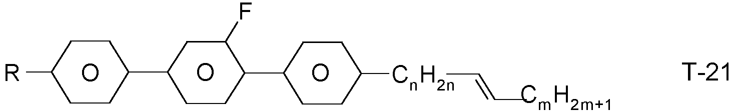 in which
R denotes a straight-chain alkyl or alkoxy radical having 1-7 C atoms or alkenyl having 2-7 C atoms, preferably methyl, ethyl, propyl, butyl, pentyl, hexyl, methoxy, ethoxy, propoxy, butoxy, pentoxy, and
m = 0, 1, 2, 3, 4, 5 or 6 and n denotes 0, 1, 2, 3 or 4.

The medium according to the invention preferably comprises the terphenyls of the formulae T-1 to T-21 in amounts of 2-30% by weight, in particular 5-20% by weight.

Particular preference is given to compounds of the formulae T-1, T-2, T-20 and T-21, very particularly T-1. In these compounds, R preferably denotes alkyl, furthermore alkoxy, each having 1-5 C atoms. In the compounds of the formula T-20, R preferably denotes alkyl or alkenyl, in particular alkyl. In the compound of the formula T-21, R preferably denotes alkyl.

The terphenyls are preferably employed in the mixtures according to the invention if the Δn value of the mixture is to be ≥ 0.1. Preferred mixtures comprise 2-20% by weight of one or more terphenyl compounds selected from the group of the compounds T-1 to T-21.

In a particularly preferred embodiment the liquid-crystalline medium according to the invention comprises one or more compounds of formula T-1, preferably in a total concentration in the range of from 3% by weight to 15% by weight, more preferably from 5% by weight to 10% by weight.

Preferably, the liquid-crystalline medium additionally comprises one or more biphenyls of the formulae B-1 to B-6 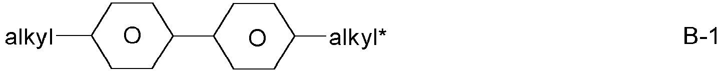 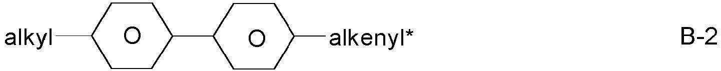 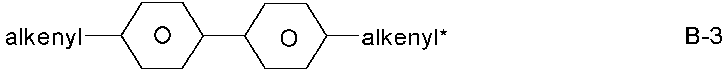 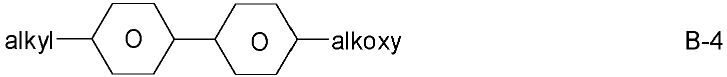 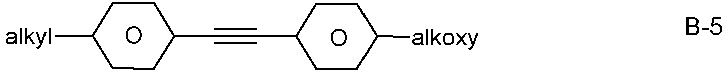 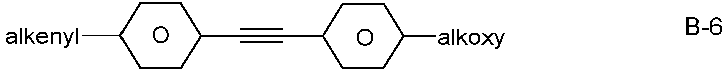 in which
- alkyl and alkyl*: each, independently of one another, denote a straight-chain alkyl radical having 1-6 C atoms,
- alkenyl and alkenyl*: each, independently of one another, denote a straight-chain alkenyl radical having 2-6 C atoms, and
- alkoxy: denotes a straight-chain alkoxy radical having 1-6 C atoms.

The proportion of the biphenyls of the formulae B-1 to B-6, preferably B-5, in the mixture as a whole is preferably at least 3% by weight, in particular 5% by weight or more, preferably in the range of from 7% by weight to 15% by weight.

Of the compounds of the formulae B-1 to B-4, the compounds of the formula B-2 are particularly preferred.

Very particularly preferred biphenyls are 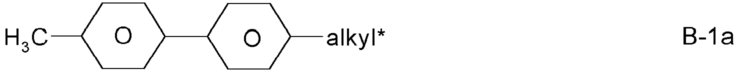 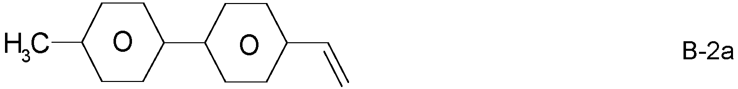 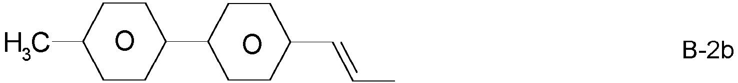 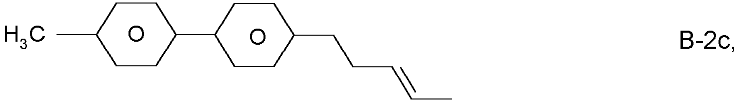 in which alkyl* denotes an alkyl radical having 1-6 C atoms. The medium according to the invention particularly preferably comprises one or more compounds of the formulae B-1a and/or B-2c.

Preferably, the liquid-crystalline medium comprises at least one compound of the formulae Z-1 to Z-7 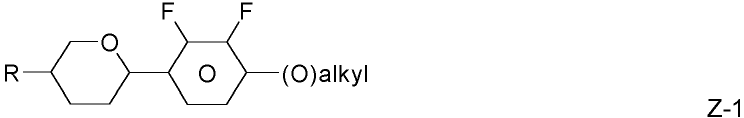 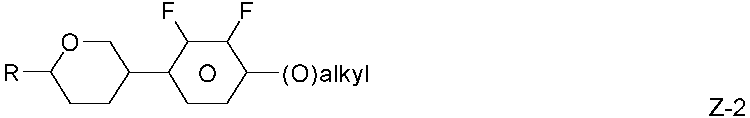 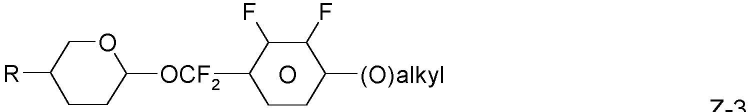 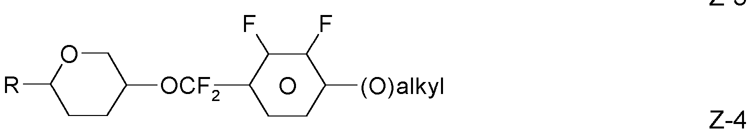 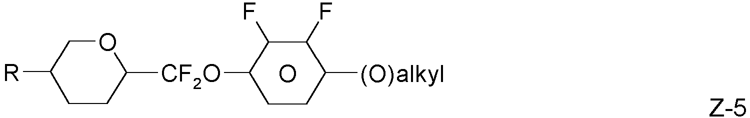 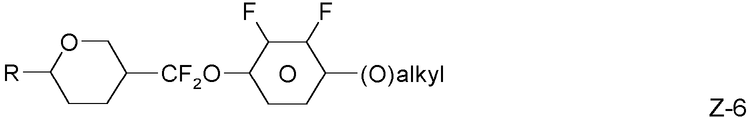 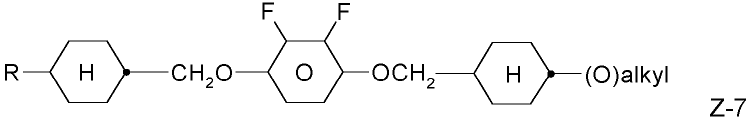 in which
- R: denotes a straight-chain alkyl or alkoxy radical having 1-7 C atoms or an alkenyl radical having 2-7 C atoms,
- alkyl: denotes an alkyl radical having 1-6 C atoms, and
- (O)alkyl: denotes alkyl or Oalkyl (alkoxy).

Preferably, the liquid-crystalline medium comprises at least one compound of the formulae O-1 to O-16 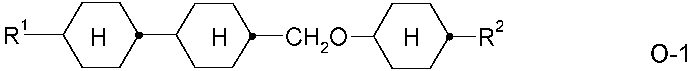 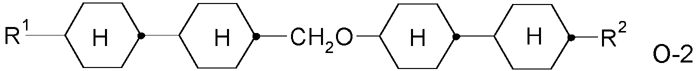 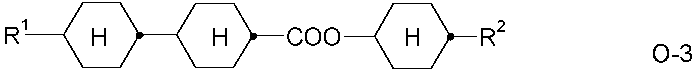 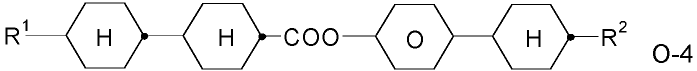 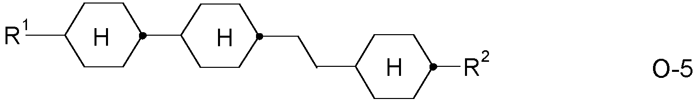 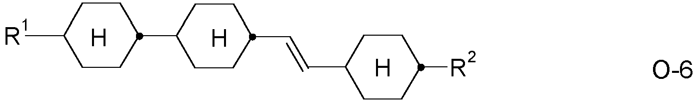 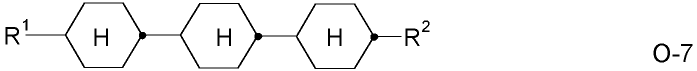 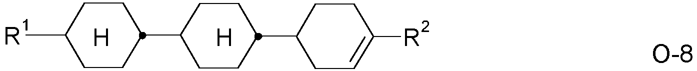 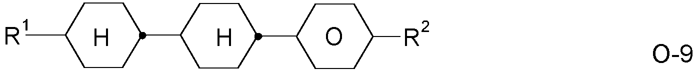 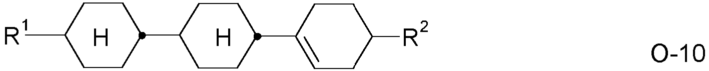 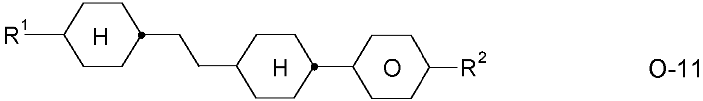 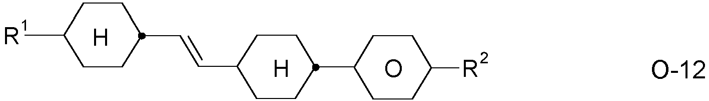 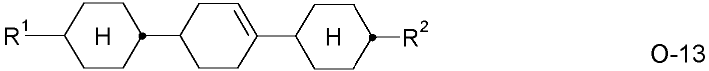 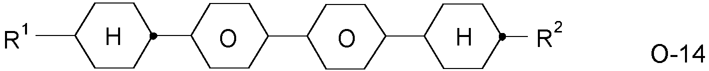 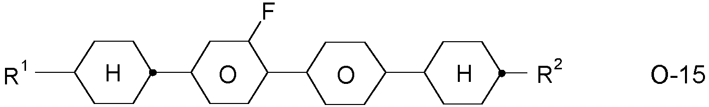 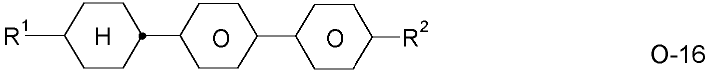 in which R¹ and R² have the meanings indicated for R^{2A}. R¹ and R² preferably each, independently of one another, denote straight-chain alkyl having 1-6 C atoms or R¹ denotes straight-chain alkyl having 1-6 C atoms and R² denotes alkenyl having 2-6 C atoms.

Preferred media comprise one or more compounds of the formulae O-1, O-3, O-4, O-5, O-9, 0-12, 0-14, 0-15, and/or 0-16.

Mixtures according to the invention very particularly preferably comprise the compounds of the formulae O-9, 0-12 and/or 0-16, in particular in amounts of 5% by weight to 30% by weight.

Preferred compounds of the formula O-9 are indicated below:

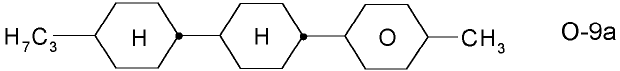

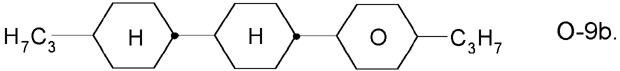

Preferably, the liquid-crystalline medium comprises one or more compounds of the formula BA 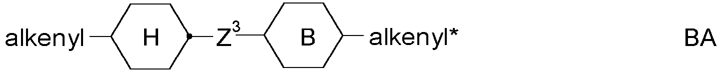 in which
- alkenyl und alkenyl*: each, independently of one another, denote a straight-chain alkenyl radical having 2-12 C atoms, 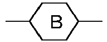 denotes 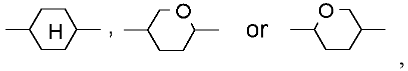
- Z³: denotes a single bond, -CH₂CH₂-, -CH=CH-, -CF₂O-, -OCF₂-, - CH₂O-, -OCH₂-, -COO-, -OCO-, -C₂F₄-, -C₄H₈ -, -CF=CF-.

Preferred compounds of the formula BA are indicated below:

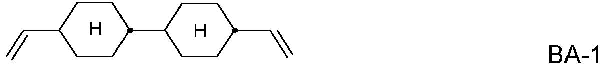

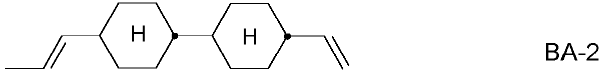

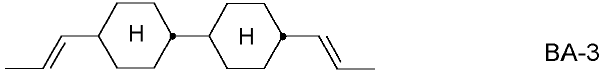

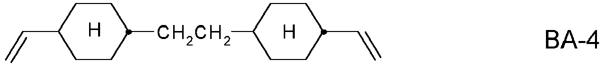

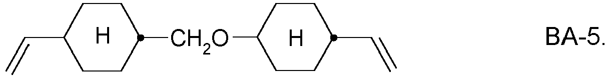

Preferred mixtures comprise one or more indane compounds of the formula In 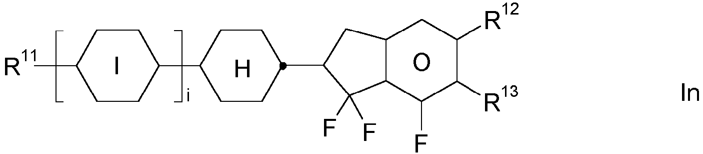 in which
- R¹¹, R¹², R¹³: each, independently of one another, denote a straight-chain alkyl, alkoxy, alkoxyalkyl or alkenyl radical having 1-6 C atoms or 2-6 C atoms respectively,
- R¹² and R¹³: additionally denote halogen, preferably F, 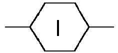 denotes 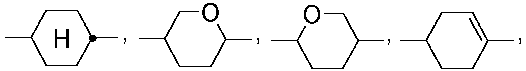 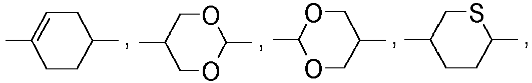
- i: 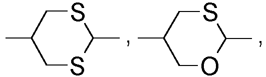 denotes 0, 1 or 2.

Preferred compounds of the formula In are the compounds of the formulae In-1 to In-16 indicated below:

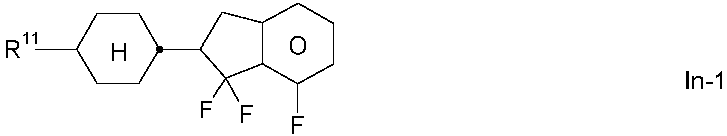

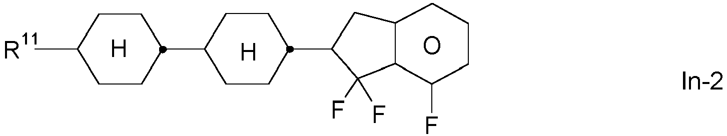

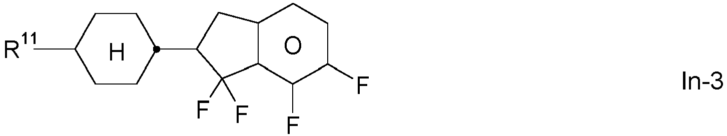

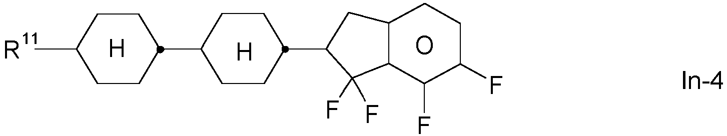

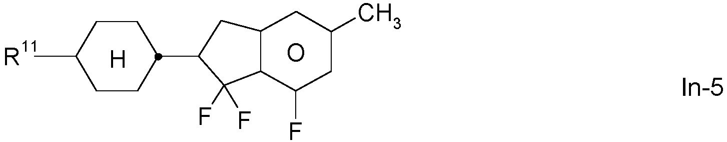

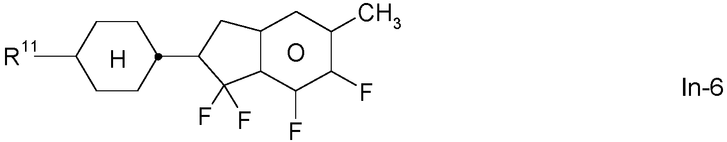

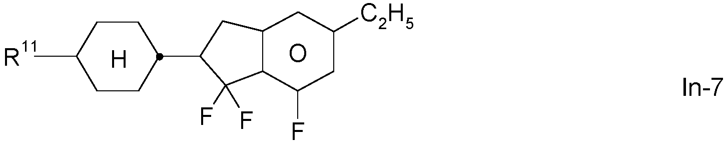

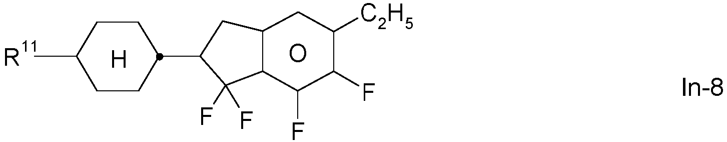

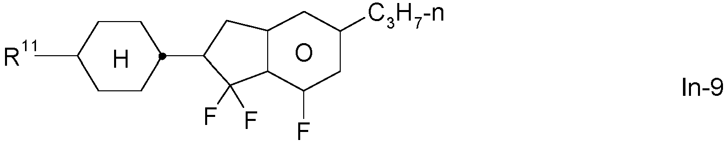

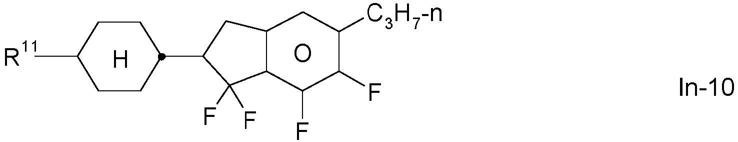

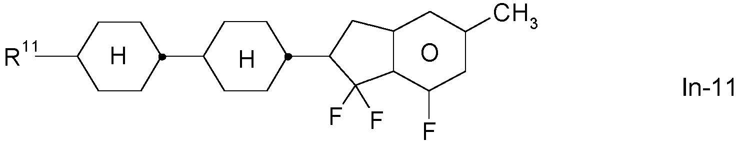

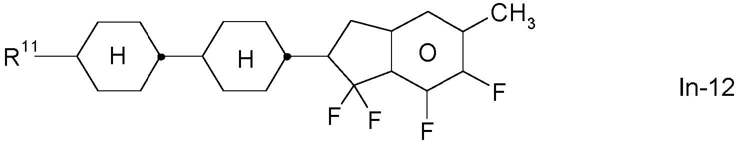

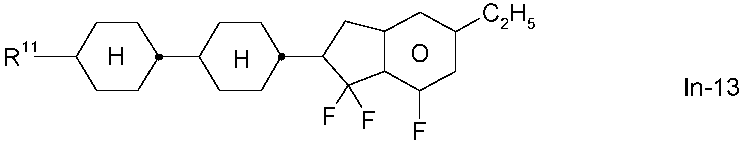

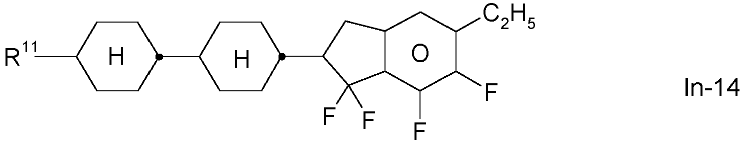

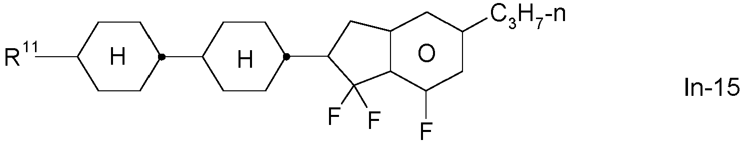

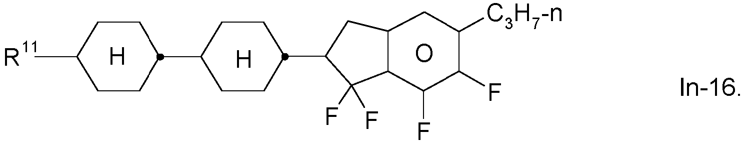

Particular preference is given to the compounds of the formulae In-1, In-2, In-3 and In-4.

The compounds of the formula In and the sub-formulae In-1 to In-16 are preferably employed in the mixtures according to the invention in concentrations of ≥ 5% by weight, in particular 5 - 30% by weight and very particularly preferably 5 - 25% by weight.

Preferably, the medium additionally comprises one or more compounds selected from the following formulae:

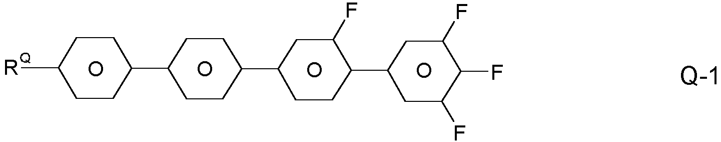

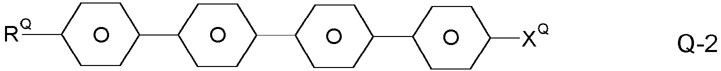

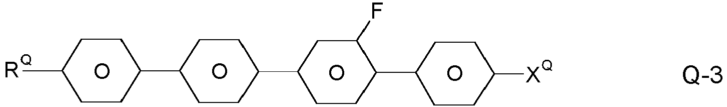

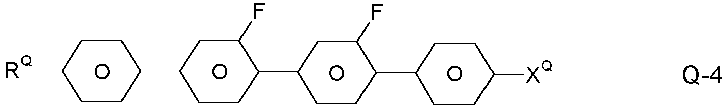

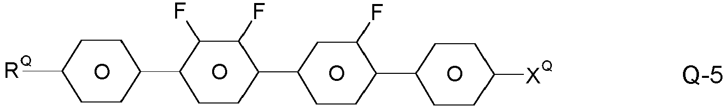

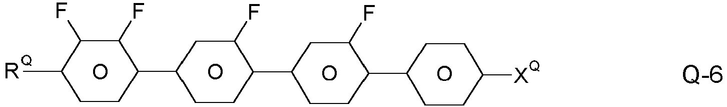

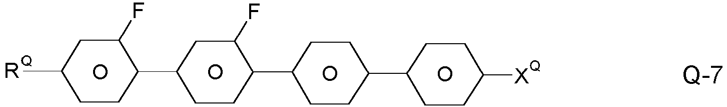

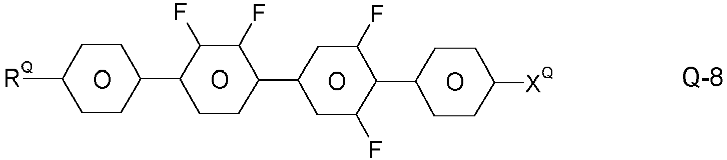

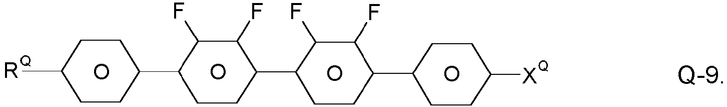

In the compounds of the formulae Q-1 to Q-9, R^{Q} and X^{Q} each, independently of one another, have the meanings of R^{2A} as defined for formula IIA. R^{Q} and X^{Q} preferably denote a straight-chain alkyl radical having 1-6 C atoms, in particular having 2-5 C atoms.

Particularly preferred mixture concepts are indicated in the following, where the acronyms used are explained in Tables 1-3 and in Table A below. Here, n and m each, independently of one another, are an integer from 1 to 9, preferably from 1 to 6.

The liquid-crystalline mixtures according to the invention preferably comprise
- the compound of the formula N in combination with one or more compounds of the formula IIB, preferably CPY-n-Om, in particular CPY-2-O2, CPY-3-O2 and/or CPY-5-O2, preferably in concentrations of > 5%, more preferably in the range of from 20% to 60%, very particularly from 30% to 50%,
   and/or
- CY-n-Om, preferably CY-3-O2, CY-3-O4, CY-5-O2 and/or CY-5-O4, preferably in concentrations of > 5%, more preferably in the range of from 5% to 25%, in particular from 10% to 15%,
   and/or
- CCY-n-Om, preferably CCY-4-O2, CCY-3-O2, CCY-3-O3, CCY-3-O1 and/or CCY-5-O2, preferably in concentrations of > 5%, more preferably in the range of from 10% to 30%,
   and/or
- CPY-n-Om and in addition optionally PTY-n-Om, preferably in a total concentration in the range of from 5% to 50%, more preferably from 10% to 40%, particularly preferably from 20% to 30%,
   and/or
- CPY-n-Om and PY-n-Om, preferably CPY-2-O2 and/or CPY-3-O2 and PY-3-O2, preferably in concentrations of 10% to 40%,
   and/or
- CBC-nm and/or CBC-nmF, preferably in a total concentration of 2% to 10%,
   and/or
- PGIY-n-Om, preferably in a total concentration in the range of from 3% to 15%,
   and/or
- PGIGI-n-F, preferably in a total concentration in the range of from 3% to 15%,
   and/or
- PTP-n-Om, preferably in a total concentration in the range of from 5% to 15%.

Besides one or more compounds of the formula I, the media preferably comprise 4 to 15, in particular 5 to 12, and particularly preferably < 10, compounds of the formulae IIA, IIB and/or IIC.

Besides compounds of the formula I and the compounds of the formulae IIA, IIB and/or IIC, other constituents may also be present, for example in an amount of up to 45% of the mixture as a whole, but preferably up to 35%, in particular up to 10%.

In addition, these liquid-crystal phases may also comprise more than 18 components, preferably 18 to 25 components.

Polymerisable compounds, either non-mesogenic or mesogenic, the latter referred to as reactive mesogens (RMs), may furthermore be added to the mixtures according to the invention, preferably in concentrations of 0.1% by weight to 40% by weight.

The mixtures according to the invention may furthermore comprise conventional additives, such as, for example, stabilizers, antioxidants, UV absorbers, nanoparticles, microparticles, etc.

In a particularly preferred embodiment the liquid-crystalline medium does not contain tolanes. Herein, tolanes refers to compounds which comprise a moiety in which unsubstituted or substituted phenylene groups are attached to both ends of a carbon-carbon triple bond.

In a further preferred embodiment the liquid-crystalline medium does not contain compounds having -C≡C- bonds.

The liquid-crystalline medium according to the invention has a clearing point of 90°C or more.

The clearing point marks the temperature at which a phase transition from a nematically liquid crystalline state to an isotropic state occurs. The clearing point, in particular the phase transition temperature between the nematic phase and the isotropic phase, can be measured and determined by commonly known methods, e.g. using a Mettler oven or a hot-stage under a polarizing microscope, and herein preferably is determined using a Mettler oven.

The liquid-crystalline medium preferably has a clearing point, preferably a phase transition from a nematic liquid crystalline state to an isotropic state, above 95°C, more preferably above 100°C, particularly preferably above 105°C, very particularly preferably above 110°C, and most preferably above 115°C. In an embodiment the liquid-crystalline medium as used in the present invention preferably has a clearing point in the temperature range from 90°C to 170°C, more preferably from 100°C to 160°C, even more preferably from 105°C to 150°C and in particular from 110°C to 140°C.

The liquid-crystalline medium according to the invention or the nematic host preferably exhibit very broad nematic phase ranges. In particular, the liquid-crystalline medium as used in the switching element preferably has a nematic phase at the operating temperature of the switching element. It is particularly preferably nematically liquid crystalline in a range of +/-20°C, very particularly preferably in a range of +/-30° C above and below the operating temperature of the switching element. Preferably, the liquid-crystalline media have favourable values of the capacitive threshold, relatively high values of the voltage holding ratio and at the same time very good low-temperature stabilities at -20°C and -30°C, as well as low rotational viscosities and short response times and in addition preferably exhibit improvements in terms of the rotational viscosity γ₁.

All physical properties and physicochemical or electro-optical parameters are determined by generally known methods, in particular according to "Merck Liquid Crystals, Physical Properties of Liquid Crystals", Status Nov. 1997, Merck KGaA, Germany and are given for a temperature of 20 °C, unless explicitly stated otherwise.

Herein, unless explicitly stated otherwise, all concentrations are given in weight percent, i.e. per cent data denote per cent by weight, and relate to the respective complete mixture, and all temperature values indicated are in °C.

Transmission and scattering of light preferably refers to the transmission and scattering of electromagnetic radiation in the spectral range from 380 nm to 780 nm.

The liquid crystalline medium according to the invention has a negative dielectric anisotropy Δε, i.e. perpendicular to the electric field.

Above and below, Δε denotes the dielectric anisotropy, wherein Δε = ε∥ - ε_{⊥}. The dielectric anisotropy Δε is preferably determined at 20°C and 1 kHz. The liquid crystalline medium preferably has a dielectric anisotropy Δε in the range of from -0.5 to -20, preferably from -1.0 to -10.

It is particularly preferred that the liquid-crystalline medium exhibits a dielectric anisotropy Δε in the range of from -5.0 to -1.0. It has surprisingly been found that even at a relatively small magnitude of the dielectric anisotropy an effective modulation medium can be obtained which in addition to the desired efficient dynamic scattering can provide further benefits, e.g. in terms of the operational reliability and stability.

Above and below, Δn denotes the optical anisotropy, wherein Δn = nₑ - nₒ, and wherein preferably the optical anisotropy Δn is determined at 20°C and at a wavelength of 589.3 nm. The liquid crystalline medium preferably has an optical anisotropy Δn of at least 0.15, more preferably in the range of from 0.15 to 0.30, even more preferably from 0.18 to 0.27 and in particular from 0.20 to 0.25.

The provision of a relatively large optical anisotropy of the liquid-crystalline medium can favourably contribute to obtaining an efficient and effective modulation material.

For the present invention, the term "threshold voltage" relates to the capacitive threshold (V₀), also known as the Freedericks threshold, unless explicitly indicated otherwise.

In addition, the liquid-crystal media according to the invention preferably have high values for the voltage holding ratio in liquid-crystal cells.

In the switching element according to the invention, the switching layer comprising the liquid-crystalline medium preferably has a thickness in the range from 1 µm to 100 µm, more preferably from 2 µm to 50 µm, even more preferably from 4 µm to 40 µm and in particular from 10 µm to 25 µm.

To maintain a proper thickness of the switching layer, spacers may be included within the cell gap of the switching layer. Typically, the spacers have a spherical shape with a diameter in the range of the cell gap. For example, non-conductive spacers having a spherical shape with a predetermined diameter made of polymer or glass may be used. In some embodiments it may be useful to provide sticky spacers, i.e. spacers which have some intrinsic adhesive characteristic to better adhere to the surface. It may also be useful to use black spacers, e.g. to avoid or minimize undesired light leakage. It can be especially beneficial to use spacers which are black and sticky. Alternatively, the cell thickness may be set or maintained by other suitable means, e.g. by using column spacers. The column spacers may also be formed to give compartments, thus optionally allowing for free-cuttable structures.

The substrates of the switching element may comprise, preferably consist of, glass or a polymer, in particular glass, polyethylene terephthalate (PET), polyethylene naphthalate (PEN), polyvinylbutyral (PVB), polymethyl methacrylate (PMMA), polycarbonate (PC), polyimide (PI), COP (cyclic olefin polymers) or TAC (triacetylcellulose). In a particularly preferred embodiment glass substrates are used.

Electrical switching in accordance with the invention is achieved by providing the substrates, e.g. glass substrates or plastic substrates, with electrodes. Preferably, electrically conductive layers are provided on the substrates, wherein the conductive layers comprise or are formed of a transparent conductive material, e.g. a transparent conductive oxide, preferably indium tin oxide (ITO), SnO2:F or doped zinc oxide, in particular ITO, or a conductive polymer such as poly(3,4-ethylenedioxythiophene) (PEDOT), poly(3,4-ethylenedioxythiophene) polystyrene sulfonate (PEDOT:PSS) or poly(4,4-dioctyl cyclopentadithiophene), or a thin transparent metal and/or metal oxide layer, for example silver. It is preferred that the transparent conductive material is a transparent conductive oxide, more preferably indium tin oxide. The transparent electrode is preferably applied to the substrate by a coating process. For example, ITO may be sputtered to typically obtain a layer thickness in the range of from 5 nm to 250 nm or a sheet resistance in the range of from 5 Ω/□ to 500 Ω/□.

In a preferred embodiment the switching element is switchable from a first transparent state with low haze to a second transparent state with low haze and less transmission than the first transparent state at a first voltage, and in addition the switching element is switchable to an opaque state with high haze at a second voltage higher than the first voltage.

In the following drawings are described which further illustrate the present invention.

### Brief description of the drawings

The drawings show:
- Fig. 1: shows the change of the total transmittance of a test cell comprising a comparative liquid-crystalline medium with the applied voltage.
- Fig. 2: shows the change of the haze of a test cell comprising a comparative liquid-crystalline medium with the applied voltage.
- Fig. 3: shows the change of the total transmittance of a test cell comprising a liquid-crystalline medium according to the invention with the applied voltage.
- Fig. 4: shows the change of the haze of a test cell comprising a liquid-crystalline medium according to the invention with the applied voltage.

Herein and in the Working Examples, the structures of the liquid-crystal compounds are indicated by means of acronyms. Unless indicated otherwise, the transformation into chemical formulae is carried out in accordance with Tables 1-3. All radicals CₙH₂ₙ₊₁, CₘH₂ₘ₊₁ and C_{m'}H_{2m'+1} or CₙH₂ₙ and CₘH₂ₘ are straight-chain alkyl radicals or alkylene radicals, in each case having n, m, m' or z C atoms respectively. n, m, m' and z each, independently of one another, denote 1, 2, 3, 4, 5, 6, 7, 8, 9, 10, 11 or 12, preferably 1, 2, 3, 4, 5 or 6. In Table 1 the ring elements of the respective compound are coded, in Table 2 the bridging members are listed and in Table 3 the meanings of the symbols for the left-hand or right-hand side chains of the compounds are indicated.

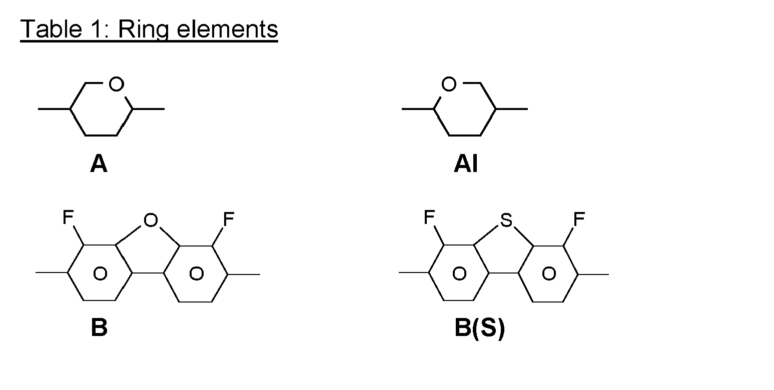

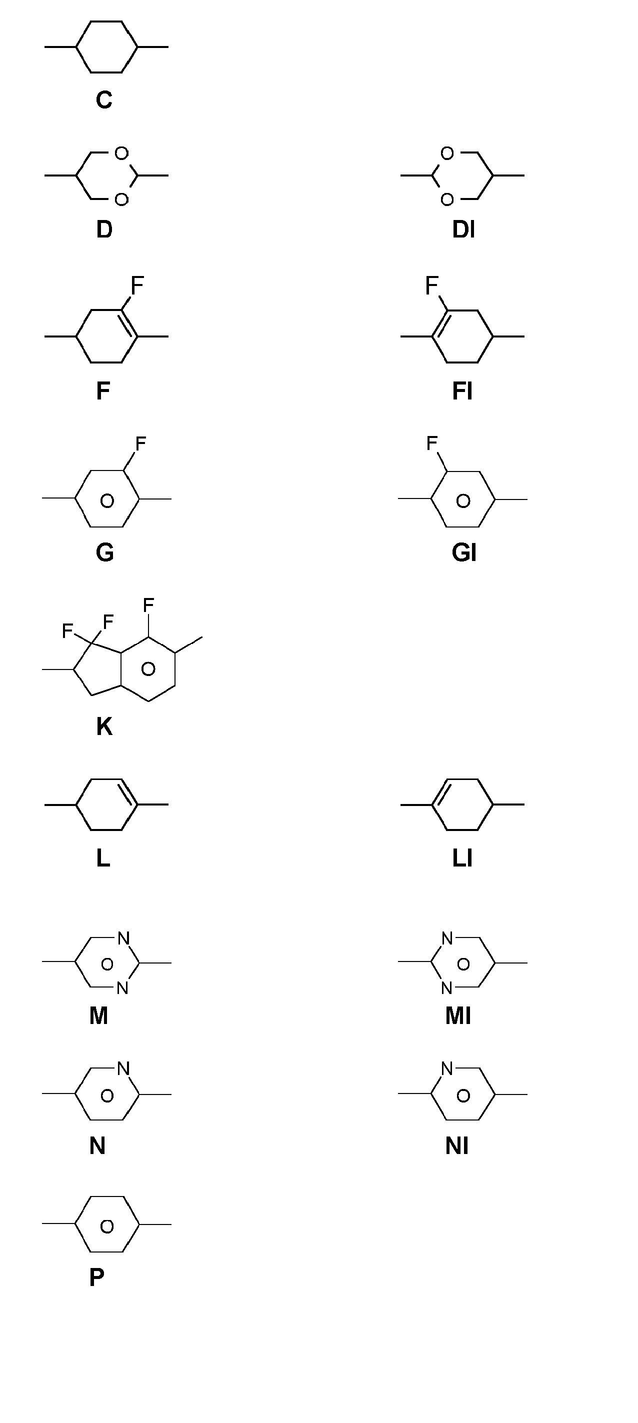

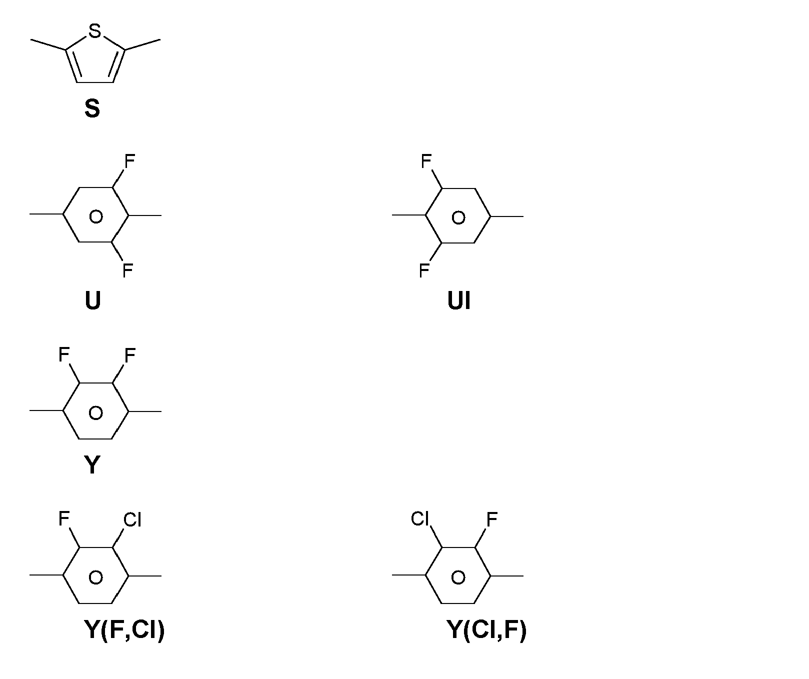

**Table 2: Bridging members**

| | | | |
|---|---|---|---|
| **E** | -CH₂CH₂- | | |
| **V** | -CH=CH- | | |
| **T** | -C=C- | | |
| **W** | -CF₂CF₂- | | |
| **Z** | -COO- | **ZI** | -OCO- |
| **O** | -CH₂O- | **OI** | -OCH₂- |
| **Q** | -CF₂O- | **QI** | -OCF₂- |

**Table 3: Side chains**

| Left-hand side chain | | Right-hand side chain | |
|---|---|---|---|
| **n-** | CₙH₂ₙ₊₁- | **-n** | -CₙH₂ₙ₊₁ |
| **nO-** | CₙH₂ₙ₊₁-O- | **-On** | -O-CₙH₂ₙ₊₁ |
| **V-** | CH₂=CH- | **-V** | -CH=CH₂ |
| **nV-** | CₙH₂ₙ₊₁-CH=CH- | **-nV** | -CₙH₂ₙ-CH=CH₂ |
| **Vn-** | CH₂=CH- CₙH₂ₙ- | **-Vn** | -CH=CH-CₙH₂ₙ₊₁ |
| **nVm-** | CnH₂ₙ₊₁-CH=CH-CₘH₂ₘ- | **-nVm** | -CₙH₂ₙ-CH=CH-CₘH₂ₘ₊₁ |
| **N-** | N=C- | **-N** | -C≡N |
| **F-** | F- | **-F** | -F |
| **Cl-** | Cl- | **-Cl** | -Cl |
| **M-** | CFH₂- | **-M** | -CFH₂ |
| **D-** | CF₂H- | **-D** | -CF₂H |
| **T-** | CF₃- | **-T** | -CF₃ |
| **MO-** | CFH₂O- | **-OM** | -OCFH₂ |
| **DO-** | CF₂HO- | **-OD** | -OCF₂H |
| **TO-** | CF₃O- | **-OT** | -OCF₃ |
| **T-** | CF₃- | **-T** | -CF₃ |
| **A-** | H-C≡C- | **-A** | -C=C-H |

Among and/or besides the compounds of the formulae IIA and/or IIB and/or IIC and one or more compounds of the formula I, the mixtures according to the invention preferably comprise one or more of the compounds from Table A indicated below.

**Table A**

| |
|---|
| The following abbreviations are used: |
| n, m, m', z each, independently of one another, denote 1, 2, 3, 4, 5, 6, 7, 8 or 9, preferably 1, 2, 3, 4, 5 or 6; |
| (O)CₘH₂ₘ₊₁ means OCₘH₂ₘ₊₁ or CₘH₂ₘ₊₁ |
| 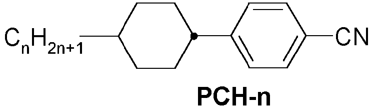 |
| 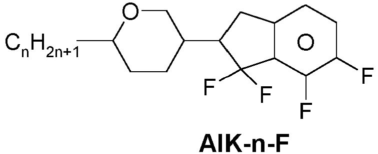 |
| 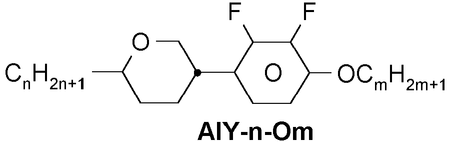 |
| 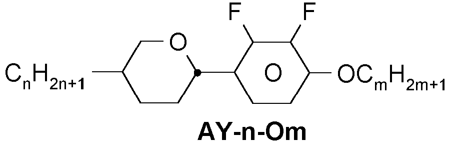 |
| 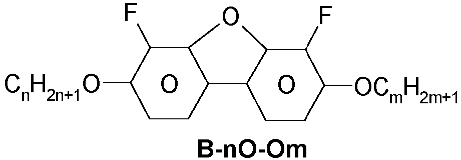 |
| 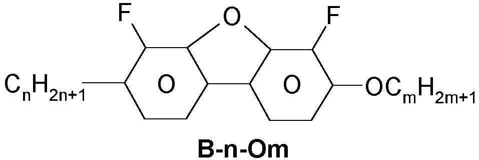 |
| 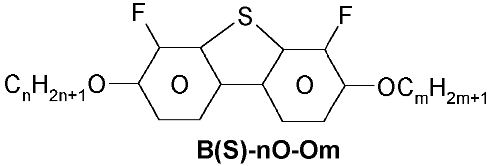 |
| 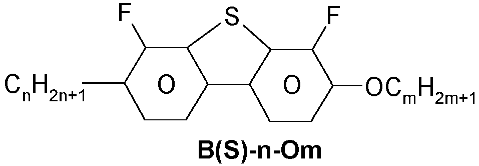 |
| 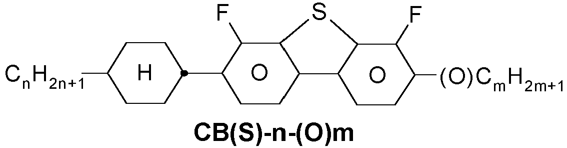 |
| 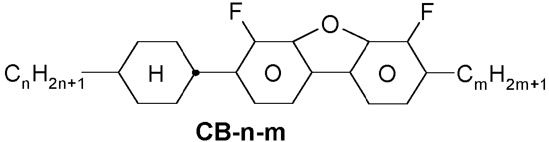 |
| 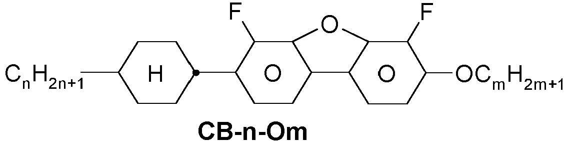 |
| 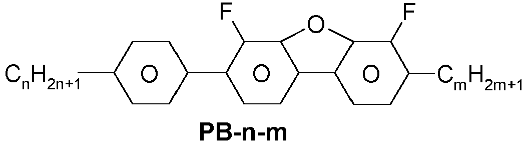 |
| 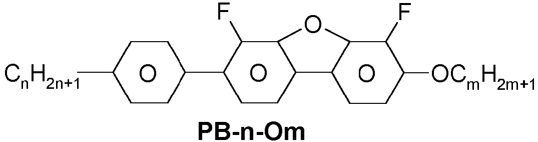 |
| 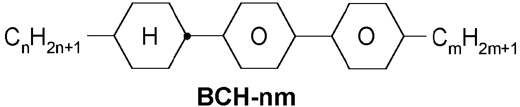 |
| 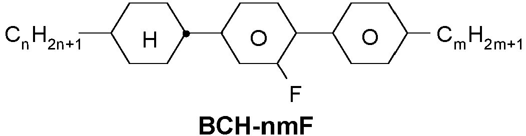 |
| 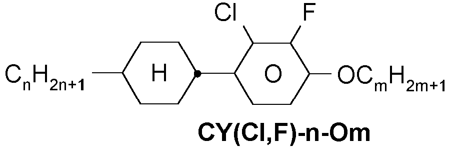 |
| 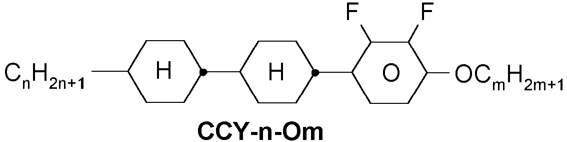 |
| 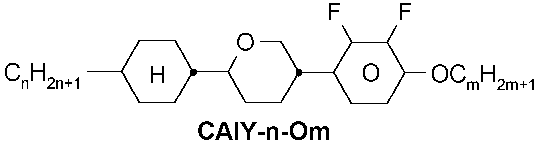 |
| 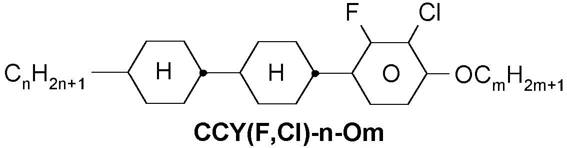 |
| 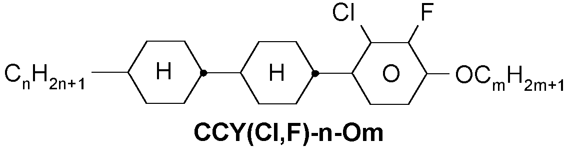 |
| 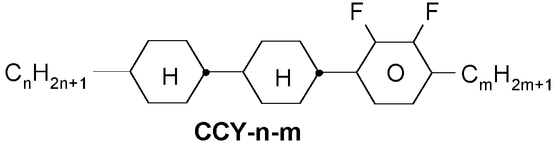 |
| 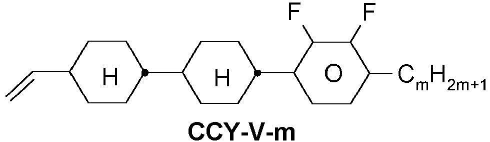 |
| 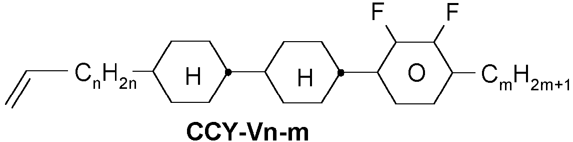 |
| 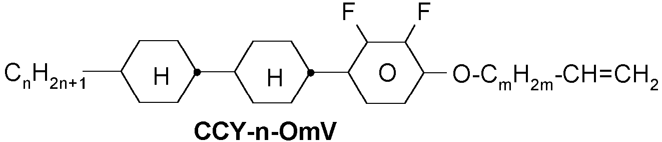 |
| 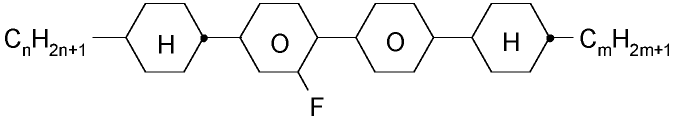 |
| 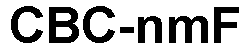 |
| 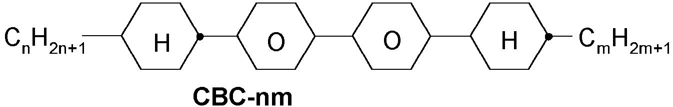 |
| 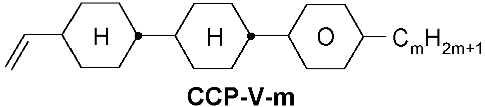 |
| 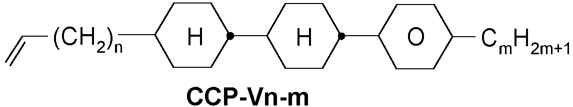 |
| 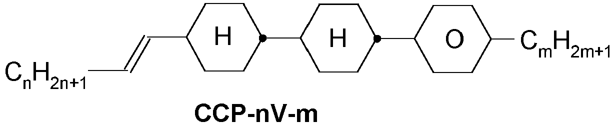 |
| 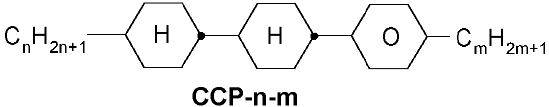 |
| 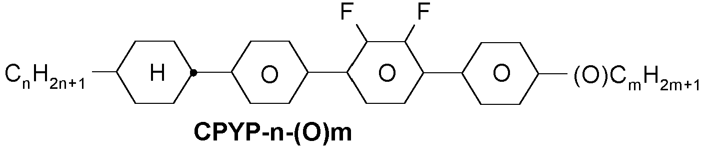 |
| 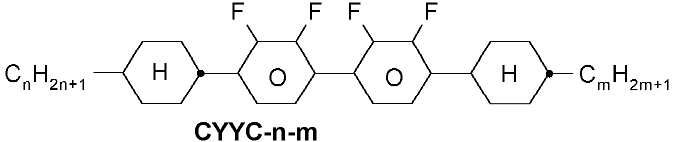 |
| 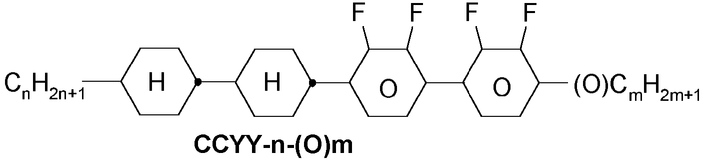 |
| 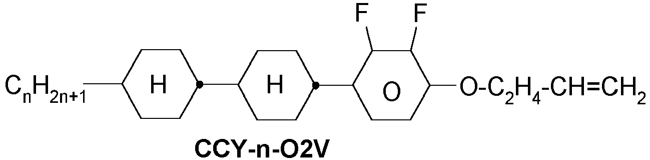 |
| 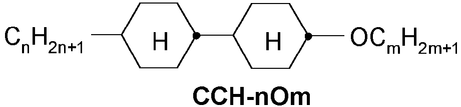 |
| 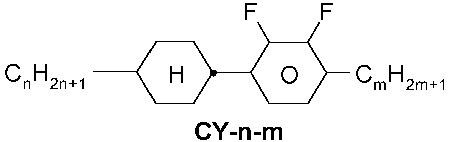 |
| 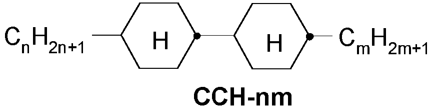 |
| 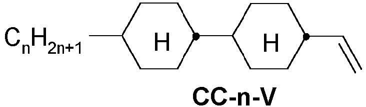 |
| 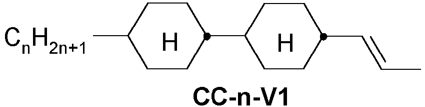 |
| 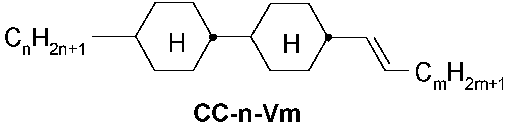 |
| 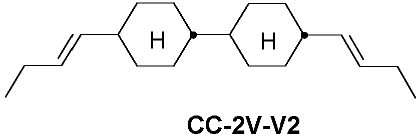 |
| 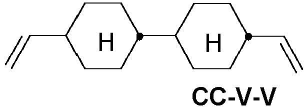 |
| 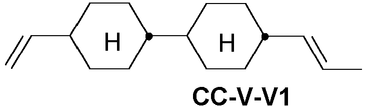 |
| 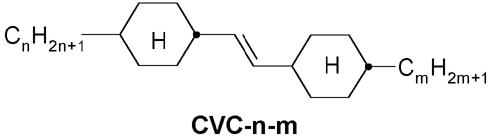 |
| 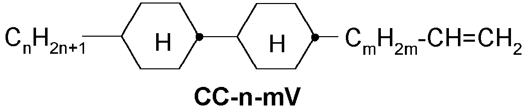 |
| 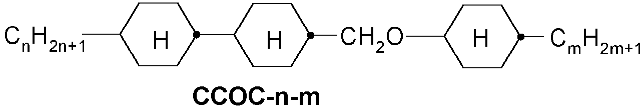 |
| 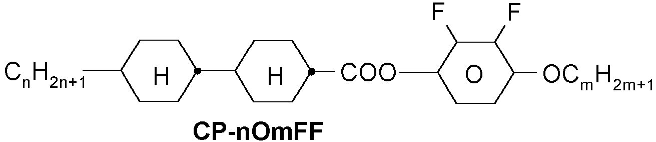 |
| 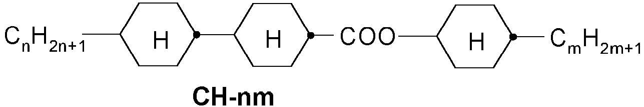 |
| 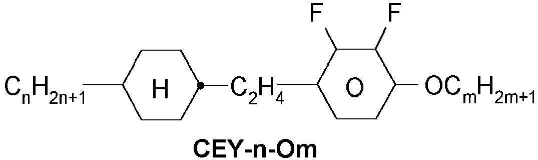 |
| 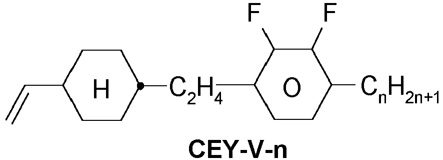 |
| 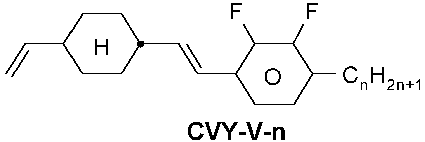 |
| 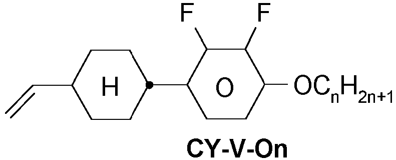 |
| 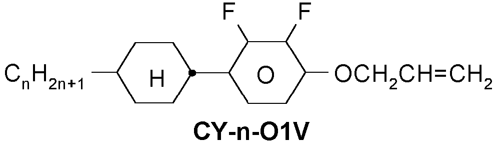 |
| 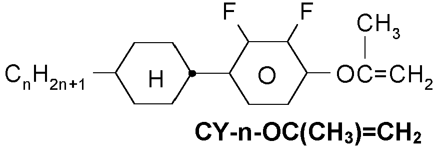 |
| 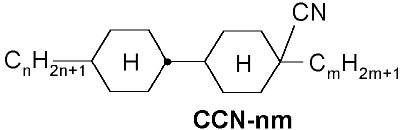 |
| 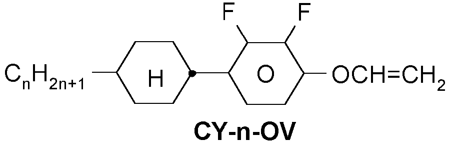 |
| 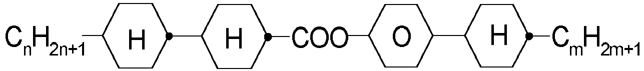 |
| 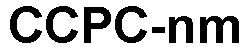 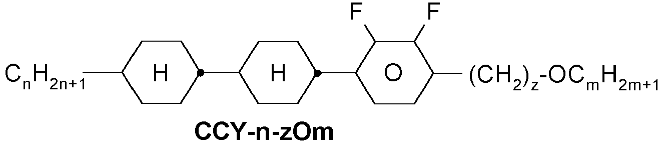 |
| 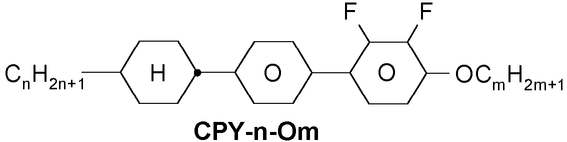 |
| 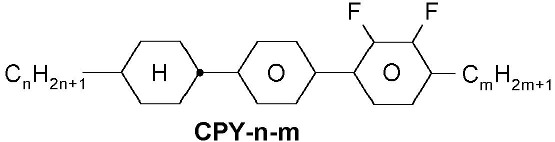 |
| 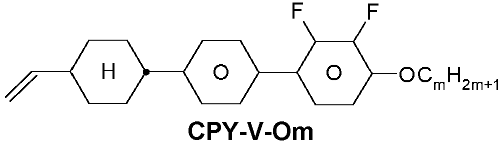 |
| 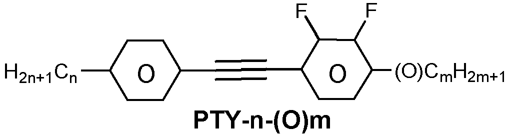 |
| 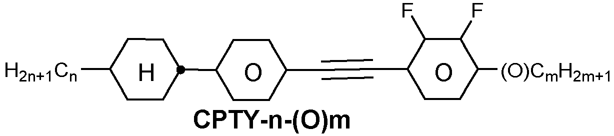 |
| 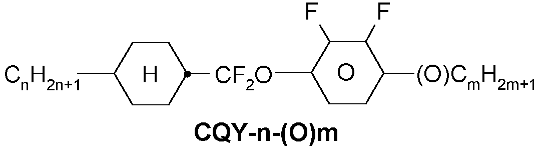 |
| 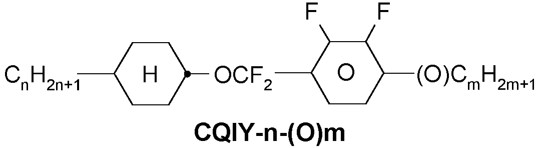 |
| 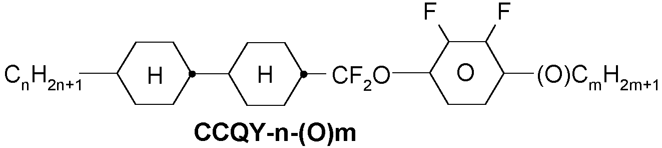 |
| 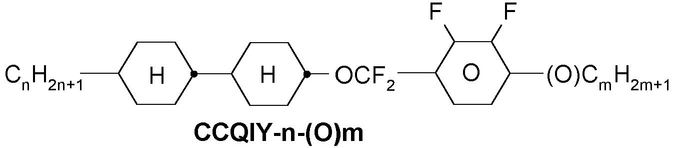 |
| 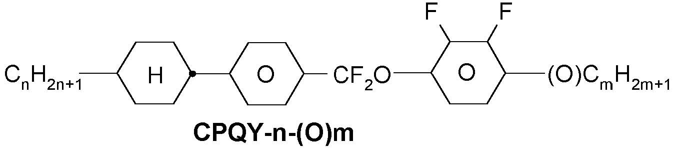 |
| 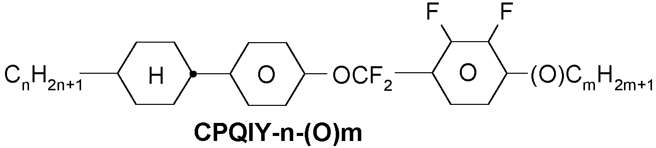 |
| 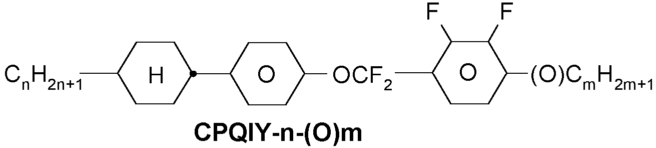 |
| 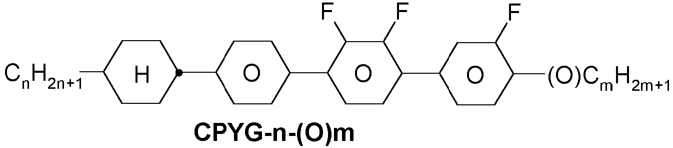 |
| 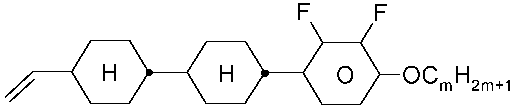 |
| 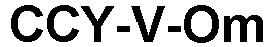 |
| 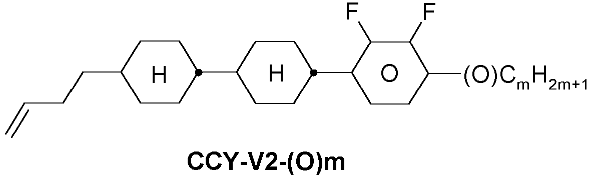 |
| 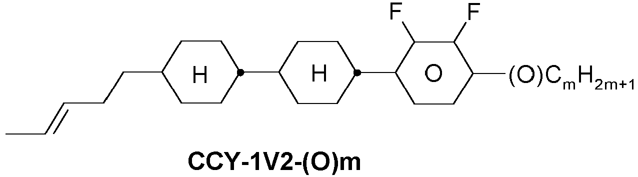 |
| 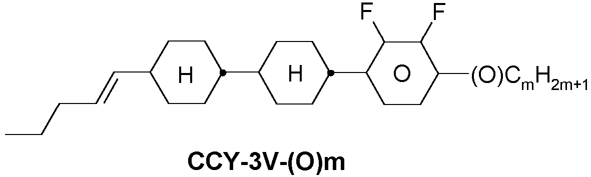 |
| 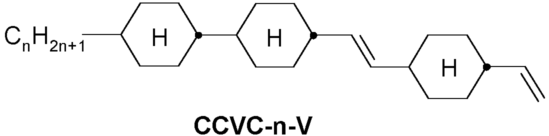 |
| 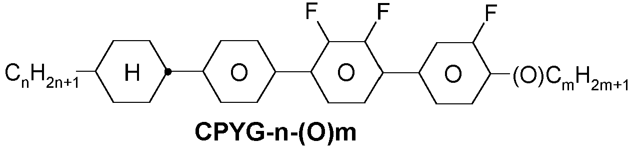 |
| 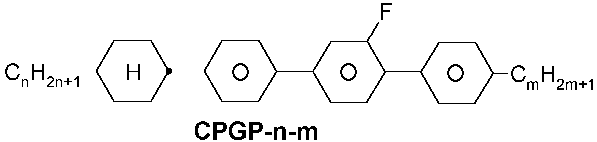 |
| 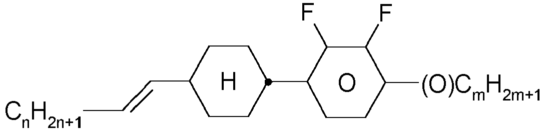 |
| 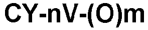 |
| 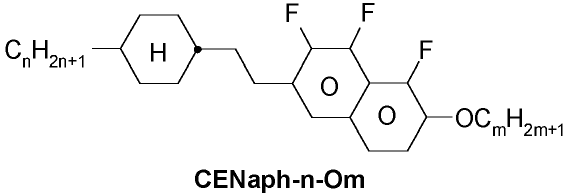 |
| 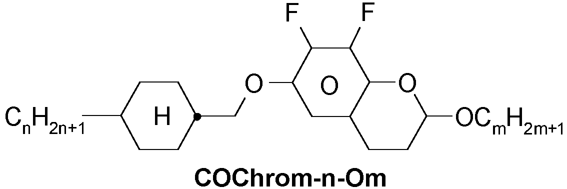 |
| 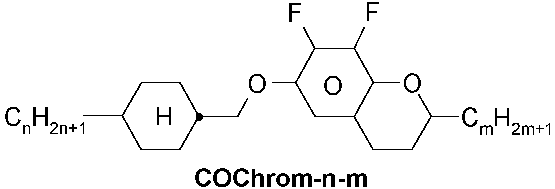 |
| 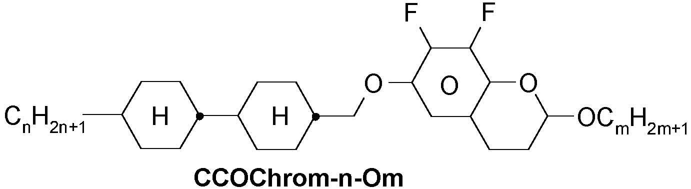 |
| 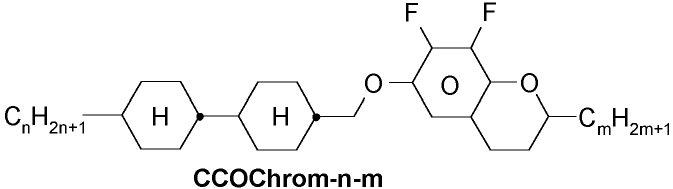 |
| 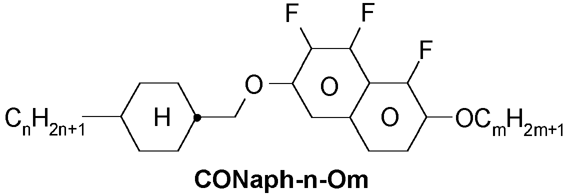 |
| 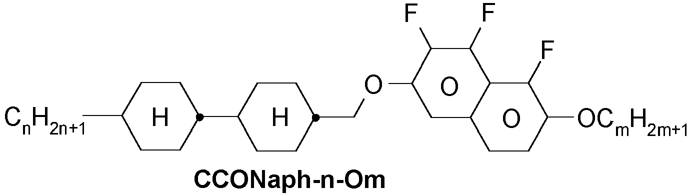 |
| 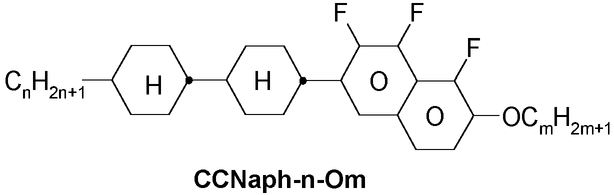 |
| 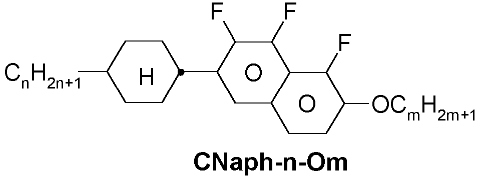 |
| 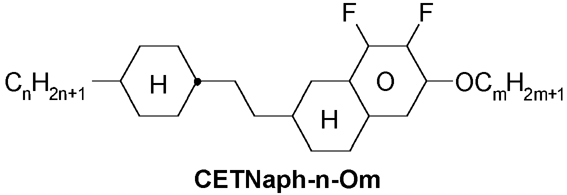 |
| 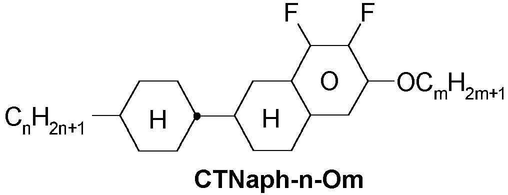 |
| 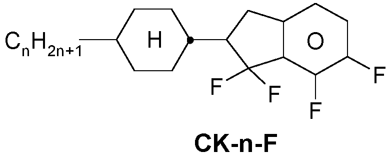 |
| 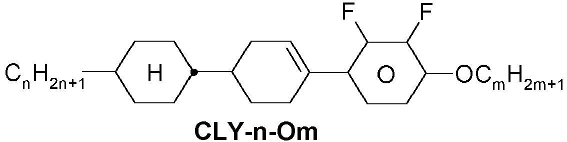 |
| 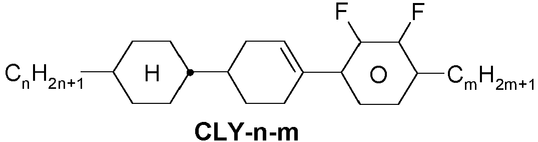 |
| 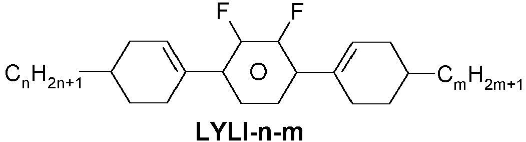 |
| 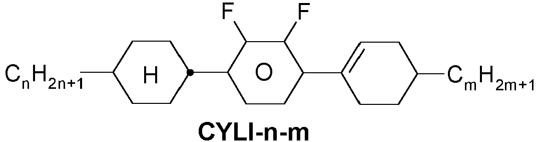 |
| 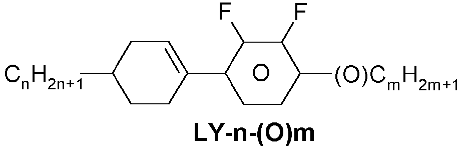 |
| 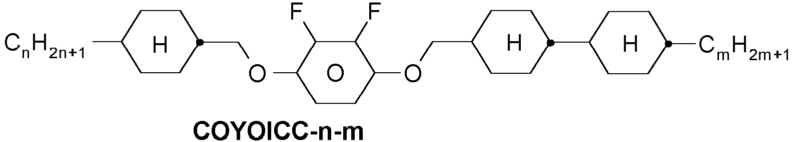 |
| 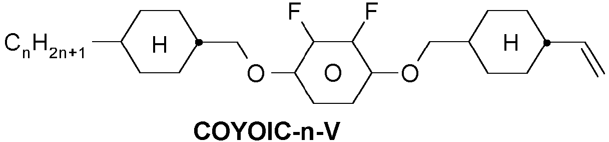 |
| 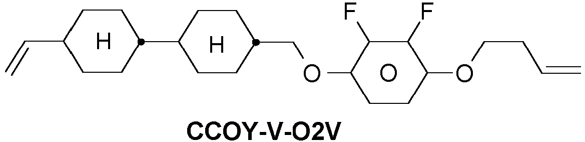 |
| 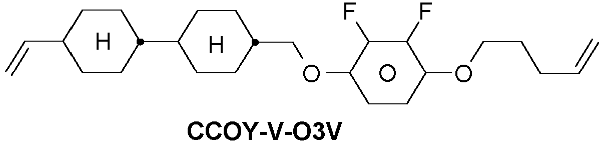 |
| 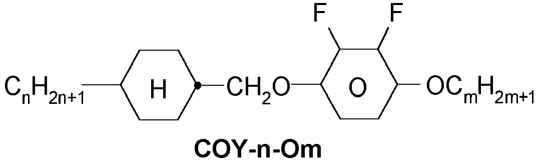 |
| 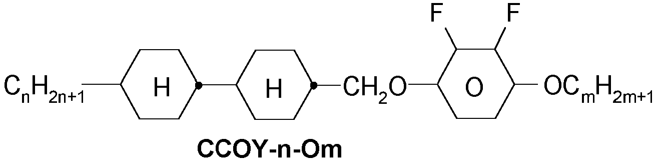 |
| 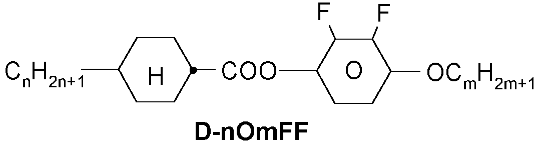 |
| 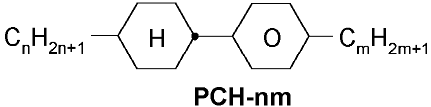 |
| 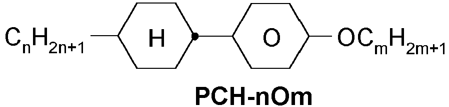 |
| 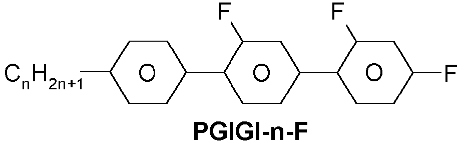 |
| 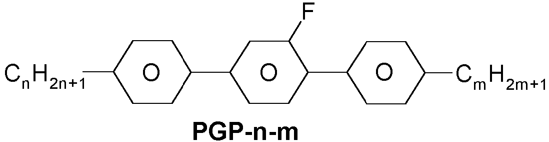 |
| 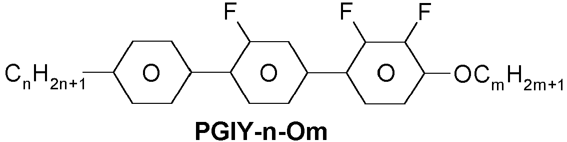 |
| 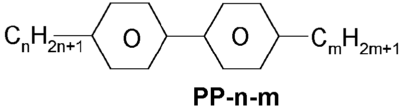 |
| 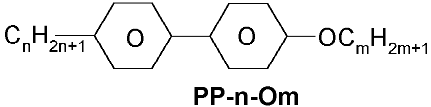 |
| 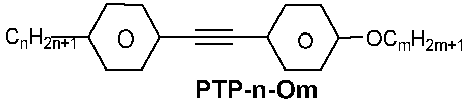 |
| 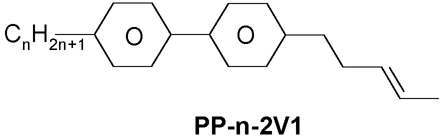 |
| 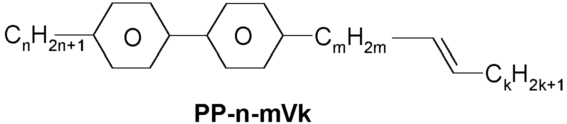 |
| 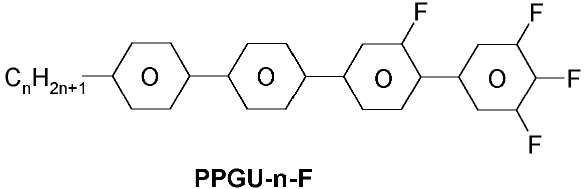 |
| 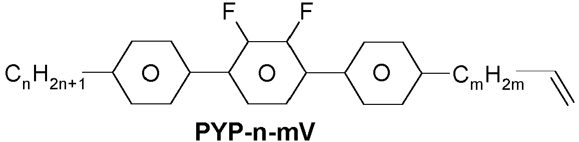 |
| 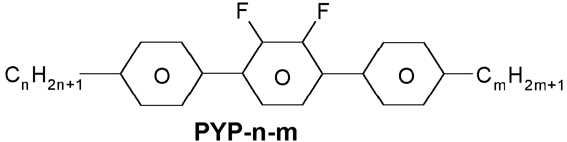 |
| 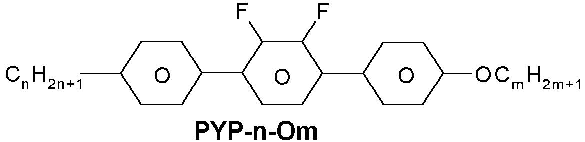 |
| 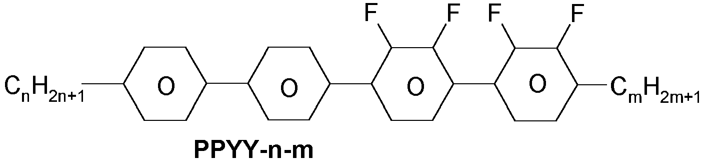 |
| 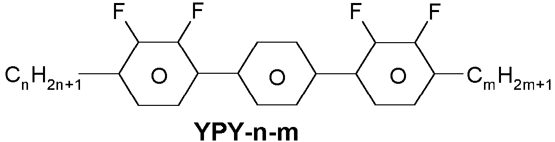 |
| 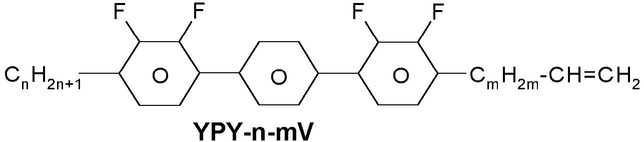 |
| 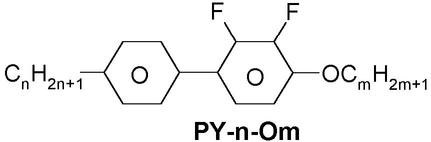 |
| 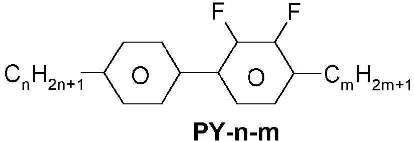 |
| 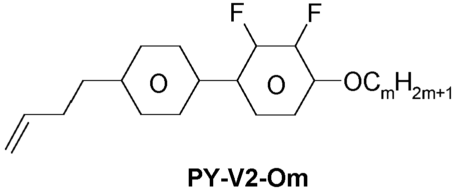 |
| 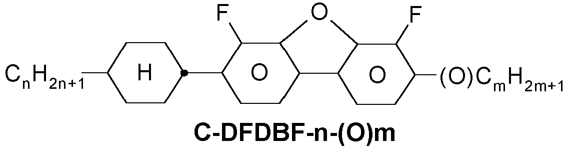 |
| 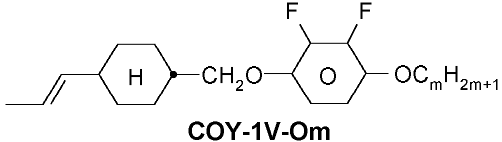 |
| 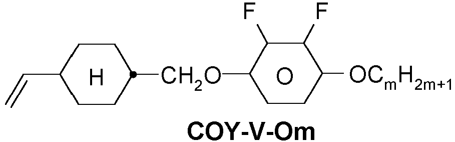 |
| 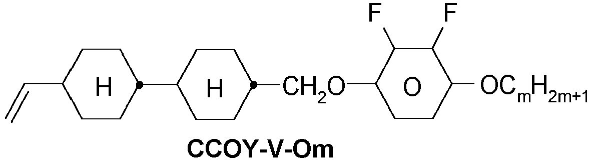 |
| 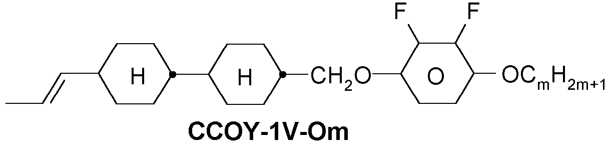 |
| 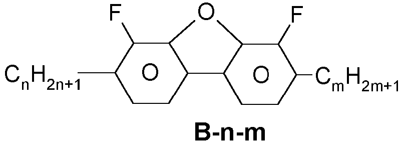 |
| 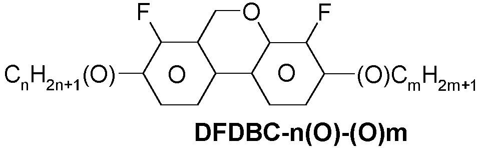 |
| 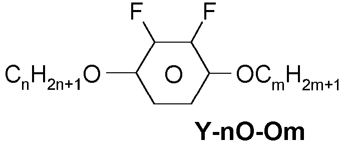 |
| 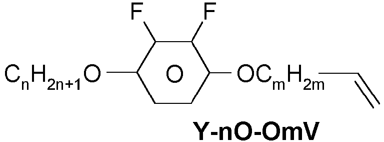 |
| 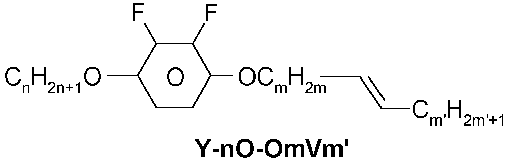 |
| 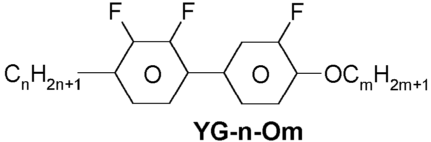 |
| 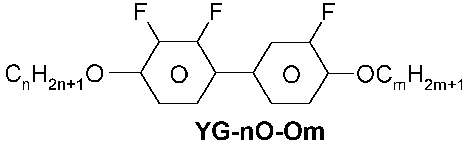 |
| 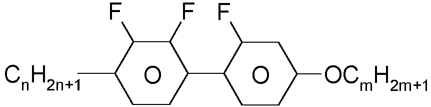 |
| 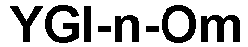 |
| 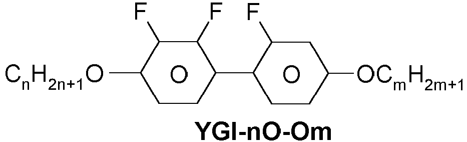 |
| 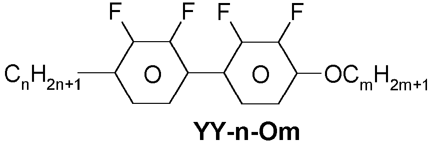 |
| 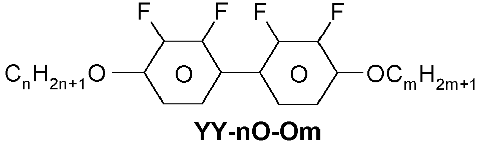 |
| 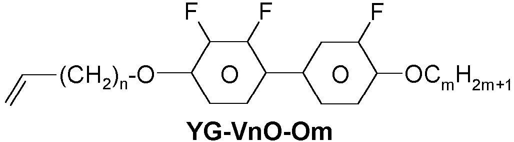 |
| 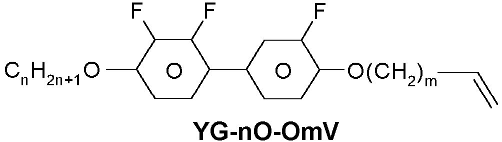 |
| 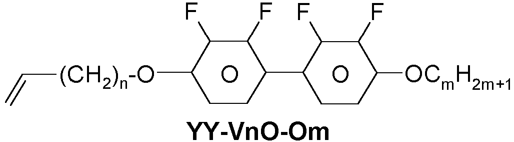 |
| 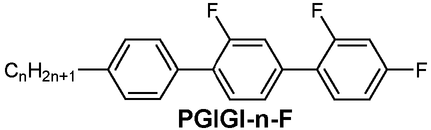 |

The liquid-crystal mixtures which can be used in accordance with the invention are prepared in a manner which is conventional per se. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

The mixtures may also comprise further additives known to the person skilled in the art and described in the literature, such as, for example, UV absorbers, antioxidants, nanoparticles and free-radical scavengers. For example, stabilizers or chiral dopants may be added. Suitable stabilizers for the mixtures according to the invention are, in particular, those listed in Table C.

**Table B**

| |
|---|
| Table B shows possible chiral dopants which may optionally be added to the mixtures according to the invention. The mixtures preferably comprise 0-10% by weight, in particular 0.01-5% by weight and particularly preferably 0.01-3% by weight of chiral dopants. If the mixtures comprise only one chiral dopant, it is employed in amounts of 0.01-4% by weight, preferably 0.1-1.0% by weight. |
| 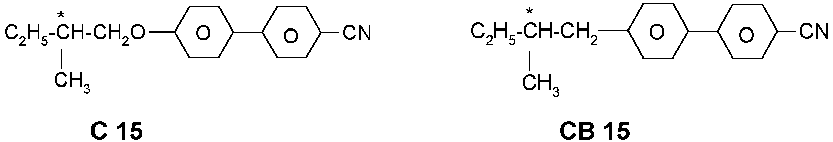 |
| 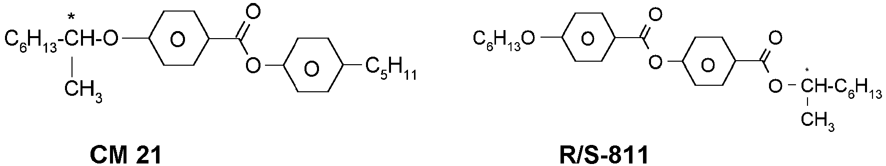 |
| 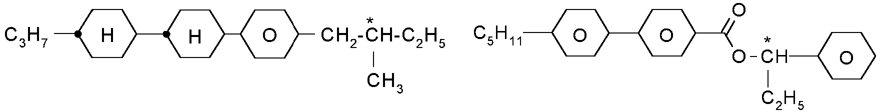 |
| 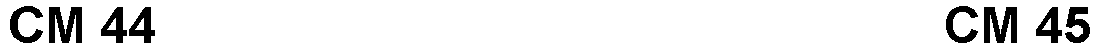 |
| 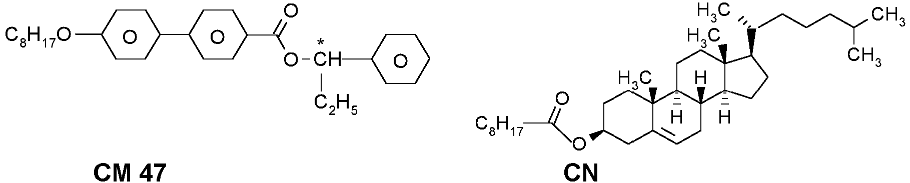 |
| 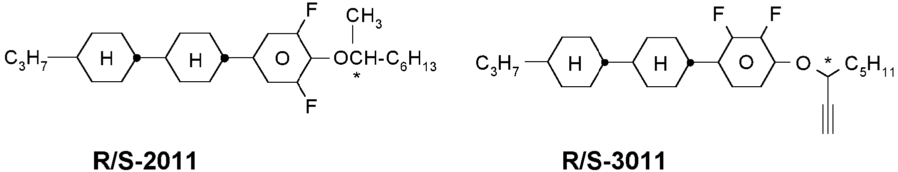 |
| 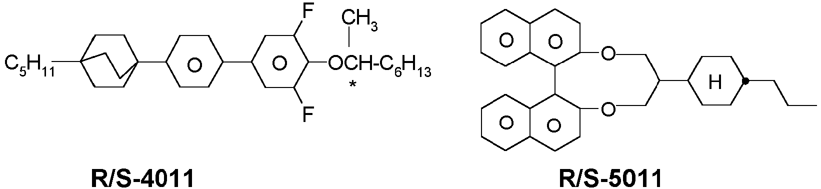 |
| 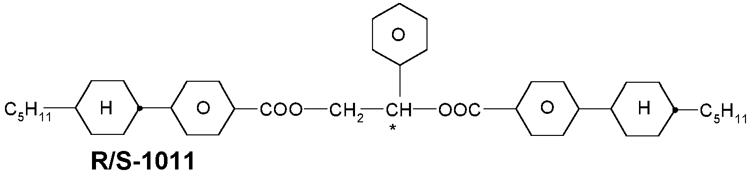 |

**Table C**

| |
|---|
| Stabilizers which can preferably be added to the mixtures according to the invention in amounts of 0-10% by weight, preferably 0.01-3% by weight, are shown below. |
| 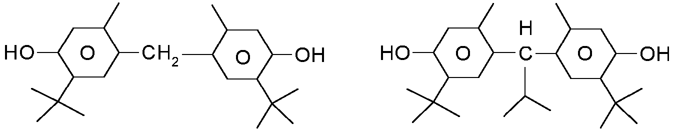 |
| 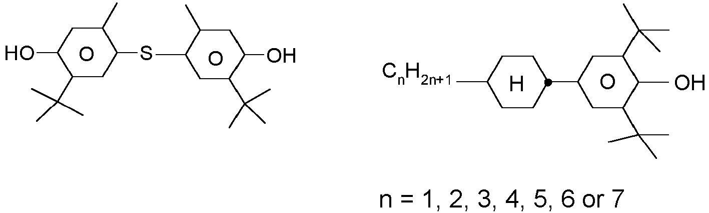 |
| 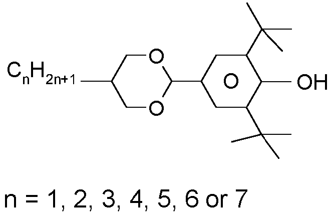 |
| 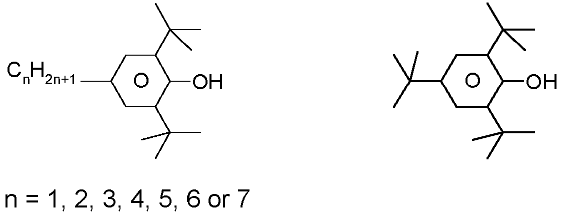 |
| 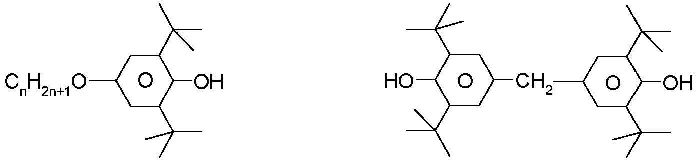 |
| 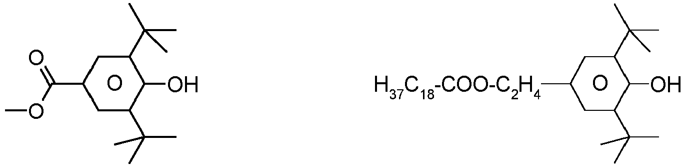 |
| 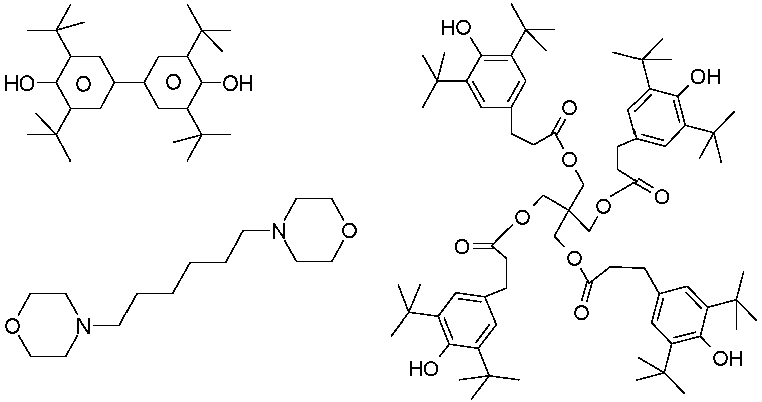 |
| 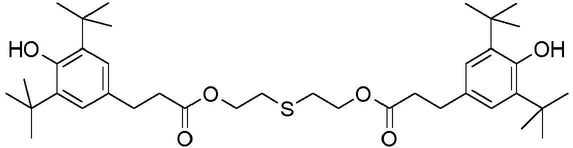 |
| 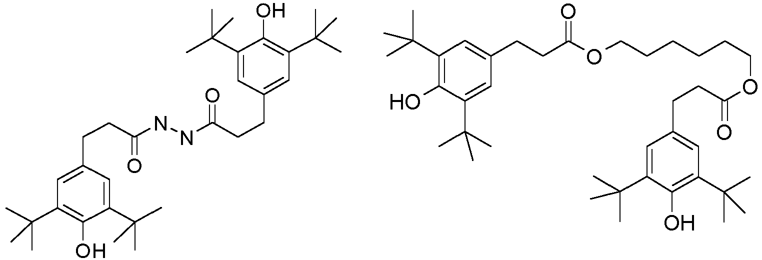 |
| 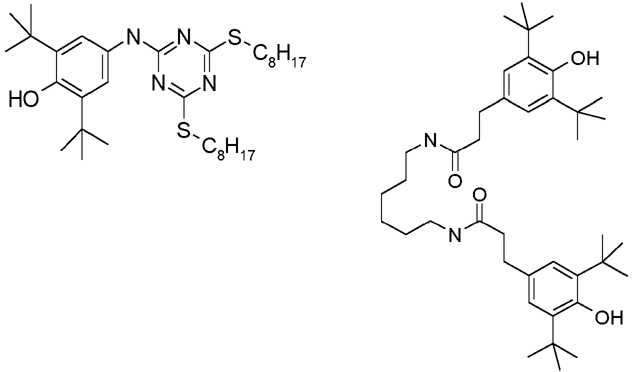 |
| 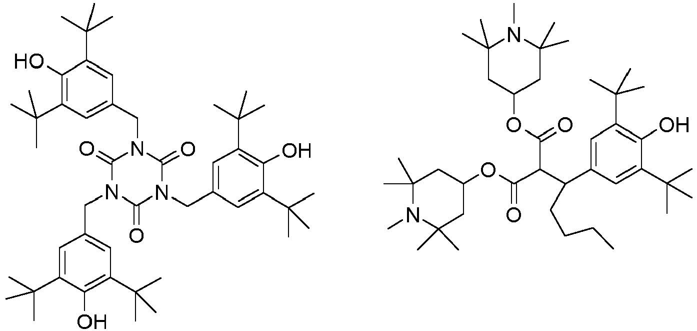 |
| 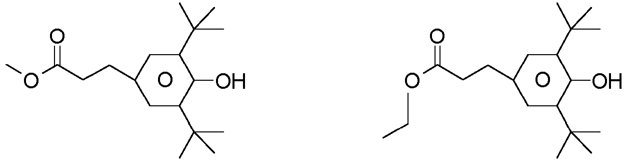 |
| 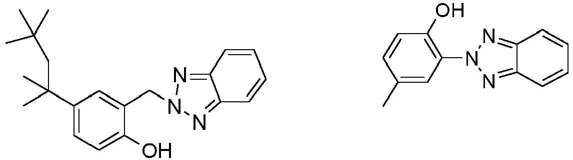 |
| 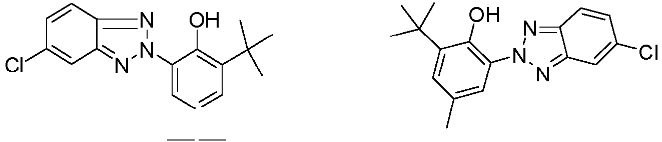 |
| 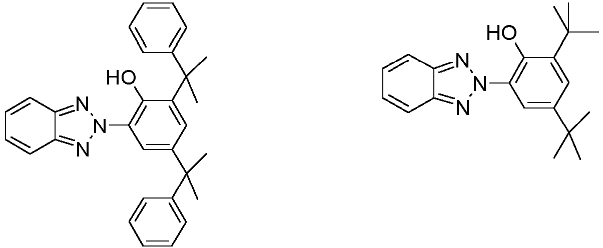 |
| 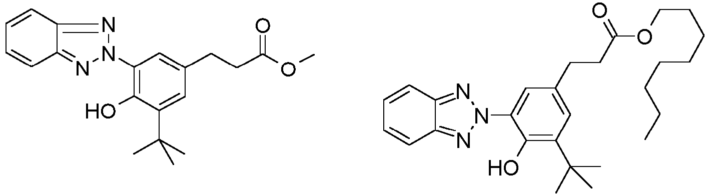 |
| 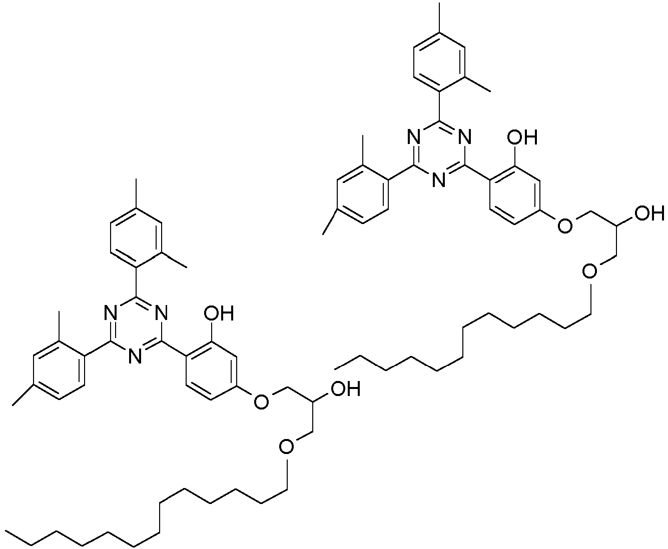 |
| 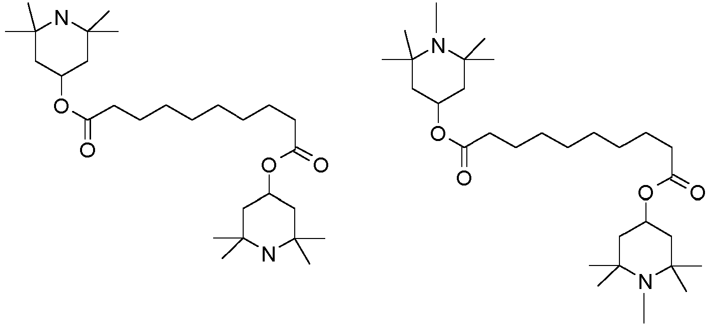 |
| 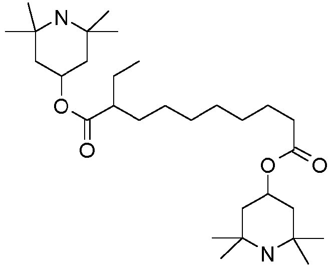 |
| 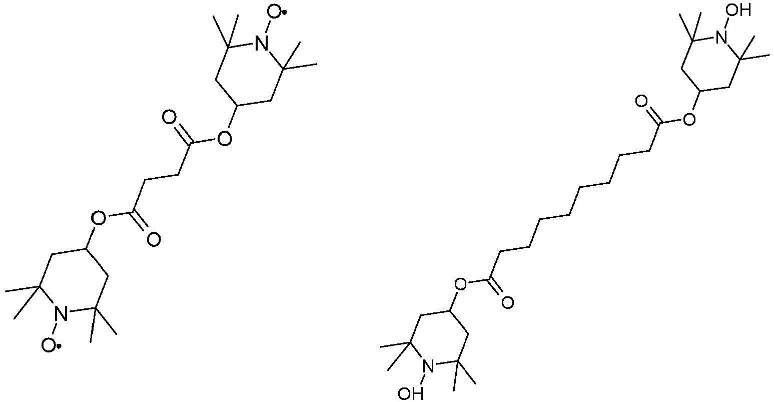 |

The medium according to the invention particularly preferably comprises Tinuvin^{®} 770 (bis(2,2,6,6-tetramethyl-4-piperidyl) sebacate), preferably in amounts of 0.001 - 5% by weight, based on the liquid-crystalline medium.

Examples of preferred further dichroic dyes which may be used in the liquid-crystalline media according to the invention are listed in Table D.

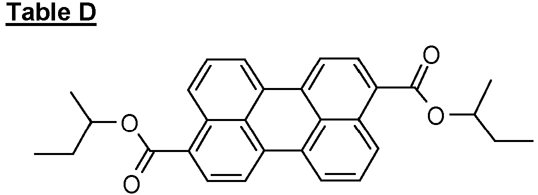

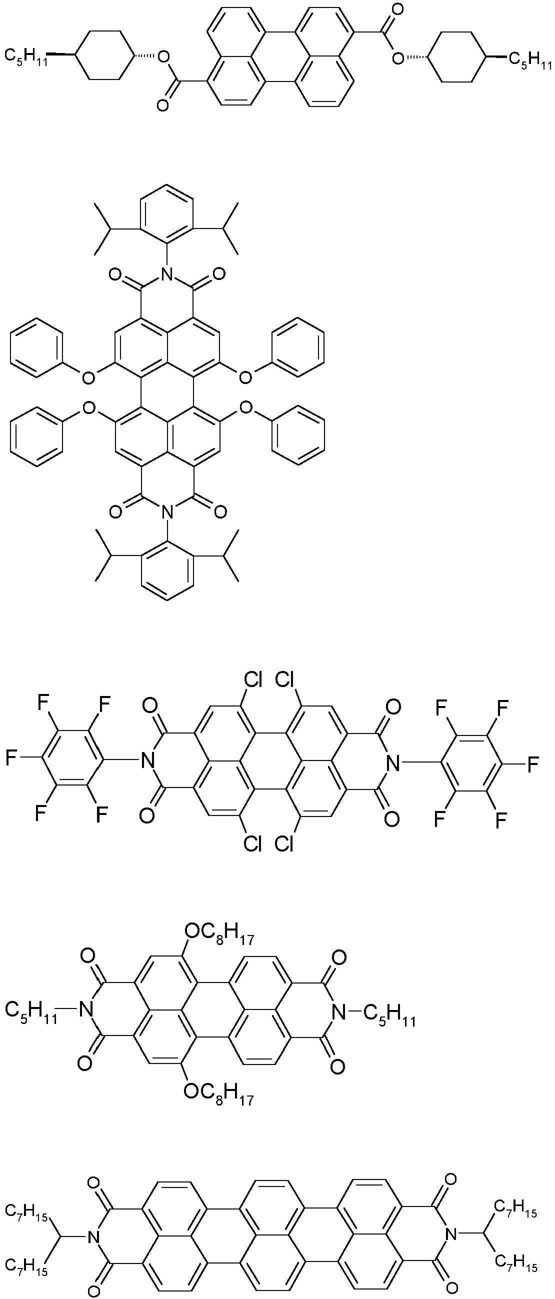

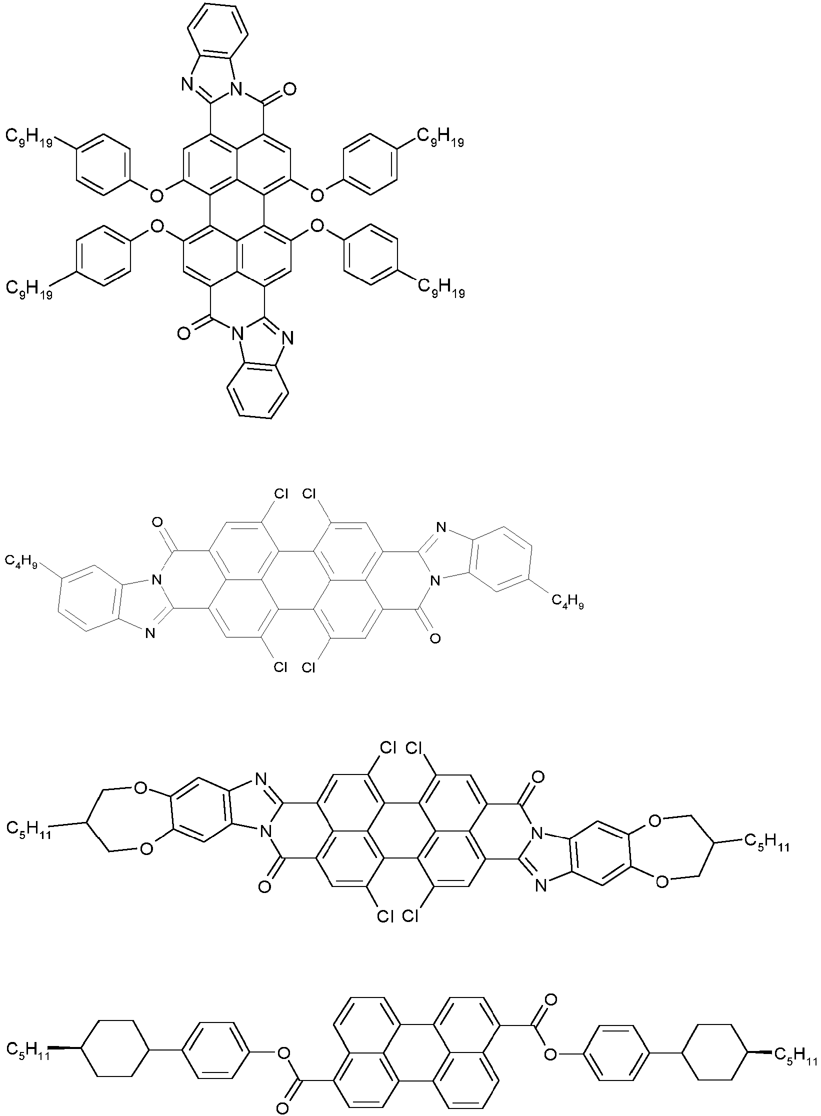

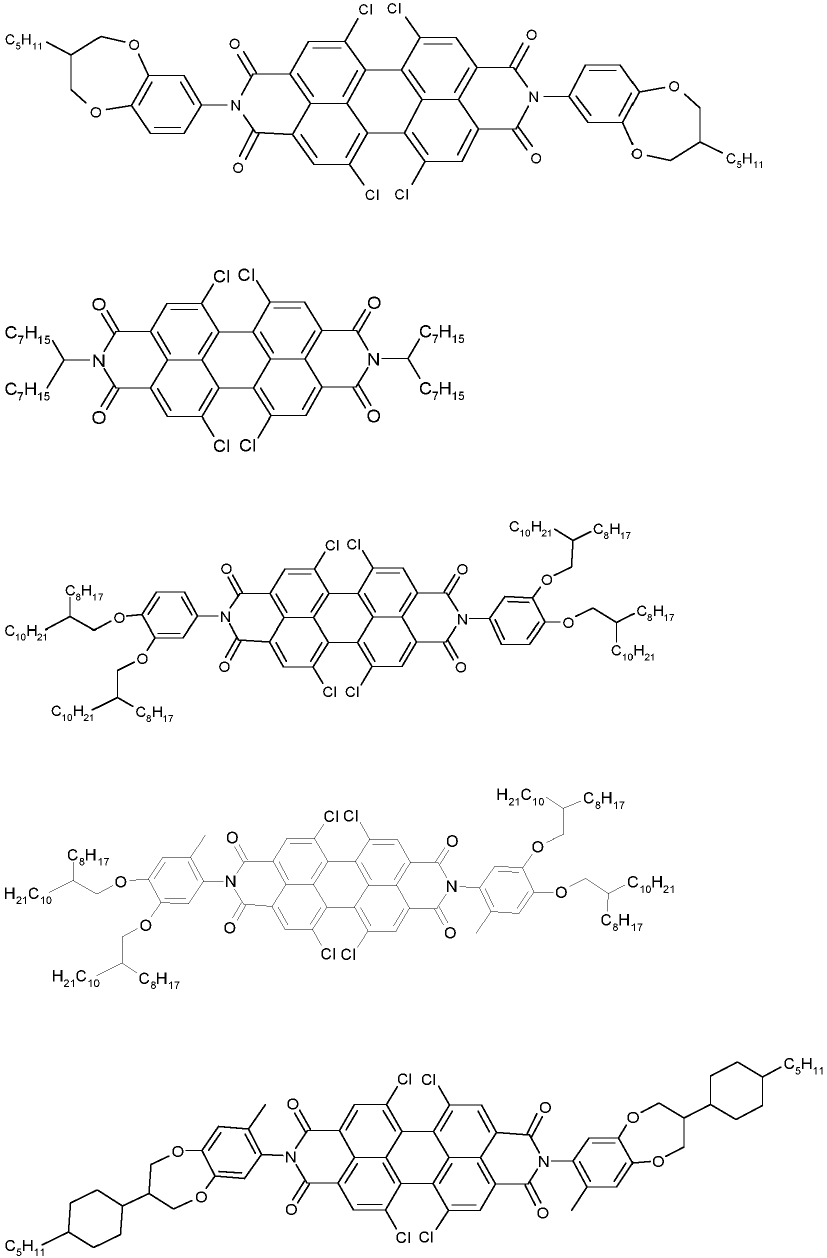

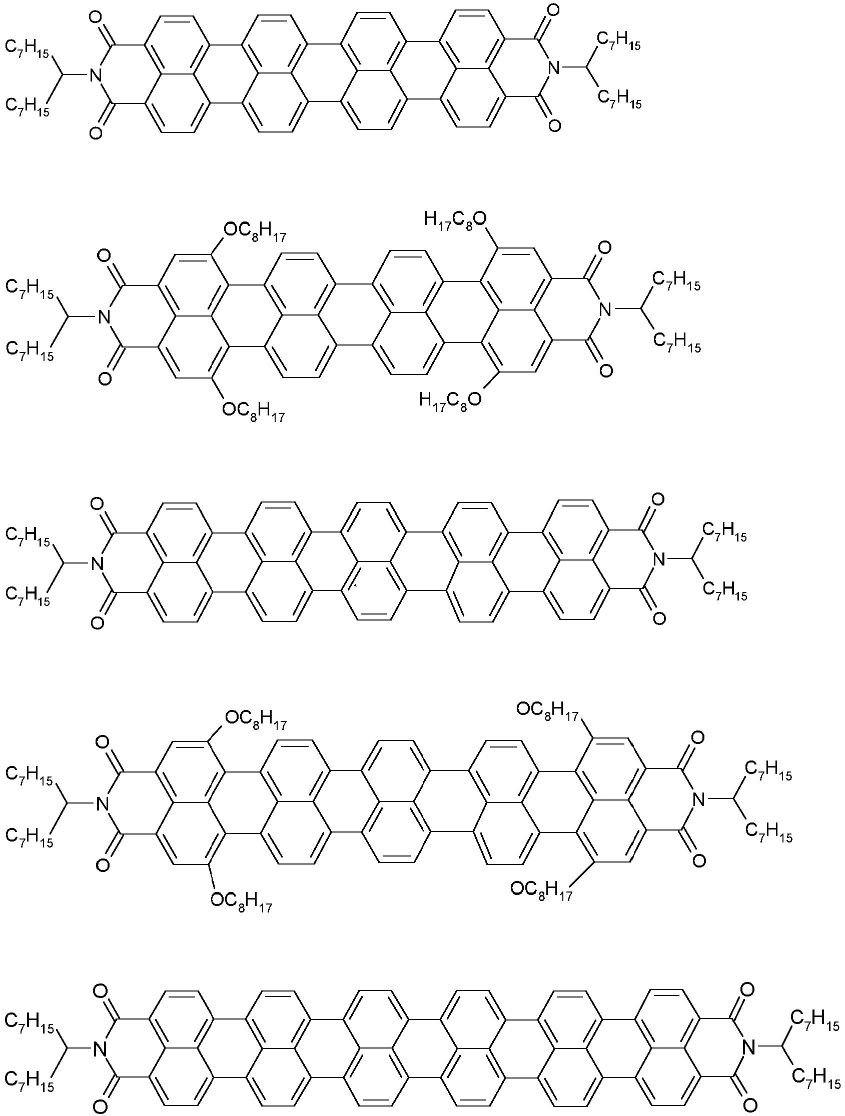

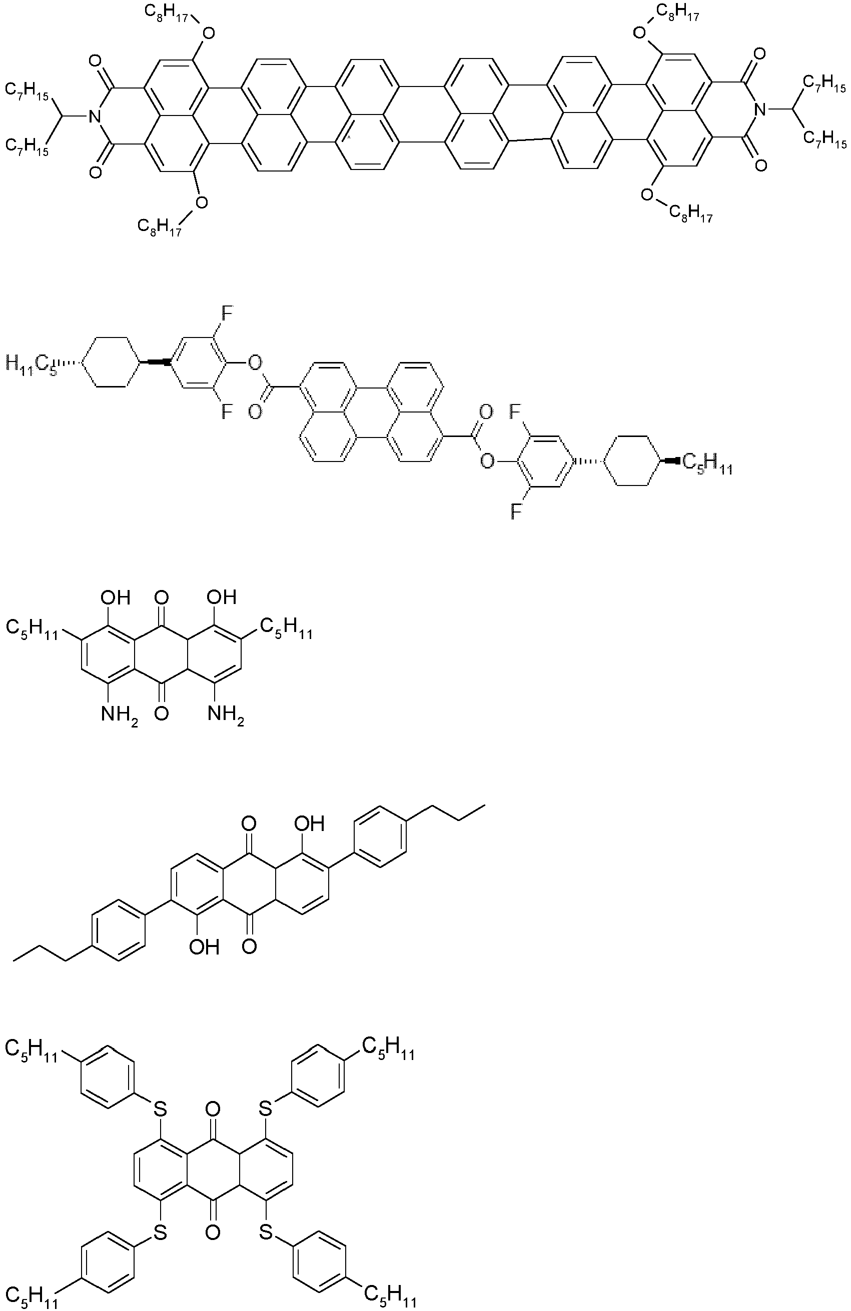

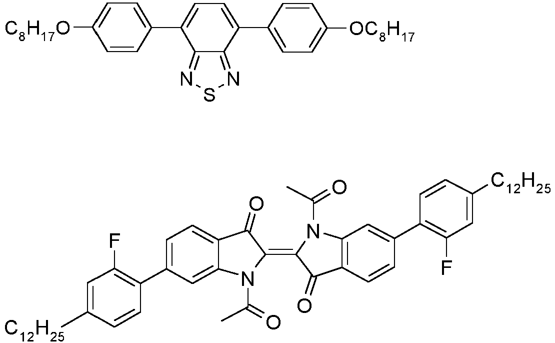

The following Examples are merely illustrative of the present invention and they should not be considered as limiting the scope of the invention in any way. The Examples and modifications or other equivalents thereof will become apparent to those skilled in the art in the light of the present disclosure.

However, the physical properties and compositions shown in the following illustrate which properties can be achieved and in which ranges they can be modified. Especially the combination of the various properties, which can be preferably achieved, is thus well defined.

### Working Examples

Unless indicated otherwise, parts or per cent data denote parts by weight or per cent by weight based on the mixture as a whole.

The symbols and abbreviations have the following meanings:
- Vₒ: threshold voltage, capacitive [V] at 20°C
- Δn: the optical anisotropy measured at 20°C and 589 nm
- Δε: the dielectric anisotropy at 20°C and 1 kHz
- cl.p.: clearing point [°C]
- K₁: elastic constant, "splay" deformation at 20°C [pN]
- K₃: elastic constant, "bend" deformation at 20°C [pN]
- γ₁: rotational viscosity measured at 20°C [mPa·s], determined by the rotation method in a magnetic field
- LTS: low-temperature stability (nematic phase), determined in test cells.

The term "threshold voltage" for the present invention relates to the capacitive threshold (V₀), unless explicitly indicated otherwise. In the Examples, as is generally usual, the optical threshold can also be indicated, for example for 10% relative contrast (V₁₀).

### Reference Mixture Examples

The nematic host mixtures H1 to H5 are prepared as follows:

### Reference Mixture H1

| | | | |
|---|---|---|---|
| PCH-3 | 6.0 % | Clearing point [°C]: | 111 |
| CCY-3-O1 | 8.0 % | Δn [589 nm, 20°C]: | 0.191 |
| CCY-3-O2 | 11.0 % | Δε [1 kHz, 20°C]: | -2.9 |
| CPY-2-O2 | 12.0 % | ε_{∥} [1 kHz, 20°C]: | 6.1 |
| CPY-3-O2 | 15.0 % | | |
| PGIGI-3-F | 8.0 % | | |
| PY-3-O2 | 10.0 % | | |
| PYP-2-3 | 15.0 % | | |
| PYP-2-4 | 15.0 % | | |

### Reference Mixture H2

| | | | |
|---|---|---|---|
| CBC-33 | 3.0 % | Clearing point [°C]: | 112.5 |
| CBC-33F | 3.0 % | Δn [589 nm, 20°C]: | 0.200 |
| CCY-3-O1 | 3.0 % | Δε [1 kHz, 20°C]: | -4.9 |
| CCY-3-O2 | 11.0 % | ε_{∥} [1 kHz, 20°C]: | 4.1 |
| CPY-2-O2 | 12.0 % | K₁ [pN, 20°C]: | 18.0 |
| CPY-3-O2 | 12.0 % | K₃ [pN, 20°C]: | 22.8 |
| PGIGI-3-F | 8.0 % | | |
| PY-3-O2 | 20.0 % | | |
| PYP-2-3 | | | 14.0 % |
| PYP-2-4 | | | 14.0 % |

### Reference Mixture H3

| | | | |
|---|---|---|---|
| PCH-3 | 10.0 % | Clearing point [°C]: | 100.5 |
| CBC-33 | 3.0 % | Δn [589 nm, 20°C]: | 0.187 |
| CBC-33F | 2.0 % | Δε [1 kHz, 20°C]: | -1.4 |
| CCY-3-O1 | 3.0 % | ε_{∥} [1 kHz, 20°C]: | 7.4 |
| CCY-3-O2 | 10.0 % | K₁ [pN, 20°C]: | 13.5 |
| CPY-2-O2 | 11.0 % | K₃ [pN, 20°C]: | 18.8 |
| CPY-3-O2 | 11.0 % | γ₁ [mPa·s, 20°C]: | 65 |
| PGIGI-3-F | 7.0 % | | |
| PY-3-O2 | 18.0 % | | |
| PYP-2-3 | 13.0 % | | |
| PYP-2-4 | 12.0 % | | |

### Reference Mixture H4

| | | | |
|---|---|---|---|
| PCH-3 | 6.0 % | Clearing point [°C]: | 102 |
| CCY-3-O1 | 8.0 % | Δn [589 nm, 20°C]: | 0.188 |
| CCY-3-O2 | 11.0 % | Δε [1 kHz, 20°C]: | -3.1 |
| CPY-2-O2 | 12.0 % | ε_{∥} [1 kHz, 20°C]: | 6.2 |
| CPY-3-O2 | 12.0 % | K₁ [pN, 20°C]: | 13.9 |
| PGIGI-3-F | 8.0 % | K₃ [pN, 20°C]: | 19.3 |
| PY-3-O2 | 15.0 % | V₀ [20°C, V]: | 2.65 |
| PYP-2-3 | 14.0 % | | |
| PYP-2-4 | 14.0 % | | |

### Reference Mixture H5

| | | | |
|---|---|---|---|
| PCH-3 | 6.0 % | Clearing point [°C]: | 102 |
| CCY-3-O2 | 8.0 % | Δn [589 nm, 20°C]: | 0.225 |
| CPTY-3-O2 | 8.0 % | Δε [1 kHz, 20°C]: | -2.8 |
| CPTY-5-O2 | 7.0 % | ε_{∥} [1 kHz, 20°C]: | 6.3 |
| CPY-2-O2 | 6.0 % | | |
| CPY-3-O2 | | | 6.0 % |
| CY-3-O2 | | | 12.0 % |
| PYP-2-3 | | | 12.0 % |
| PYP-2-4 | | | 10.0 % |
| PTP-1-O2 | | | 5.0 % |
| PTP-2-O1 | | | 5.0 % |
| PTY-3-O2 | | | 15.0 % |

### Comparative Mixture Example 1

A dye-doped mixture D1 is prepared by mixing 98.60% of Reference Mixture H1 with 0.26% of Dye-1

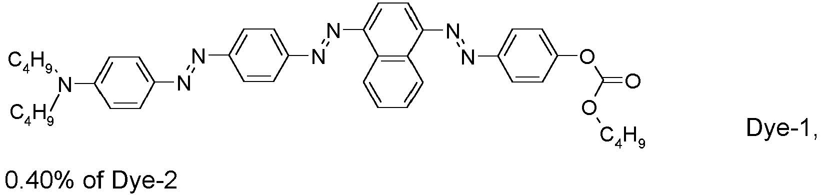

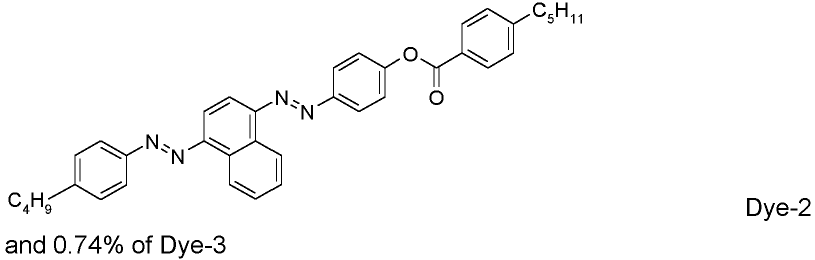

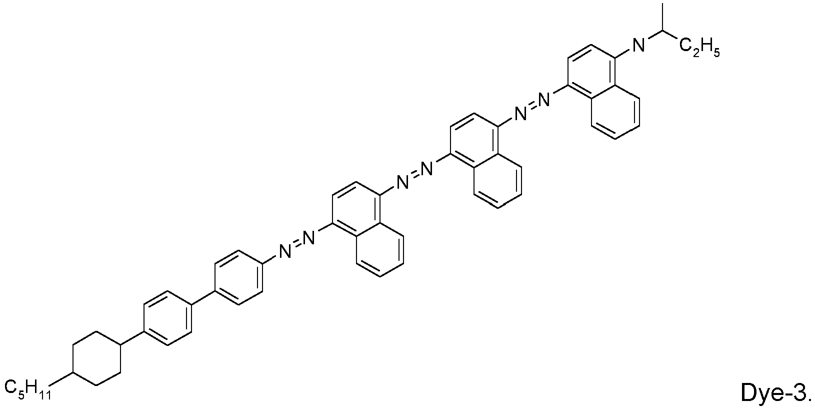

The absorption characteristics of the dyes together result in a black colour.

A comparative mixture CM1 is prepared by mixing 99.90% of mixture D1 with 0.10% of 1-hexyl-3-methylimidazolium tris(pentafluoroethyl)-trifluorophosphate.

### Mixture Example 1

A mixture M1 is prepared by mixing 99.99% of mixture D1 as described in Comparative Mixture Example 1 above with 0.01 % of tetrabutylammonium tetrafluoroborate.

### Mixture Example 2 to 5

Dye-doped mixtures D2, D3, D4 and D5 are prepared as described for mixture D1 in Comparative Mixture Example 1 above, wherein instead of Reference Mixture H1 respectively Reference Mixtures H2, H3, H4 and H5 are used.

Mixtures M2, M3, M4 and M5 are prepared by respectively mixing 99.99% of mixtures D2, D3, D4 and D5 with 0.01% of tetrabutylammonium tetrafluoroborate.

### Use Examples

### Comparative Use Example 1

A test cell with a cell size of 35 mm x 35 mm using ITO-coated glass substrates and having a cell gap of 10 µm using spacers is prepared, wherein orientation layers for homeotropic orientation (JALS 2096-R1, from JSR (Japan Synthetic Rubber), Japan) are applied. The test cell is filled with the comparative mixture CM1.

Transmittance and haze are measured depending on the applied voltage (square wave, 60Hz, rms) using a commercially available hazemeter (Model NDH7000SP II, Nippon Denshoku Industries Co., Ltd., Tokyo, Japan).

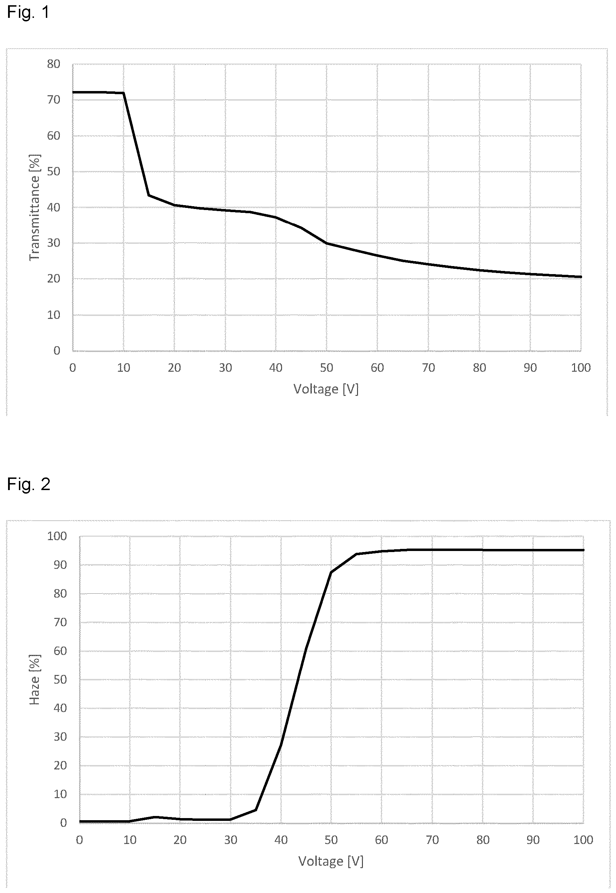

The results are shown in Fig. 1 and Fig. 2.

It is observed that an operating voltage of 60 V is required to achieve a haze of 95%.

### Use Example 1

A test cell is prepared as described in Comparative Use Example 1 above. The test cell is filled with the mixture M1.

Transmittance and haze are measured depending on the applied voltage (square wave, 60Hz, rms) using a commercially available hazemeter (Model NDH7000SP II, Nippon Denshoku Industries Co., Ltd., Tokyo, Japan).

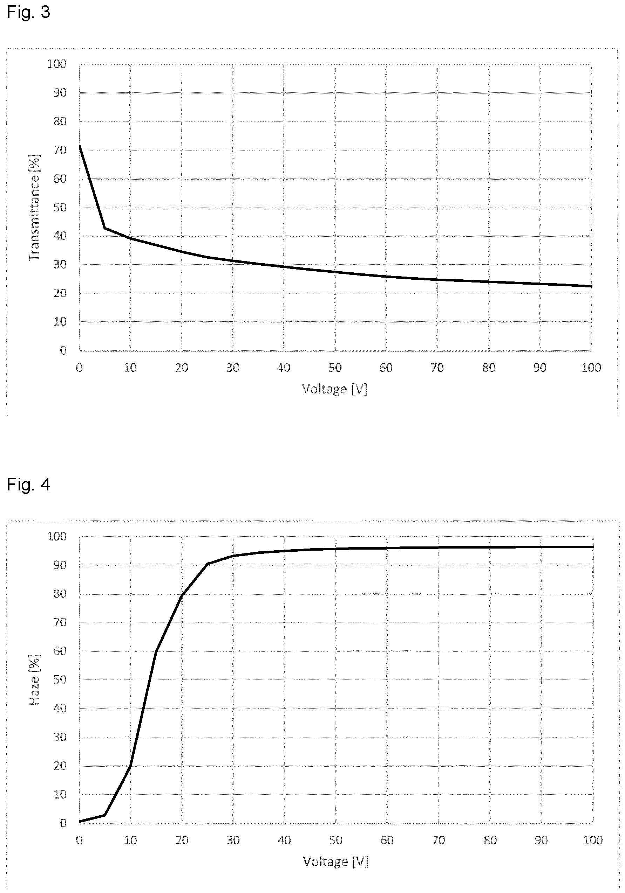

The results are shown in Fig. 3 and Fig. 4.

Although a relatively smaller amount of the ionic dopant, in particular 0.01% of tetrabutylammonium tetrafluoroborate, is used, already at an operating voltage of 40 V a haze of 95% is observed. In addition, the onset of a reduction in the transmittance occurs at a favourably lower voltage.

The device shows benefits in the electro-optical performance, in particular in terms of efficiency and energy savings, reliability, stability and reproducibility.

## Claims

1. A liquid-crystalline medium having a negative dielectric anisotropy and a clearing point of 90°C or more, comprising one or more ionic dopants of formula I
A⁺B⁻ I
wherein
A⁺ denotes quaternary ammonium,
and
B⁻ denotes an anion selected from tetrafluoroborate and hexafluorophosphate,
and
wherein the medium further comprises one or more dichroic dyes and one or more compounds selected from the group of the compounds of formulae IIA, IIB and IIC, 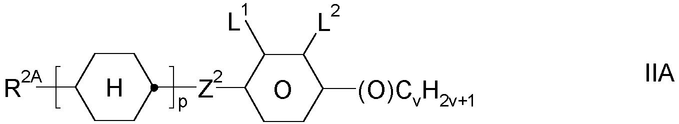 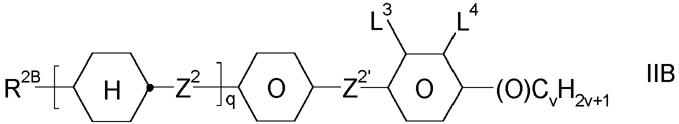 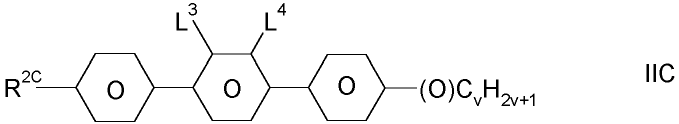 in which
R^{2A}, R^{2B} and R^{2C} each, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by 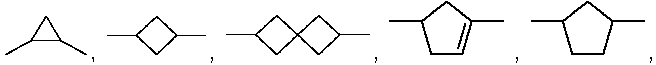 -O-, -S-, -C≡C-, -CF₂O-, -OCF₂-, -OC-O- or -O-CO- in such a way that O atoms are not linked directly to one another, or a cycloalkyl ring having 3 to 6 C atoms,
L¹⁻⁴ each, independently of one another, denote F, Cl, CF₃ or CHF₂,
Z² and Z^{2'} each, independently of one another, denote a single bond, -CH₂CH₂-, -CH=CH-, -C≡C-, -CF₂O-, -OCF₂-, -CH₂O-, -OCH₂-, -C(O)O-, -OC(O)-, -C₂F₄-, -CF=CF- or -CH=CHCH₂O-,
p denotes 1 or 2,
q denotes 0 or 1, and
v denotes 1 to 6.

2. The liquid-crystalline medium according to claim 1, wherein the medium comprises two or more dichroic dyes, preferably three or more dichroic dyes.

3. The liquid-crystalline medium according to claim 1 or 2, wherein the liquid-crystalline medium exhibits a dielectric anisotropy Δε in the range of from -5.0 to -1.0 and an optical anisotropy Δn of at least 0.15.

4. The liquid-crystalline medium according to one or more of claims 1 to 3, wherein the total concentration of the one or more ionic dopants of formula I in the medium is 0.10% by weight or less, preferably is 0.05% by weight or less.

5. The liquid-crystalline medium according to one or more of claims 1 to 4, wherein the quaternary ammonium is tetraalkylammonium, preferably is tetrabutylammonium.

6. The liquid-crystalline medium according to one or more of claims 1 to 5, wherein the anion B⁻ is tetrafluoroborate.

7. The liquid-crystalline medium according to one or more of claims 1 to 6, wherein the medium comprises one or more compounds of formulae N and T-1, 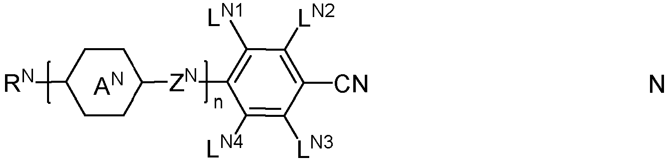 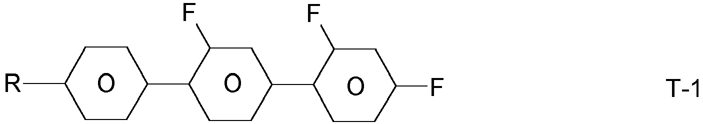 wherein
R^{N} and R each, independently of one another, denote alkyl or alkenyl having up to 12 C atoms, wherein one or more non adjacent CH₂ groups may be replaced by -O- and/or a cycloalkyl ring having 3 to 5 C atoms, and wherein one or more H atoms may be replaced by F,
A^{N} on each occurrence, identically or differently, denotes (a) a trans-1,4-cyclohexylene radical, in which one or more non-adjacent CH₂ groups may be replaced by -O- and/or -S-, (b) a 1,4-phenylene radical, in which one or two CH groups may be replaced by N, (c) trans-1,4-cyclohexenylene, or (d) a radical from the group consisting of 1,4-bicyclo[2.2.2]octylene, naphthalene-2,6-diyl, decahydronaphthalene-2,6-diyl and 1,2,3,4-tetrahydronaphthalene-2,6-diyl, where the radicals (a) to (d) may be substituted by one or two fluorine atoms,
Z^{N} on each occurrence, independently of one another, -CO-O-, -O-CO-, -CH₂O-, -OCH₂-, -CH₂CH₂-, -CH=CH-, -C≡C-, -(CH₂)₄-, -OCF₂-, -CF₂O-, -CF₂CF₂-, or a single bond,
L^{N1}, L^{N2}, L^{N3} and L^{N4} each, independently of one another, denote H, Cl, or F,
and
n is 1, 2 or 3.

8. The liquid-crystalline medium according to one or more of claims 1 to 7, wherein the medium comprises one or more dichroic dyes selected from the group of compounds of the formulae 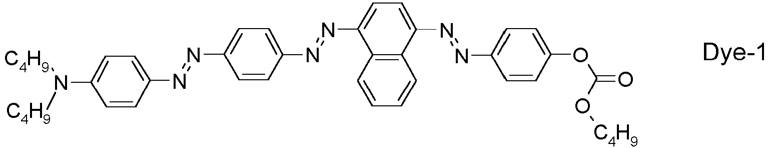 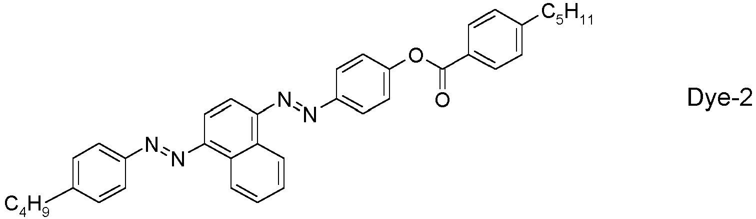 and

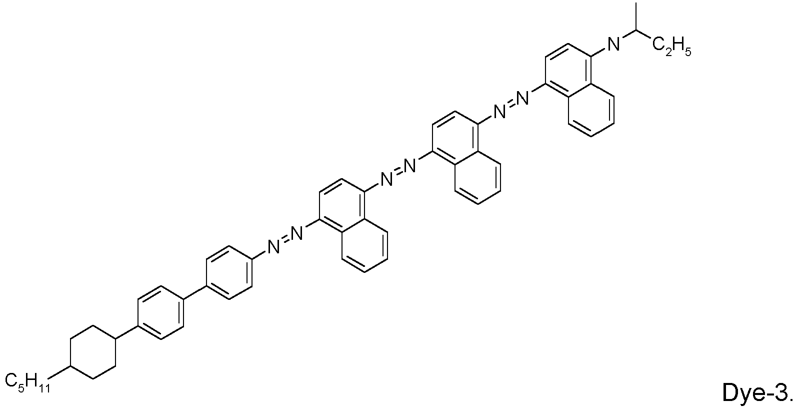

9. The liquid-crystalline medium according to one or more of claims 1 to 8, wherein the medium comprises one or more further additives, preferably a stabilizer and/or a chiral dopant.

10. The liquid-crystalline medium according to one or more of claims 1 to 9, wherein the medium does not contain tolanes.

11. A switching element which is operable in and electrically switchable between an optically clear state and a scattering state, comprising a switching layer which contains the liquid-crystalline medium according to one or more of claims 1 to 10, wherein the switching layer is interposed between two opposing transparent substrates which are each provided with an electrode.

12. The switching element according to claim 11, wherein the switching element is switchable from a first transparent state with low haze to a second transparent state with low haze and less transmission than the first transparent state at a first voltage, and wherein the switching element is switchable to an opaque state with high haze at a second voltage higher than the first voltage.

13. Use of the liquid-crystalline medium according to one or more of claims 1 to 10 or the switching element according to claim 11 or 12 in an electro-optical device, preferably in a light valve, a light shutter, a window, an automotive mirror, a sun roof, an augmented or virtual reality device, a mobile device or a portable device.

## Patentansprüche

1. Flüssigkristallines Medium mit einer negativen dielektrischen Anisotropie und einem Klärpunkt von 90°C oder mehr, enthaltend einen oder mehrere ionische Dotierstoffe der Formel I
A⁺ B⁻ I
bei der
A⁺ und B⁻ quaternäres Ammonium bedeutet, ein Anion ausgewählt aus Tetrafluorborat und Hexafluorphosphat bedeutet,
und
bei dem das Medium ferner einen oder mehrere dichroitische Farbstoffe und eine oder mehrere Verbindungen, die ausgewählt sind aus der Gruppe der Verbindungen der Formeln IIA, IIB und IIC 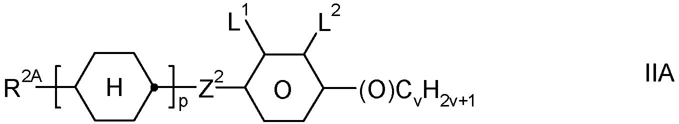 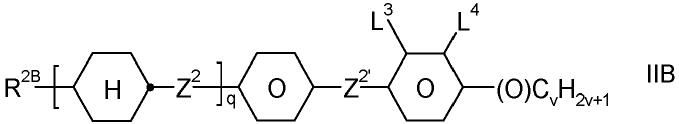 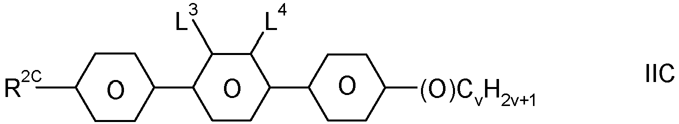 enthält, worin
R^{2A}, R^{2B} und R^{2C} jeweils unabhängig voneinander H, einen Alkyl- oder Alkenylrest mit bis zu 15 C-Atomen, der unsubstituiert, einfach durch CN oder CF₃ substituiert oder mindestens einfach durch Halogen substituiert ist, wobei in diesen Resten zusätzlich eine oder mehrere CH₂-Gruppen so durch 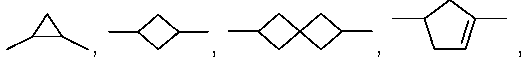 -O-, -S-, -C≡C-, -CF₂O-, -OCF₂-, -OC-O- oder 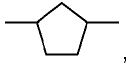 -O-CO- ersetzt sein können, dass O-Atome nicht direkt miteinander verknüpft sind, oder einen Cycloalkylring mit 3 bis 6 C-Atomen bedeuten,
L¹⁻⁴ jeweils unabhängig voneinander F, Cl, CF₃ oder CHF₂ bedeuten,
Z² und Z^{2'} jeweils unabhängig voneinander eine Einfachbindung, -CH₂CH₂-, -CH=CH-, -C≡C-, -CF₂O-, -OCF₂-, -CH₂O-, -OC H₂-, -C(O)O-, -OC(O)-, -C₂F₄-, -CF=CF- oder -CH=CHCH₂O- bedeuten,
p 1 oder 2 bedeutet,
q 0 oder 1 bedeutet, und
v 1 bis 6 bedeutet.

2. Flüssigkristallines Medium nach Anspruch 1, bei dem das Medium zwei oder mehr dichroitische Farbstoffe, vorzugsweise drei oder mehr dichroitische Farbstoffe enthält.

3. Flüssigkristallines Medium nach Anspruch 1 oder 2, bei dem das flüssigkristalline Medium eine dielektrische Anisotropie Δε im Bereich von -5,0 bis -1,0 und eine optische Anisotropie Δn von mindestens 0,15 aufweist.

4. Flüssigkristallines Medium nach einem oder mehreren der Ansprüche 1 bis 3, bei dem die Gesamtkonzentration des einen oder der mehreren ionischen Dotierstoffe der Formel I in dem Medium 0,10 Gew.-% oder weniger beträgt, vorzugsweise 0,05 Gew.-% oder weniger beträgt.

5. Flüssigkristallines Medium nach einem oder mehreren der Ansprüche 1 bis 4, bei dem das quaternäre Ammonium Tetraalkylammonium ist, vorzugsweise Tetrabutylammonium ist.

6. Flüssigkristallines Medium nach einem oder mehreren der Ansprüche 1 bis 5, bei dem das Anion B⁻ Tetrafluorborat ist.

7. Flüssigkristallines Medium nach einem oder mehreren der Ansprüche 1 bis 6, bei dem das Medium eine oder mehrere Verbindungen der Formeln N und T-1 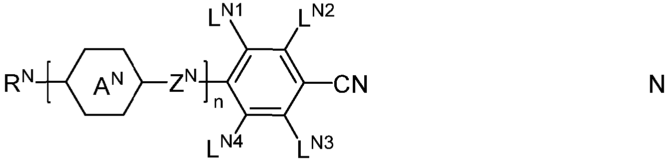 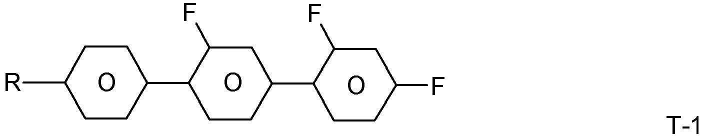 enthält, bei denen
R^{N} und R jeweils unabhängig voneinander Alkyl oder Alkenyl mit bis zu 12 C-Atomen bedeuten, bei dem eine oder mehrere nicht benachbarte CH₂-Gruppen durch -O- und/oder einen Cycloalkylring mit 3 bis 5 C-Atomen ersetzt sein können und bei dem ein oder mehrere H-Atome durch F ersetzt sein können,
A^{N} bei jedem Auftreten gleich oder verschieden
(a) einen trans-1,4-Cyclohexylenrest, worin eine oder mehrere nicht benachbarte CH₂-Gruppen durch -O- und/oder -S- ersetzt sein können,
(b) einen 1,4-Phenylenrest, worin eine oder zwei CH-Gruppen durch N ersetzt sein können,
(c) trans-1,4-Cyclohexenylen, oder
(d) einen Rest aus der Gruppe bestehend aus 1,4-Bicyclo[2.2.2]octylen, Naphthalin-2,6-diyl, Decahydro-naphthalin-2,6-diyl und 1,2,3,4-Tetrahydronaphthalin-2,6-diyl bedeutet, wobei die Reste (a) bis (d) durch ein oder zwei Fluoratome substituiert sein können,
Z^{N} bei jedem Auftreten unabhängig voneinander -CO-O-, -O-CO-, -CH₂O-, -OCH₂-, -CH₂CH₂-, -CH=CH-, -C≡C-, -(CH₂)₄-, -OCF₂-, -CF₂O-, -CF₂CF₂- oder eine Einfachbindung bedeutet,
L^{N1}, L^{N2}, L^{N3} und L^{N4} und jeweils unabhängig voneinander H, Cl oder F bedeuten,
n 1, 2 oder 3 ist.

8. Flüssigkristallines Medium nach einem oder mehreren der Ansprüche 1 bis 7, bei dem das Medium einen oder mehrere dichroitische Farbstoffe enthält, die ausgewählt sind aus der Gruppe der Verbindungen der Formeln 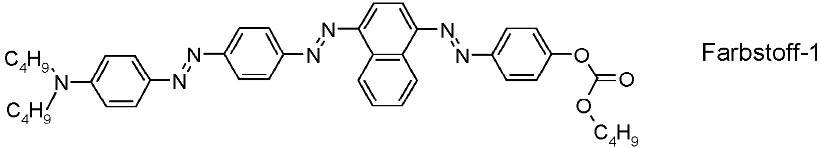 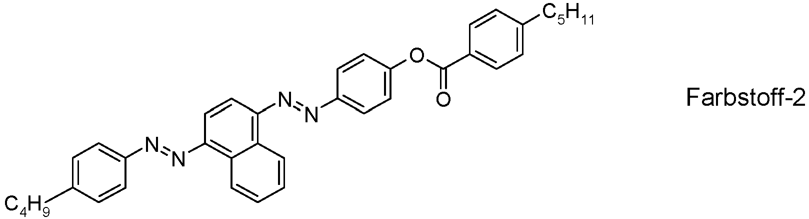 und

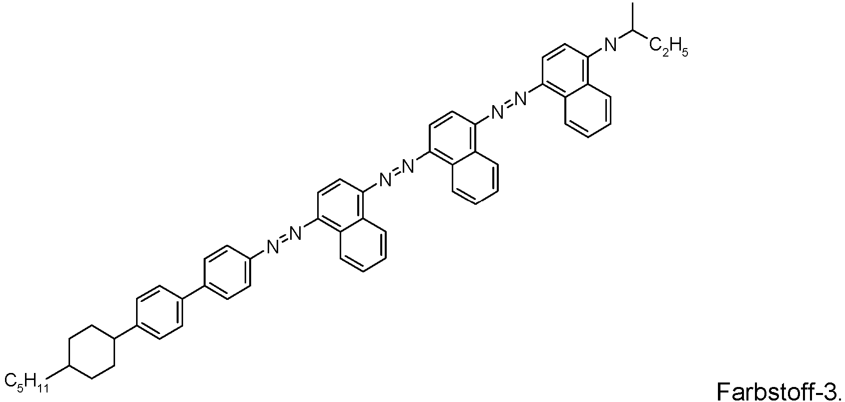

9. Flüssigkristallines Medium nach einem oder mehreren der Ansprüche 1 bis 8, bei dem das Medium einen oder mehrere weitere Zusatzstoffe, vorzugsweise einen Stabilisator und/oder einen chiralen Dotierstoff, enthält.

10. Flüssigkristallines Medium nach einem oder mehreren der Ansprüche 1 bis 9, bei dem das Medium keine Tolane enthält.

11. Schaltelement, das in einem optisch klaren Zustand und einem streuenden Zustand betreibbar und zwischen diesen elektrisch schaltbar ist, enthaltend eine Schaltschicht, die das flüssigkristalline Medium nach einem oder mehreren der Ansprüche 1 bis 10 enthält, bei dem die Schaltschicht zwischen zwei einander gegenüberliegenden transparenten Substraten, die jeweils mit einer Elektrode versehen sind, eingefügt ist.

12. Schaltelement nach Anspruch 11, bei dem das Schaltelement bei einer ersten Spannung von einem ersten transparenten Zustand mit geringer Trübung in einen zweiten transparenten Zustand mit geringer Trübung und weniger Transmission als der erste transparente Zustand schaltbar ist und bei dem das Schaltelement bei einer zweiten Spannung, die höher ist als die erste Spannung, in einen undurchsichtigen Zustand mit hoher Trübung schaltbar ist.

13. Verwendung des flüssigkristallinen Mediums nach einem oder mehreren der Ansprüche 1 bis 10 oder des Schaltelements nach Anspruch 11 oder 12 in einer elektrooptischen Vorrichtung, vorzugsweise in einem Lichtventil, einem Lichtverschluss, einem Fenster, einem Kraftfahrzeugspiegel, einem Schiebedach, einem Augmented- oder Virtual-Reality-Gerät, einem mobilen Gerät oder einem tragbaren Gerät.

## Revendications

1. Milieu cristallin liquide ayant une anisotropie diélectrique négative et un point d'éclaircissement de 90°C ou plus, comprenant un ou plusieurs dopants ioniques de formule I
A⁺ B⁻ I
dans laquelle
A⁺ et B⁻ désigne ammonium quaternaire, désigne un anion choisi parmi tétrafluoroborate et hexafluorophosphate,
et
le milieu comprenant en outre un ou plusieurs colorants dichroïques et un ou plusieurs composés choisis dans le groupe constitué par les composés de formules IIA, IIB et IIC, 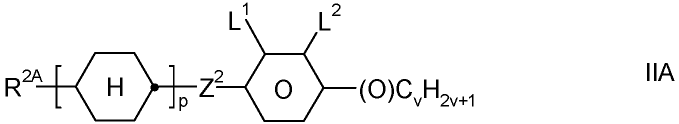 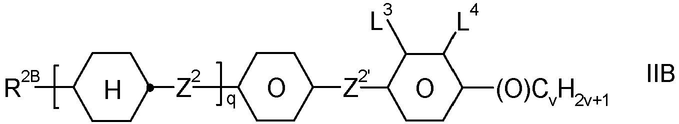 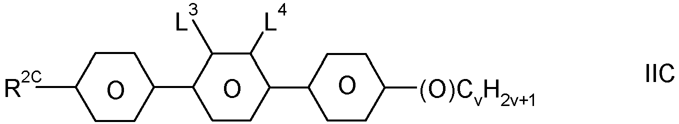 dans lesquelles
R^{2A}, R^{2B} et R^{2C} désignent chacun, indépendamment les uns des autres, H, un radical alkyle ou alcényle ayant jusqu'à 15 atomes de C qui est non substitué, monosubstitué par CN ou CF₃ ou au moins monosubstitué par halogène, où, de plus, un ou plusieurs groupements CH₂ dans ces radicaux peuvent être remplacés par 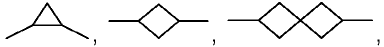 -O-, -S-, -C≡C-, -CF₂O-, -OCF₂-, 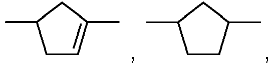 -OC-O- ou -O-CO- de telle sorte que les atomes de O ne soient pas liés directement les uns aux autres, ou un cycle cycloalkyle ayant de 3 à 6 atomes de C,
L¹⁻⁴ désignent chacun, indépendamment les uns des autres, F, Cl, CF₃ ou CHF₂,
Z² et Z^{2'} désignent chacun, indépendamment les uns des autres, une liaison simple, -CH₂CH₂-, -CH=CH-, -C≡C-, -CF₂O-, -OCF₂-, -CH₂O-, -OCH₂-, -C(O)O-, -OC(O)-, -C₂F₄-, -CF=CF- ou -CH=CHCH₂O-,
p désigne 1 ou 2,
q désigne 0 ou 1, et
v désigne 1 à 6.

2. Milieu cristallin liquide selon la revendication 1, le milieu comprenant deux, ou plus, colorants dichroïques, préférablement trois, ou plus, colorants dichroïques.

3. Milieu cristallin liquide selon la revendication 1 ou 2, le milieu cristallin liquide présentant une anisotropie diélectrique Δε dans la plage allant de -5,0 à -1,0 et une anisotropie optique Δn d'au moins 0,15.

4. Milieu cristallin liquide selon l'une ou plusieurs parmi les revendications 1 à 3, dans lequel la concentration totale des un ou plusieurs dopants ioniques de formule I dans le milieu est de 0,10% en poids ou moins, préférablement est de 0,05% en poids ou moins.

5. Milieu cristallin liquide selon l'une ou plusieurs parmi les revendications 1 à 4, dans lequel l'ammonium quaternaire est un tétraalkyl-ammonium, préférablement est le tétrabutylammonium.

6. Milieu cristallin liquide selon l'une ou plusieurs parmi les revendications 1 à 5, dans lequel l'anion B⁻ est le tétrafluoroborate.

7. Milieu cristallin liquide selon l'une ou plusieurs parmi les revendications 1 à 6, le milieu comprenant un ou plusieurs composés de formules N et T-1, 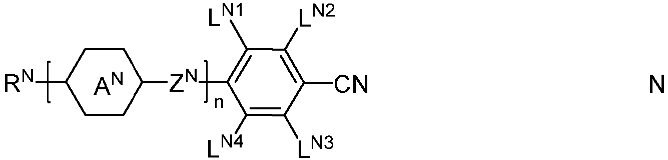 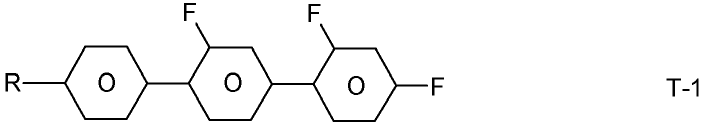 dans lesquelles
R^{N} et R désignent chacun, indépendamment l'un de l'autre, alkyle ou alcényle ayant jusqu'à 12 atomes de C, où un ou plusieurs groupements CH₂ non adjacents peuvent être remplacés par -O- et/ou un cycle cycloalkyle ayant de 3 à 5 atomes de C, et où un ou plusieurs atomes de H peuvent être remplacés par F,
A^{N} à chaque occurrence, de manière identique ou différente, désigne
(a) un radical trans-1,4-cyclohexylène, dans lequel un ou plusieurs groupements CH₂ non adjacents peuvent être remplacés par -O- et/ou -S-,
(b) un radical 1,4-phénylène, dans lequel un ou deux groupements CH peuvent être remplacés par N,
(c) trans-1,4-cyclohexénylène, ou
(d) un radical choisi dans le groupe constitué par 1,4-bicyclo[2.2.2]octylène, naphtalène-2,6-diyle, décahydro-naphtalène-2,6-diyle et 1,2,3,4-tétrahydronaphtalène-2,6-diyle, où les radicaux (a) à (d) peuvent être substitués par un ou deux atomes de fluor,
Z^{N} à chaque occurrence, indépendamment les uns des autres, désigne -CO-O-, -O-CO-, -CH₂O-, -OCH₂-, -CH₂CH₂-, -CH=CH-, -C≡C-, -(CH₂)₄-, -OCF₂-, -CF₂O-, -CF₂CF₂-, ou une liaison simple,
L^{N1}, L^{N2}, L^{N3} et L^{N4} désignent chacun, indépendamment les uns des autres, H, Cl, ou F, et
n vaut 1, 2 ou 3.

8. Milieu cristallin liquide selon l'une ou plusieurs parmi les revendications 1 à 7, le milieu comprenant un ou plusieurs colorants dichroïques choisis dans le groupe constitué par les composés de formules 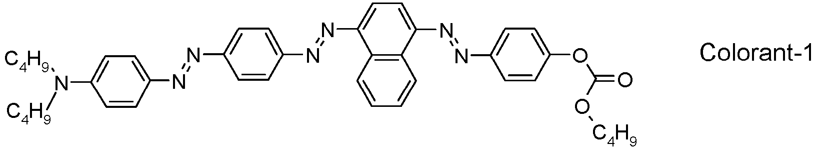 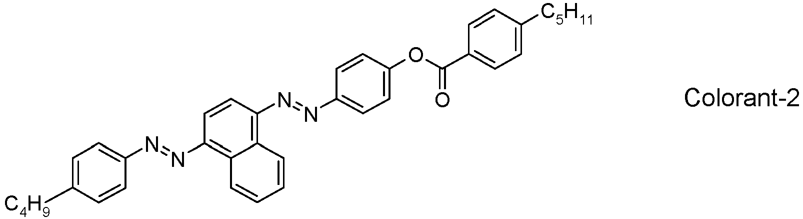 et

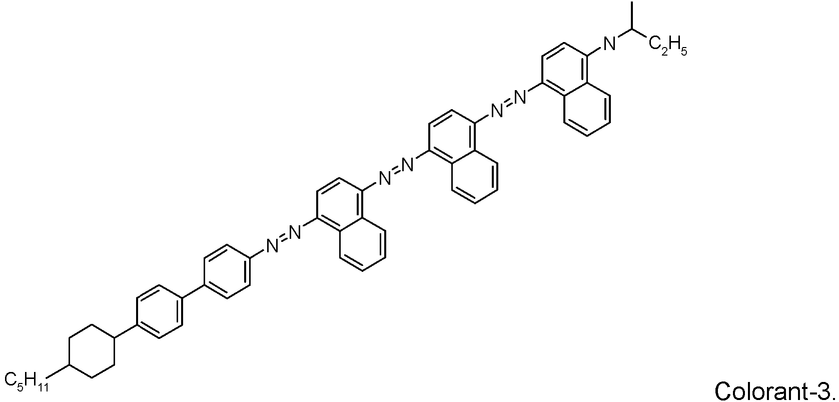

9. Milieu cristallin liquide selon l'une ou plusieurs parmi les revendications 1 à 8, le milieu comprenant un ou plusieurs autres additifs, préférablement un stabilisant et/ou un dopant chiral.

10. Milieu cristallin liquide selon l'une ou plusieurs parmi les revendications 1 à 9, le milieu ne contenant pas de tolanes.

11. Elément de commutation pouvant être utilisé et commuté électriquement entre un état optiquement clair et un état de diffusion, comprenant une couche de commutation qui contient le milieu cristallin liquide selon l'une ou plusieurs parmi les revendications 1 à 10, la couche de commutation étant interposée entre deux substrats transparents opposés qui sont chacun pourvus d'une électrode.

12. Elément de commutation selon la revendication 11, l'élément de commutation pouvant être commuté d'un premier état transparent avec un faible voile à un deuxième état transparent avec un faible voile et une transmission moindre que le premier état transparent à une première tension, et l'élément de commutation pouvant être commuté vers un état opaque avec un voile élevé à une deuxième tension supérieure à la première tension.

13. Utilisation du milieu cristallin liquide selon l'une ou plusieurs parmi les revendications 1 à 10 ou de l'élément de commutation selon la revendication 11 ou 12, dans un dispositif électro-optique, préférablement dans une valve de lumière, un volet lumineux, une fenêtre, un rétroviseur automobile, un toit ouvrant, un dispositif de réalité augmentée ou virtuelle, un dispositif mobile ou un dispositif portable.
